(19) **Europäisches Patentamt**
**European Patent Office**
**Office européen des brevets**

(11) **EP 4 494 423 B1**

(12) **EUROPEAN PATENT SPECIFICATION**

(45) Date of publication and mention
of the grant of the patent:
**24.12.2025 Bulletin 2025/52**

(21) Application number: **23711071.3**

(22) Date of filing: **14.03.2023**

(51) International Patent Classification (IPC):
**H05B 3/84** $^{(2006.01)}$        **C09D 5/32** $^{(2006.01)}$
**C03C 17/00** $^{(2006.01)}$        **C03C 17/36** $^{(2006.01)}$

(52) Cooperative Patent Classification (CPC):
**H05B 3/84; C03C 17/36; C03C 17/3618;
C03C 17/3642; C03C 17/3649; H05B 2203/013;
H05B 2214/02**

(86) International application number:
**PCT/EP2023/056497**

(87) International publication number:
**WO 2023/174945 (21.09.2023 Gazette 2023/38)**

(54) **HEATING DEVICE FOR PREVENTING OR REMOVING A DEPOSITION**

HEIZVORRICHTUNG ZUM VERHINDERN ODER ENTFERNEN EINER ABLAGERUNG

DISPOSITIF DE CHAUFFAGE POUR LA PRÉVENTION OU L'ÉLIMINATION D'UN DÉPÔT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.03.2022 EP 22161807**

(43) Date of publication of application:
**22.01.2025 Bulletin 2025/04**

(73) Proprietor: **ETH Zurich
8092 Zurich (CH)**

(72) Inventors:
• **POULIKAKOS, Dimos
8702 Zollikon (CH)**
• **SCHUTZIUS, Thomas
8057 Zürich (CH)**
• **MITRIDIS, Efstratios
8002 Zürich (CH)**
• **HÄCHLER, Iwan
8303 Bassersdorf (CH)**
• **SCHNOERING, Gabriel
8708 Männedorf (CH)**

(74) Representative: **Piticco, Lorena
Isler & Pedrazzini AG
Giesshübelstrasse 45
Postfach 1772
8027 Zürich (CH)**

(56) References cited:
**CN-A- 112 004 274    CN-A- 114 031 307**

**Description**

TECHNICAL FIELD

The present invention relates to a heating device for preventing or removing a deposition, in particular for de-misting such as de-fogging, anti-misting such as anti-fogging, de-icing or anti-icing, and a method of producing such a heating device.

PRIOR ART

The loss of transparency and visibility upon misting of a surface such as fogging is cumbersome and detrimental to many daily activities, such as those involving windows, windshields, prescription and sports eyewear, optical sensors, displays and recently very noticeably-eyewear during face masks use [1, 2]. Loss of transparency due to fogging is found in many societal and industrial sectors, such as medical, security, energy/photovoltaic and chemistry/food [3]. Surface fogging usually occurs either due to a decrease of temperature, or an increase of the surrounding ambient relative humidity, resulting in the nucleation of numerous microdroplets on a surface [1, 4, 5]. These droplets scatter the incident light and therefore negatively impact transparency and visibility [6-8]. Various attempts have been made and implemented to mitigate this phenomenon while maintaining transparency, also going beyond Joule heating and involving passive, energy-neutral approaches. Temporary solutions such as superhydrophilic surfaces [6] or surfactants modify the surface energy and result in a mostly continuous, very thin layer of the condensate. Consequently, transparency to the human eye can be maintained as the scattering of the incident light is reduced [7-9]. However, the water film is not always uniform due to gravity, drying and contaminants, leading to visibility distortions [10]. Such surfaces are inherently susceptible to contamination from organic pollutants due to their high surface energy, severely limiting the durability of their effectiveness [1, 11]. Typically, longer-lasting passive solutions rely on micro- and nano-patterned superhydrophobic surfaces [12-15], targeting a very early self-removal of the condensed water droplets on the surface, before they can grow to a size where they seriously impact transparency [16, 17]. Due to the low surface energy and texture of these surfaces, the condensed droplets retain high mobility (Cassie-Baxter wetting state [18]) and thus avoid the pinning of water droplets on the surface (Wenzel wetting state [19]). However, when exposed to environments with high relative humidity, sophisticated engineering of the structure-neither readily robust nor easily up-scalable on glass-is imperative, as nanoscale nucleation within the textures eradicates the Cassie-Baxter state, inducing the Wenzel state and destroying its superhydrophobic characteristics [20]. Hence, the aforementioned approaches do not suffice as a long-term, passive solution to fully eliminate fog formation, while maintaining high visibility and novel solutions are highly desired and sought.

A recent alternative pathway to prevent fogging is to exploit the abundant natural energy of the sun, in terms of its selective and efficient absorption, in combination with the thermodynamics of condensate nucleation. Absorbed sunlight can be dissipated as heat (photothermal effect), which in turn reduces the likelihood for nucleation to occur, or-if already covered with fog-quickly dry a surface to recover its transparency. Previous work has focused on the fabrication of sunlight absorbing surfaces out of carbon-based materials [21, 22], plasmonic metallic inclusions [10, 23-25], polymers [26, 27] or multilayer selective absorbers [28]. However, these surfaces are designed to be broadband absorbing [10, 17, 29-33] and they usually have to compromise either transparency or heating, dependent on the targeted predominant effect. Interestingly, nearly half of the solar energy lies in the near-infrared spectrum, which is invisible to the human eye. This physical fact can be taken advantage of, to design a spectrally selective coating, with the property of being transparent in the visible and well absorbing in the infrared range of the solar spectrum, leading to photothermal heating. Few such attempts have indeed been demonstrated. However, these coatings are either narrowband-absorbing [34, 35] or thick [24, 36], in order to achieve a needed temperature increase (several micrometers and rather cumbersome to fabricate), and thus difficult to integrate into existing processes of many abovementioned applications.

From CN 114 031 307 A a photo-thermal anti-fog glass plate and a preparation method thereof are known. The preparation method comprises steps of pretreating a glass substrate, and activating with plasma; coating the glass substrate with a gold nano material and nano titanium dioxide particles; coating the outermost surface with molybdenum disulfide quantum dots; drying the glass substrate, and then coating a layer of silane coupling agent; and, after coating is completed, performing drying.

CN 112 004 274 A discloses a titanium nanosheet/graphene-based heating film which comprises a first transparent insulating layer, an electrode, a second transparent insulating layer and a titanium nanosheet/graphene-based fiber membrane. The first transparent insulating layer covers one surface of the titanium nanosheet/graphene-based fiber membrane. The second transparent insulating layer covers the other surface of the titanium nanosheet/-graphene-based fiber membrane. One end of the electrode is electrically connected with the titanium nanosheet/graphene-based fiber membrane, and the other end of the electrode extends out of the first transparent insulating layer or the second transparent insulating layer.

## SUMMARY OF THE INVENTION

It is an object of the present invention to provide an improved heating device for preventing or removing a deposition, in particular for de-misting, anti-misting, de-icing or anti-icing.

This object is achieved with a heating device according to claim 1. That is, a heating device for preventing or removing a deposition, in particular for de-misting such as de-fogging, anti-misting such as anti-fogging, de-icing or anti-icing, is provided. The heating device extends along an extension direction and comprises at least one photothermal element being configured to exhibit a photothermal effect upon an impingement of electromagnetic radiation. The photothermal element comprises or consists of a photothermal material that comprises a percolation structure. The percolation structure is at its percolation threshold or essentially at its percolation threshold.

Hence, the heating device according to the invention is configured to generate heat upon an impingement of electromagnetic radiation onto the photothermal element. In other words, the photothermal element is configured to perform a photothermal conversion of electromagnetic radiation, wherein it absorbs electromagnetic radiation and dissipates the electromagnetic radiation as heat, whereby the temperature of the heating device is elevated.

As will be explained in greater detail below with regard to the method of producing such a heating device, the photothermal element is preferably produced by chemically growing and/or depositing a material on a substrate, the substrate preferably being a dielectric element, a shifting element, or a carrier element. To this end, the photothermal element is generated by island-growth, wherein in the case of deposition separated islands of the deposited material are formed in a first step, and wherein said separated islands will progressively grow during the further course of deposition. To this end it is particularly preferred that the photothermal element is produced according to the so-called Volmer-Weber growth process that is well-known in the art, see e.g. https://link.springer.com/content/pdf/10.1007%2F978-981-10-6884-3.pdf. In the Volmer-Weber (VW) growth process, at an initial stage of growth small islands nucleate on the substrate, followed by island growth and impingement to form a continuous layer. This growth mode prevails if the bonding strength between layer atoms is stronger than the bonding between layer atoms and substrate atoms. The layer atoms would rather stay close to like atoms than substrate atoms and therefore small islands will form at the beginning of growth. As the islands impinge upon each other, grain boundaries form and therefore the film microstructure is polycrystalline (assuming no epitaxial relation with the substrate is established).

After a specific amount of the electrically conducting material is deposited, the separated islands will touch one another and form the conductive patterns or conductive pathways mentioned earlier, i.e. the percolation structure.

Ultimately, a randomly distributed photothermal material is produced, and wherein said photothermal material forms a random conductive pattern or random conductive pathway. Since the photothermal material is preferably produced on a substrate, the photothermal material is preferably randomly distributed on said substrate such that it forms a completely random conductive pattern or conductive pathway on the substrate. In other words, the photothermal element can be said to be randomly arranged on the substrate.

The percolation threshold is where the photothermal material turns abruptly from being an electrical insulator to an electrical conductor as the conductive patterns or conductive pathways are formed. In other words, percolation can be said to start at the percolation threshold, and wherein percolation exists when conductive patterns or conductive pathways are formed such that electrons or a current can flow. The presence or absence of such conductive patterns or conductive pathways can be investigated by measuring the electrical conductivity of the photothermal material or by electron microscopy, or scanning electron microscopy, for instance, wherein pathways connectivity are visually observed and quantified.

The photothermal element preferably exhibits an electrical resistance. The electrical resistance, when electron flow exists, is highest when percolation starts, as it is associated with the most randomness of the percolation structure. At the percolation threshold, the dielectric function of the photothermal structure diverges and exhibits signatures in both the DC (direct current, i.e. low frequencies) conductivity and at AC (alternating current, i.e. optical/high) frequencies. At DC, the signature is a power-law decrease of the electrical resistance, starting from high (open circuit) to low as the photothermal structure becomes more and more conductive with increasing thickness parameter of the photothermal structure.

Herein, this drop from high resistance to low resistance is understood as a power-law decrease. Hence, the electrical resistance of the photothermal structure being at the percolation threshold or essentially at the percolation threshold drops off as a power-law.

At AC, i.e. in the optical regime, the percolation structure being essentially at the percolation threshold or, if applicable, at its percolation threshold is furthermore characterized by a broadband (i.e. nearly wavelength-independent, Kramers-Kronig related) absorption spectrum; this broadband absorption is obtained for wavelengths above a certain wavelength, which is dependent on the photothermal material, and which we shall term herein the "minimum wavelength of the range of interest". The broadband absorption takes place between the minimum wavelength of the range of interest and up to a "maximum wavelength of the range of interest", for instance 2500 nm for solar energy applications. The percolation structure being essentially at the percolation threshold is understood as having a total absorption in the range of interest of at least 60 % or more, preferably of at least 70 % or more of a maximum total broadband absorption in the same range of interest.

For example, the minimum wavelength of the range of interest is around 800 nm for a photothermal material essentially at the percolation threshold made of gold and fabricated on a dielectric element of titanium dioxide. Alternatively, the minimum wavelength of the range of interest is around 800 nm for a photothermal material essentially at the percolation threshold made of copper and fabricated on a dielectric element of titanium dioxide, and 800 nm for a photothermal material essentially at the percolation threshold made of silver and fabricated on a dielectric element of titanium dioxide.

Depending on the photothermal material, the absorption behavior of a percolating structure at the percolation threshold or essentially at the percolation threshold can be the same.

Unless stated otherwise, the "total absorption" or "absorption" is preferably understood herein as the "mean absorption", i.e. an absorption "on average" without taking into account any weighing factors such as sunlight, for instance.

As mentioned earlier, the percolation structure being at its percolation threshold is preferably determined by measuring the electrical resistance of the photothermal material, and wherein the electrical resistance exhibits a power-law decrease. The electrical resistance of the photothermal material can be measured with a four-point probe measurement, such as a Jandel Universal Probe Station or any other probe station. For instance, for a photothermal material made of gold and fabricated on a dielectric element of titanium dioxide, the electrical resistance decreases from being open circuit (i.e. no conductive pathways) for a thickness parameter of the photothermal material (see below) of 4.25 nm to 400 Ohms for a thickness parameter of 5 nm and further down to 107 Ohms for a thickness parameter of 5.75 nm. At a larger thickness parameter, the electrical resistance further "flattens out"; for instance, for a 15 nm thickness parameter, the electrical resistance reaches a value of 5 Ohms, and a value of 2 Ohms at a thickness parameter of 30 nm.

In addition to the power-law decrease of the electrical resistance as described above, the percolation structure being essentially at its percolation threshold is preferably determined by measuring the absorption spectrum of the photothermal material, and wherein the total absorption in the range of interest is at least 60 % or more, preferably at least 70 % or more of the maximum total broadband absorption in the same range of interest, as described above.

The absorption spectrum of the photothermal material can be measured with a UV-VIS spectrometer (such as a Jasco, V770 with an ILN-925 integrating sphere) or using an FTIR (such as with a Nicolet Thermo Fisher Scientific).

For example, a percolation structure essentially at the percolation threshold with the photothermal material being gold on a dielectric element made of titanium dioxide can exhibit an absorption, i.e. a mean absorption of at least 17% of the incident electromagnetic radiation (i.e. the total absorption in the range of interest is at least 60 % or more of the maximum total broadband absorption in the same range of interest) in the region of 800 nm (minimum wavelength of the range of interest) up to a maximum wavelength of the range of interest, for instance 2500 nm. As another example, a percolation structure essentially at the percolation threshold with the photothermal material being copper on a dielectric element made of titanium dioxide can exhibit a mean absorption of at least 14 % of the incident electromagnetic radiation in the region of 800 nm (minimum wavelength of the range of interest) up to a maximum wavelength of the range of interest, for instance 2500 nm (i.e. the total absorption in the range of interest is at least 60 % or more of the maximum total broadband absorption in the same range of interest), a percolation structure essentially at the percolation threshold with the photothermal material being silver on a dielectric element made of titanium dioxide can exhibit a mean absorption of at least 18 % in the region of 800 nm (minimum wavelength of the range of interest) up to a maximum wavelength of the range of interest, for instance 2500 nm (i.e. the total absorption in the range of interest is at least 60 % or more of the maximum total broadband absorption in the same range of interest).

Depending on the photothermal material, for instance for a photothermal material made of gold on a dielectric element made of titanium dioxide, the absorption behavior of a percolating structure at the percolation threshold or essentially at the percolation threshold is the same.

Additionally or alternatively, the expression "essentially at the percolation threshold" means that the percolation structure of the photothermal material preferably configures the photothermal material to exhibit an absorption, in particular a total absorption, of 10% or more such as 15 % or more, more preferably of 25% or more, and particularly preferably of 35 % or more of incident electromagnetic radiation having a wavelength in the region of 700 nanometer to 2.5 micrometer, respectively.

For example, a percolation structure of the photothermal material essentially at the percolation threshold and made of gold on a dielectric element made of titanium dioxide configures the photothermal material to exhibit a mean absorption of more than 17 % of the incident electromagnetic radiation in the region of 700 nm to 2.5 micrometer (i.e. the total absorption in the range of interest, here in the region of 700 nm to 2.5 micrometer, is at least 60 % or more of the maximum total broadband absorption in the same range of interest, here in the region of 700 nm to 2.5 micrometer). As another example, a percolation structure of the photothermal material essentially at the percolation threshold and made of copper on a dielectric element made of titanium dioxide configures the photothermal material to exhibit a mean absorption of more than 14 % of the incident electromagnetic radiation in the region of 700 nm to 2.5 micrometer (i.e. the total absorption in the range of interest, here in the region of 700 nm to 2.5 micrometer, is at least 60 % or more of the maximum total broadband absorption in the same range of interest, here in the region of 700 nm to 2.5 micrometer). A percolation structure of the photothermal material essentially at the percolation threshold and made of aluminium on a dielectric element made of titanium dioxide configures the photothermal material to exhibit a mean absorption of more than 20 % of the incident electromagnetic radiation in the region of 700 nm to 2.5 micrometer (i.e. the total absorption in the range of interest, here in the region of 700 nm to 2.5 micrometer, is at least 60 % or more of the maximum total broadband absorption in the same range of interest, here in the region of 700 nm to 2.5 micrometer). The absorption spectrum of the photothermal material was measured with a UV-VIS spectrometer as mentioned earlier.

Additionally or alternatively, the expression "essentially at the percolation threshold" means that the percolation structure of the photothermal material is within 40% such as within 30% or within 20 % such as within 10 % or within 5 % of a thickness parameter being associated with the photothermal material exhibiting a maximum total broadband absorption between the minimum wavelength of the range of interest and up to a maximum wavelength of the range of interest, for instance 2500 nm for solar energy applications. The thickness parameter is fed into a deposition apparatus that generates the photothermal element by deposition, see further below. To this end the deposition apparatus corresponds to an Evatec BAK501 LL (thermal evaporator) or a Von Ardenne CS 320C (sputtering). The actual thickness of the deposited photothermal material might vary slightly from the tool-specific thickness parameter.

For instance, if the percolation threshold of the photothermal material is 5 nm in thickness parameters, the photothermal material being essentially at the percolation threshold could be between 3.5 and 6.5 nm, preferably between 4 nm and 6 nm, for instance.

In particular, if the percolation threshold of the photothermal material made of gold on a dielectric element of titanium dioxide is 4.75 nm in thickness parameter, the photothermal material being essentially at the percolation threshold could be between 2.9 and 6.7 nm in thickness parameter (i.e. the percolation structure is within 40% of the thickness parameter being associated with the photothermal material exhibiting the maximum total broadband absorption in the range of interest), preferably between 3.3 and 6.2 nm thickness parameter (i.e. the percolation structure is within 30% of the thickness parameter being associated with the photothermal material exhibiting the maximum total broadband absorption in the range of interest). As another example, if the percolation threshold of the photothermal material made of silver on a dielectric element of titanium dioxide is 7 nm in thickness parameter, the photothermal material being essentially at the percolation threshold could be between 4.2 and 9.8 nm, preferably between 4.9 and 9.1 nm thickness parameter. As another example, if the percolation threshold of the photothermal material made of copper on a dielectric element of titanium dioxide is 5 nm in thickness parameter, the photothermal material being essentially at the percolation threshold could be between 3 and 7 nm, preferably between 3.5 and 6.5 nm thickness parameter. As another example, if the percolation threshold of the photothermal material made of aluminium on a dielectric element of titanium dioxide is 5 nm in thickness parameter, the photothermal material being essentially at the percolation threshold could be between 3 and 7 nm, preferably between 3.5 and 6.5 nm thickness parameter. The thickness parameter is fed into a deposition apparatus that generates the photothermal element by deposition. To this end the deposition apparatus corresponds to an Evatec BAK501 LL (thermal evaporator) or a Von Ardenne CS 320C (sputtering). The actual thickness of the deposited photothermal material might vary slightly from the tool-specific thickness parameter.

The photothermal material is preferably optically transparent. The photothermal material particularly preferably is optically transparent for electromagnetic radiation in the visible region of the electromagnetic spectrum.

Additionally or alternatively, the photothermal material is preferably configured to absorb impinging electromagnetic radiation. The photothermal material is particularly preferably configured to absorb impinging electromagnetic radiation in the near infrared region of the electromagnetic spectrum.

The visible region (VIS) of the electromagnetic spectrum is understood as comprising electromagnetic radiation having a wavelength in the region of 300 nanometer to 720 nanometer. In other words, the photothermal material preferably exhibits a broadband absorption in the NIR and not the VIS.

The near infrared region (NIR) of the electromagnetic spectrum is understood as comprising electromagnetic radiation having a wavelength in the region of 720 nanometer to 2.5 micrometer.

The photothermal material is preferably furthermore configured to absorb 10 % or more such as 20% or more or 30 % or more, preferably 35 % or more of the impinging electromagnetic radiation in the near infrared region.

The photothermal material preferably furthermore has a transmissivity in the visible region of the electromagnetic spectrum of 40% or more such as 50% or more or 60 % or more, preferably of 65 % or more.

Hence, the photothermal material is particularly preferably absorptive in the NIR while being visibly transparent. In fact, the photothermal material particularly preferably exhibits a strong broadband absorption in the NIR while being transparent in VIS.

Furthermore, it should be noted that the transmissivity of the photothermal material is independent or almost independent of an angle of incidence under which the electromagnetic radiation impinges on the photothermal element because of the random distribution of the photothermal material.

Depending on the particular field of application of the heating device, the heating device is preferably designed for a pronounced absorptivity and transmissivity in a certain wavelength region or range of interest. For instance, in the event that the heating device is to be used with solar radiation, it is particularly preferred that the photothermal element is configured to strongly absorb electromagnetic radiation having a wavelength in the region of 720 nm to 1380 nm so as to match the solar radiation, and to be furthermore configured to be optically transparent for electromagnetic radiation having a wavelength in the region of 450 nm to 650 nm. In this case the photothermal element exhibits a peak transparency at the wavelengths of the solar radiation.

That is to say, the photothermal element can be electrically conducting, in which case the percolation structure of the photothermal material is at or above the percolation threshold. Being above the percolation threshold means that the photothermal material is essentially at the percolation threshold as defined earlier, however at the higher values of the percolation threshold.

That is, if the percolation threshold of the photothermal material is 5, for instance, the "percolation structure of the photothermal material being above the percolation threshold" is larger than 5, for instance 5.5.

However, it is likewise conceivable that the photothermal element is electrically insulating, in which case the percolation structure of the photothermal material is below the percolation threshold. Being below the percolation threshold means that the photothermal material is essentially at the percolation threshold as defined earlier, however at the lower values of the percolation threshold. That is, if the percolation threshold of the photothermal material is 5, for instance, the "percolation structure of the photothermal material being below the percolation threshold" is smaller than 5, for instance 4.5.

As mentioned earlier, the percolation is associated with the existence of conductive paths or conductive patterns path that allow the electrical energy to be transported. Electromagnetic radiation of certain wavelengths such as electromagnetic radiation in the NIR is associated with a propagating electric oscillation in the order of a few hundreds of nanometers. Such electromagnetic radiation therefore is not "localized" as precisely as an electron would be in the photothermal material. As such, there can be cases where the photothermal element is not electrically conducting, while it still allows an oscillating field, preferably a high frequency oscillating field such as a NIR field, to propagate. Consequently, the heating device according to the invention is capable of generating heat even when the percolation structure is not at the percolation threshold but essentially at the percolation threshold, see above.

The heating device can furthermore comprise at least one electrical element that is configured to induce electrical current into the photothermal element, whereby heat is generated by the photothermal element.

The heating device comprising the electrical element is preferably configured to generate heat by resistive heating, also known as Joule heating. That is to say, the electrical current being induced into the photothermal element is dissipated as heat within the percolation structure of the photothermal material.

The electrical element preferably is an electrode. For instance, edges of the percolation structure could be wired.

In the absence of an electrical element, the heating device can be said to be configured for wireless operation. That is, the heating device is configured to produce heat by the photothermal material only.

In the presence of an electrical element, the heating device can be said to be configured for wired operation. That is, the heating device is configured to produce heat by the photothermal material as well as by the action of the electrical element.

The electrical element provides an additional production of heat for instance under circumstances where the heat production by the photothermal material is insufficient, such as under bad weather conditions or in the absence of light for instance at night. In this case, the electrical element allows the heating device to preserve its deposition removing functionalities.

To this end it is particularly preferred that the heating device comprises at least one electrical element in the event that the photothermal material is at the percolation threshold or above the percolation threshold as explained above.

That is to say, the heating device being configured for wired operation preferably comprises the photothermal material at the percolation threshold or above the percolation threshold, i.e. said photothermal material preferably corresponds to an electrical conductor. That is to say, when being configured for wired operation the percolation structure being essentially at the percolation threshold preferably is above 40%, more preferably above 30%, more preferably above 20 %, even more preferably above 10 %, and particularly preferably above 5 % of a thickness parameter of the percolation threshold being associated with the photothermal material.

The heating device configured for wireless operation preferably exhibits a strong broadband absorption, wherein the photothermal material is preferably essentially at the percolation threshold and has a random arrangement, wherein a maximal absorption is essentially at the percolation threshold. That is to say, when being configured for wireless operation the percolation structure being essentially at the percolation threshold preferably is above or below 40%, more preferably above or below 30%, more preferably above or below 20 % of a thickness parameter of the percolation threshold being associated with the photothermal material.

The photothermal element preferably has a thickness in the range of 1 nanometer to 50 nanometer, more preferably in the range of 1 nanometer to 10 nanometer, and particularly preferably in the range of 4 nanometer to 8 nanometer such as 5 nanometer with respect to the extension direction.

Additionally or alternatively, the heating device preferably has a thickness in the range of 1 nanometer to 100 nanometer, more preferably in the range of 1 nanometer to 50 nanometer, and particularly preferably in the range of 1 nanometer to 20 nanometer such as 10 nanometer with respect to the extension direction. That is, an overall thickness of the heating device is preferably in the range of 1 nanometer to 100 nanometer, more preferably in the range of 1 nanometer to 50 nanometer, and particularly preferably in the range of 1 nanometer to 20 nanometer such as 10 nanometer with respect to the extension direction. However, larger thicknesses of the heating device are likewise conceivable and depend, for instance, on a thickness of the substrate such as the carrier element being used.

Additionally or alternatively, the photothermal element and/or the heating device preferably has in each case a thickness with respect to the extension direction being much than a wavelength in the visible and near-infrared of the impinging electromagnetic radiation.

For instance, a wavelength in the visible region of the electromagnetic spectrum is 450 nanometer. Consequently, a thickness of the photothermal element or the heating device with respect to the extension direction is smaller than 450 nanometer.

The heating device is preferably bendable. Additionally or alternatively, the heating device preferably comprises a reciprocal of a curvature, when bending, is larger than 1 micrometer. Such a reciprocal of curvature is associated with a bending radius or curvature, wherein a bending of the heating device does not affect the optical properties of the heating device, as the scale of the random arrangement of the heating device is much smaller than the bending radius of curvature.

The photothermal element preferably is a layer. It is furthermore preferred that said layer extends along a transverse direction running perpendicularly to the extension direction.

The photothermal material is electrically conducting. Additionally or alternatively, the photothermal material preferably comprises or consists of at least one metal. For instance, the photothermal material can comprise or consist of an elementary metal such as gold, silver, aluminium, copper, platinum or tungsten, or titanium. However, it is likewise conceivable that the photothermal material comprises or consists of a metal alloy such as PtAu, CuZn, CuAg, CuSn, AlCu, AgAlCu, or AgCu.

To this end it is particularly preferred that the photothermal material corresponds to a metallic layer that preferably furthermore consists of a single constituent. In view of the preferred thicknesses of the photothermal element that have been outlined above it can be said that the photothermal material particularly preferably corresponds to a thin metallic layer. However, it is likewise preferred that the photothermal material is a semiconductor or a heavily doped semiconductor such as InAsSb, InAs, Ge, Si, GeSn. Semiconductors are preferably used in the case that the heating device is targeted to the NIR.

Additionally or alternatively, the photothermal material can comprise or consist of optically transmissive and electrically conducting oxides, so-called transparent conductive oxides (TCO), such as indium tin oxide (ITO). However, other transparent conducting oxides as they are known in the art are likewise conceivable such as antimony doped tin oxide (ATO), indium tin oxide (ITO), indium zinc oxides (IZO), cadmium oxide (CdO), fluorine doped tin oxide (FTO, SnO2:F), or aluminium doped zinc oxide (AZO, ZnO: Al). Additionally or alternatively, the photothermal material can comprise or consist of transition metal nitrides, and in particular Titanium nitride (TiN).

The photothermal material is preferably provided in accordance with a desired end-user application of the heating device. For instance, gold and copper are particularly suited for NIR absorption, while silver and aluminium perform well in the VIS.

The heating device preferably further comprises at least one dielectric element, wherein said dielectric element is arranged before or after the photothermal element with respect to the extension direction. That is, it is preferred that the heating device comprises at least one electrical insulator in the form of a dielectric element.

The dielectric element and the photothermal element can be at least partially or entirely in surface contact with one another. That is, the dielectric element is preferably arranged at least partially and particularly preferably entirely on a surface of the photothermal element. In other words, the dielectric element and the photothermal element are preferably in surface contact or in immediate contact with one another.

The dielectric element is preferably optically transparent. Additionally or alternatively, the dielectric element preferably comprises or consists of at least one metal oxide such as titanium dioxide ($TiO_2$), silicon dioxide ($SiO_2$), tantalum pentoxide ($Ta_2O_5$), or a metal nitride or carbide such as silicon carbide (SiC) or titanium nitride (TiN), particularly preferably in the form of a continuous film.

A thickness of the dielectric element with respect to the extension direction preferably is 1 nanometer or more, for instance between 1 nanometer to 1 centimeter. More preferably, the thickness of the dielectric element is in the range of 1 nanometer to 5 nanometer such as in the range of 1 nanometer to 3 nanometer.

It is furthermore preferred that the dielectric element is at least partially functionalized. In fact, it is preferred that the dielectric element is functionalized in a region of contact with the photothermal element such as on a surface being in surface contact with the photothermal element, see above. Said functionalization is preferably configured to affect the formation of the percolation structure on the dielectric element. In fact, the functionalization preferably affects a growth of the percolation structure of the photothermal material such that the percolation structure being at or essentially at the percolation threshold can be fabricated with a thinner or thicker thickness parameter. The dielectric element is preferably functionalized so that its wettability is altered. For example, the dielectric element can be subjected to an ozone or oxygen plasma treatment, whereby oxygen-groups are attached to the surface of the dielectric element. As another example, the dielectric element could be functionalized with a single molecular layer. Other functionalizations are of course likewise conceivable and well-known to the skilled person.

The heating device preferably comprises at least two dielectric elements, and wherein the photothermal element is particularly preferably arranged between said two dielectric elements with respect to the extension direction. In other words, the photothermal element is preferably sandwiched between two dielectric elements. Said at least two dielectric elements can be the same or different from one another. For instance, both dielectric elements could be titanium dioxide or silicon dioxide. Alternatively, one of the dielectric materials could be titanium dioxide and the other could be silicon dioxide. It should be noted that many other dielectric materials are likewise conceivable.

The one or more dielectric elements are preferably layers, and wherein said layer or layers preferably extend along the transverse direction running perpendicularly to the extension direction.

That is to say, the heating device preferably corresponds to a layered structure comprising one or more dielectric layers and at least one photothermal layer that are arranged above one another with respect to the extension direction.

The heating device can comprise two or more photothermal elements, preferably two or more photothermal layers that are arranged above one another with respect to the extension direction. the two or more photothermal elements are preferably furthermore arranged at a distance from one another with respect to the extension direction, e.g. a dielectric element could be arranged inbetween.

The heating device preferably further comprises at least one shifting element, wherein the shifting element is configured to shift an absorption capability and/or a transmission capability of the heating device with respect to the impinging electromagnetic radiation towards shorter or longer wavelengths of the impinging electromagnetic radiation.

A shift of the absorption capability of the heating device towards longer (shorter) wavelengths means that the heating device is configured to absorb electromagnetic radiation of longer (shorter) wavelengths as compared to the case where the device lacks the shifting element.

Likewise, a shift of the transmission capability of the heating device towards longer (shorter) wavelengths means that the heating device is configured to transmit electromagnetic radiation of longer (shorter) wavelengths as compared to the case where the heating device lacks the shifting element.

The shifting element particularly preferably results in a shift of a maximal mean absorptivity or the maximum total absorption in the range of interest and/or a maximal mean transmissivity towards longer or shorter wavelengths.

Consequently, the shifting element serves the purpose of tuning the absorption and/or transmittance of the heating device to a desired wavelength region of the electromagnetic spectrum. In fact, the shifting element is configured to tune the optical response (transmission and absorption) of the percolation structure of the photothermal material. For instance, if the heating device is to be used with sunlight, it is preferred to shift the absorption capability of the heating device, in particular its maximal mean absorptivity, to a peak wavelength region of solar radiation. Furthermore, if the heating device shall be visibly transparent, it is preferred to shift the transmission capability of the heating device, in particular its maximal mean transmissivity, to a peak wavelength of the visible spectrum. In this case, the shifting element can be said to align a transparency peak of the heating device with the peak wavelength of the solar radiation.

The shifting element is preferably arranged before and/or after the photothermal element with respect to the extension direction.

For example, a percolation structure essentially at the percolation threshold with the photothermal material being gold on a dielectric element made of titanium dioxide and a shifting element made of titanium dioxide on the photothermal material and at least partially or entirely in surface contact with the photothermal material can exhibit a mean absorption of at least 19% of the incident electromagnetic radiation in the region of 1000 nm (shifted minimum wavelength of the range of interest) up to a maximum wavelength of the range of interest, for instance 2500 nm for solar energy applications. This indicates that the shifting element shifts the minimum wavelength of the range of interest, i.e. the presence of a shifting element results in a shifted minimum wavelength of the range of interest, and wherein the total absorption is obtained for wavelengths above said shifted minimum wavelength of the range of interest. The shifting element preferably also increases a maximum total absorption in the range of interest.

As another example, a percolation structure essentially at the percolation threshold with the photothermal material being copper on a dielectric element made of titanium dioxide and a shifting element made of titanium dioxide on the photothermal material and at least partially or entirely in surface contact with the photothermal material can exhibit a mean absorption of at least 15% of the incident electromagnetic radiation in the region of 820 nm (shifted minimum wavelength of the range of interest) up to a maximum wavelength of the range of interest, for instance 2500 nm for solar energy applications. As another example, a percolation structure essentially at the percolation threshold with the photothermal material being silver on a dielectric element made of titanium dioxide and a shifting element made of titanium dioxide on the photothermal material and at least partially or entirely in surface contact with the photothermal material can exhibit a mean absorption of at least 17% of the incident electromagnetic radiation in the region of 850 nm (shifted minimum wavelength of the range of interest) up to a maximum wavelength of the range of interest, for instance 2500 nm for solar energy applications.

The heating device is preferably furthermore configured to absorb 15% or more, 25 % or more, preferably 35 % or more of the impinging electromagnetic radiation in the near infrared region. To this end it is preferred that the heating device comprises, for instance, one photothermal element being arranged between two dielectric elements with respect to the extension direction, and wherein the dielectric elements at the same time correspond to shifting elements, see also below. Said "dielectric shifting element" can be titanium dioxide, for example.

Moreover, the shifting element preferably is optically transparent and/or dielectric.

The shifting element and the photothermal element preferably are in each case associated with a refractive index. The refractive index of the shifting element is preferably larger than the refractive index of air and/or than the refractive index of the photothermal element.

Hence, the refractive index of the shifting element preferably differs from the refractive index of the photothermal element or from the surroundings, which leads to a change in the Fresnel coefficients and hence affects the optical properties, i.e. the absorption and transmission behaviour, of the heating device.

The shifting element particularly preferably corresponds to the dielectric element mentioned earlier. That is, the shifting element and the dielectric element could be provided by means of a single element. However, it is likewise conceivable that the shifting element and the dielectric element are distinct elements. For instance, in the latter case a conceivable heating device could comprise, in this sequence when seen along the extension direction, a dielectric element such as a titanium dioxide layer or a layer consisting of a high-refractive index dielectric, a shifting element such as a semiconductor layer being made of Si, Ge or GaP, for example, the photothermal element such as a gold layer comprising a percolation structure at the percolation threshold, another shifting element such as a semiconductor layer and a dielectric element such as a titanium dioxide layer. In this case the two dielectric elements can be said to provide the top and bottom sides of the heating device.

The heating device preferably further comprises at least one antireflection element that is configured and arranged to reflect electromagnetic radiation towards the photothermal element.

The antireflection element preferably comprises two or more layers that are arranged above one another, i.e. stacked, with respect to the extension direction. Moreover, these layers preferably have a refractive index that progressively increases with respect to the extension direction.

Additionally, the antireflection element preferably is optically transparent and/or dielectric.

The antireflection element is preferably arranged before and/or after the photothermal element with respect to the extension direction. To this end it is particularly preferred that the antireflection element provides a top side and/or a bottom side of the heating device. Hence, if the heating device comprises one or more dielectric elements or shifting elements mentioned earlier, it is preferred that the antireflection element(s) are arranged closer to an outside of the heating device than the dielectric element(s) or shifting element(s), respectively.

The heating device preferably further comprises at least one carrier element. The photothermal element is preferably arranged on or is at least partially embedded in said carrier element. In the event that the heating device comprises one or more of the further components described previously, e.g. the dielectric element, the shifting element, the antireflection element, it is preferred that these one or more further components are arranged on or at least partially embedded in the carrier element as well.

The carrier element is preferably bendable and/or flexible and/or deformable and/or foldable.

Moreover, the carrier element can be optically transparent. Additionally or alternatively, the carrier element can comprises or consists of a solid, preferably an amorphous solid such as glass, and/or one or more plastics and/or one or more polymers. For instance, the carrier element could comprise or consist of optically transparent and/or elastomeric plastics or polymers.

Moreover, the carrier element preferably is a layer that is preferably furthermore configured to be suspended, i.e. the carrier element preferably is a membrane.

The carrier element can serve the purpose of applying or attaching the heating device to an end-user device such as glasses that shall be prevented from misting or icing.

However, it should be noted that the application or attachment of the heating device to the end-user device does not necessarily require the carrier element. Instead, a direct application of the heating device such as directly coating glasses with the photothermal element are likewise conceivable. The provision of the carrier element offers the possibility of retrospectively attaching the heating device onto an already existing end-user device such as glasses.

A method of producing a heating device for preventing or removing a deposition, in particular for de-misting such as defogging, anti-misting such as antifogging, de-icing or anti-icing according to claim 12 is provided. The heating device extends along an extension direction.

The method comprises the step of providing at least one photothermal element being configured to exhibit a photothermal effect upon an impingement of electromagnetic radiation. The photothermal element comprises or consists of a photothermal material that comprises a percolation structure. The percolation structure is at its percolation threshold or essentially at its percolation threshold.

The heating device preferably corresponds to the heating device as described above. As such, any explanations made with regard to the heating device preferably likewise apply to the method of producing the heating device and vice versa.

The photothermal element is preferably generated by deposition, preferably by thin-film deposition and/or vapour deposition. In fact, the photothermal element is particularly preferably produced by chemical vapour deposition and/or physical vapour deposition such as sputter deposition, thermal evaporation, molecular-beam epitaxy, atomic layer deposition or pulsed laser deposition. Alternatively, the photothermal element is generated by chemical growth.

The photothermal element is generated by island-growth, wherein separated islands are initially formed by the deposition and/or chemical growth, and wherein said separated islands progressively grow during the further course of deposition or growth until the percolation structure at the percolation threshold or essentially at the percolation threshold is generated.

To this end it is particularly preferred that the photothermal element is produced according to the so-called Volmer-Weber growth process that is well-known in the art. In other words, the photothermal element is preferably generated by a stochastic nucleation and growth process.

The photothermal element is preferably generated by depositing at a deposition rate in the range of 0.05 nm/s to 1 nm/s and/or during a deposition time in the range of 1 s to 150 s.

The photothermal element is particularly preferably generated by depositing at least one material such as at least one electrically conducting material or at least one semiconductor. A preferred electrically conducting material is an electrically conducting metal compound. As mentioned earlier, the metal compound could be an elementary metal or a metal alloy.

In a preferred example, a sputter deposition (with Ardenne CS 320 C) is used in a first step to form a dielectric element. For instance, a ~3 nm layer of titanium dioxide ($TiO_2$) with the following parameters could be generated: 600 W RF field, 6 μbar pressure, 71 s deposition time. Thereafter, the photothermal element can be generated by thermally evaporate (Evatec BAK501 LL) for instance gold (Au) with a deposition rate of 0.05 nm/s until an estimated optimal layer thickness of 4.75 nm is reached. Finally, the percolating Au layer can be covered with another dielectric element such as another layer of $TiO_2$, deposited under the same conditions as mentioned above.

To this end it is particularly preferred that the photothermal element is generated by directly depositing the electrically conducting material on a substrate such as the dielectric element, the shifting element, the carrier element, or the end-user device mentioned earlier.

Hence, counteracting surface fogging to maintain surface transparency is significant to a variety of applications including eyewear, windows, or displays. Energy-neutral, passive approaches predominately rely on engineering the surface wettability to render superhydrophilic or superhydrophobic coatings, but suffer from non-uniformity, contaminant deposition and lack of robustness, all significantly degrading their performance. Here, guided by nucleation thermodynamics, a transparent, sunlight-activated, photothermal heating device to completely inhibit fogging has been employed. In particular, the present invention provides a rationally engineered photothermal heating device that can be only a few nanometers in thickness, and that has a strong broadband absorption in the near-infrared, while maintaining a high transparency in the visible regime, making a significant step forward, towards implementable transparent photothermal surfaces to combat the removal of depositions such as fogging. Unlike previous work, the heating device according to the invention strongly absorbs wavelengths which are invisible to the human eye, while it retains transparency in the visible range. The selective absorption of the near-infrared spectrum can be achieved through a single, readily fabricated metallic layer having a thickness in the nanometer range at or essentially at the percolation threshold [37-40], and that is optionally embedded in a dielectric host that can align the transparency peak of the photothermal heating device with the peak wavelength of the solar radiation (occurring in the visible range). Due to its facile design concept and its optical selectivity, the heating device can be ultrathin (~10 nm) and easily integrates over large areas, onto existing structures and beneath additional standard coatings usually applied on transparent materials. This allows it to be protected from outdoor influences such as chemicals, scratches or oxidation, rendering it long-lasting. The thinness enables fabrication even on compliant substrates, with robust behavior against possible damage from multiple bending, with no loss of performance. The absorption and dissipation of the near-infrared solar light to prevent fogging (antifogging), as well as to effect fast recovery from fogged conditions (defogging), also under non-ideal, real-world outdoor conditions has been exploited. The heating device can be easily fabricated over large areas by standard methods (sputtering and thermal evaporation) and with minimal material requirements underpinning its potential for direct use in applications.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1a-1d     show schematic sectional views of heating devices according to the invention;

Fig. 2     shows a scanning electron micrograph of a 15 nm thick gold layer;

Fig. 3a-3d     show graphs depicting the absorptivity (figure 3a), the reflectivity (figure 3b), and the transmissivity (figure 3c) of gold layers of different thickness;

Fig. 4a-4c     show a schematics of a heating device (Figure 4a), a graph depicting its maximal mean near-infrared absorptivity (Figure 4b), and a graph depicting its transmissivity and absorptivity (Figure 4c);

Fig. 5a     shows a schematics of an experimental set-up for simulating a solar illumination of the heating device;

Fig. 5b-5c     show graphs depicting the photothermal performance of the heating device upon a solar illumination with the experimental set-up according to figure 5a;

Fig. 6a-6c     show graphs depicting the antifogging performance of the heating device, wherein figure 6a depicts plots of the temperature and overpressure of the heating device over time, figure 6b depicts a recorded image sequence of a control sample and the heating device according to the invention over time, and figure 6c depicts the fog fraction of the control sample and the heating device according to the invention;

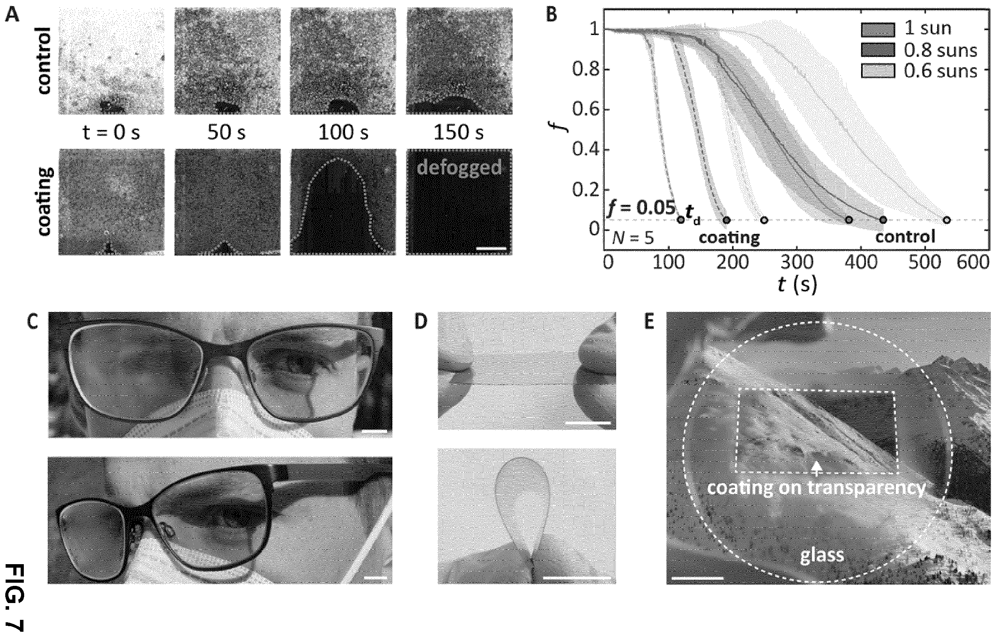

Fig. 7a-7e     show graphs and images depicting the defogging performance of the heating device and real-word feasibility, wherein figure 7a is a qualitative image sequence under 1 sun illumination of a control sample and the heating device according to the invention, figure 7b plots the evolution of the fog fraction over time on the control sample and the heating device according to the invention, figure 7c depicts images of outdoor tests at different places and under various levels of solar irradiance on glasses that lack a heating device according to the invention and that comprise the heating device according to the invention, figure 7d depicts bending tests of a heating device according to the invention being arranged on an overhead projector transparency, figure 7e depicts an image of an outdoor test of the heating device according to the invention being arranged on the overhead projector transparency according to figure 7d;

Fig. 8     shows a graph depicting the nucleation rate as a function of a temperature of a sample temperature;

Fig. 9     shows graph depicting the optical properties of a heating device according to the invention comprising photothermal elements of different thicknesses;

Fig. 10     shows scanning electron microscope images of photothermal elements of different thicknesses;

Fig. 11     shows a graph depicting four point probe measurements of photothermal elements of different thicknesses;

Fig. 12     shows a graph depicting the angular dependence of transmissivity of a heating device according to the invention;

Fig. 13     shows a graph depicting the advancing and receding contact angles of bare fused silica ($SiO_2$), of control samples ($TiO_2$ coated fused silica) and of a heating device according to the invention;

Fig. 14a-14c     depict graphs and images of defogging experiments, wherein figure 14a depicts exemplary results of defogging experiments for a control sample and a heating device according to the invention, figure 14b depicts top view image sequences of the fogged area of the two exemplary experimental runs shown in figure 14a, and wherein figure 14c shows a graph depicting the defogging time required until < 5% of the control sample and the heating device are covered with fog;

Fig. 15a-15c     show images of outdoor tests with a pair of vision glasses that comprise a heating device according to the invention and that lack a heating device according to the invention;

Fig. 16a     shows an experimental set-up for an outdoor experiment of the photothermal effect;

Fig. 16b     shows a graph depicting the temperature evolution of a control sample and a lens that comprises a heating device according to the invention;

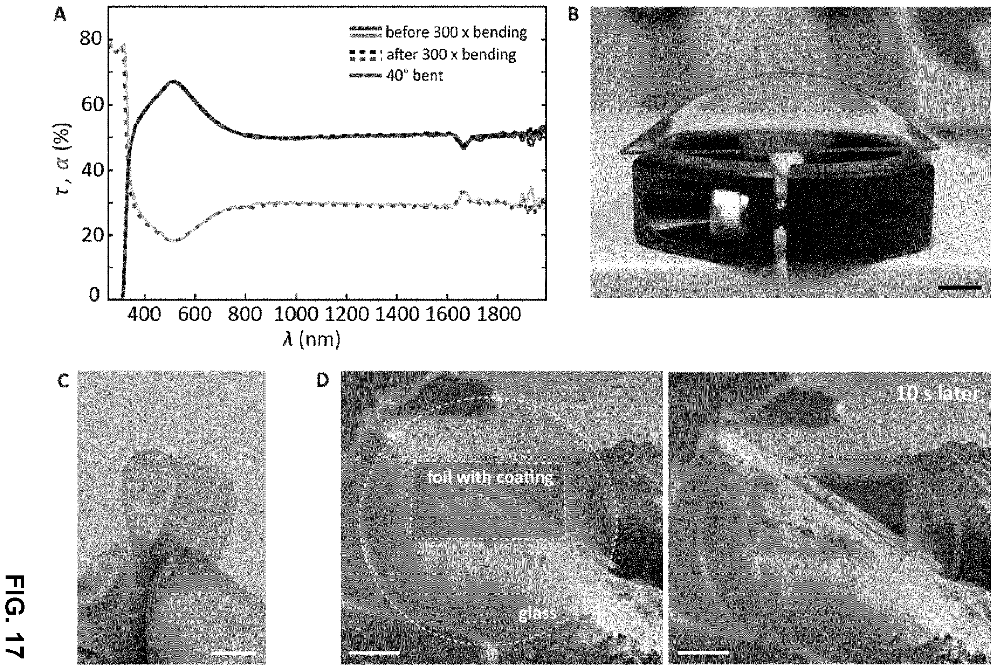

Fig. 17a-17d     show effects of a heating device according to the invention being arranged on a flexible substrate, wherein figure 17a shows a graph depicting the transmissivity and absorptivity of the substrate (overhead transparency) comprising the heating device before (solid lines) and after (dashed lines) 300 bending cycles as well as the transmissivity for a curved sample, figure 17b shows an image of the curved sample (40°) presented in figure 17a, figure 17c shows a photograph of the completely bent sample during the bending cycle, and figure 17d shows photographs of the compliant substrate/foil being mounted on any existing glass to prevent fog formation or speed up the defogging;

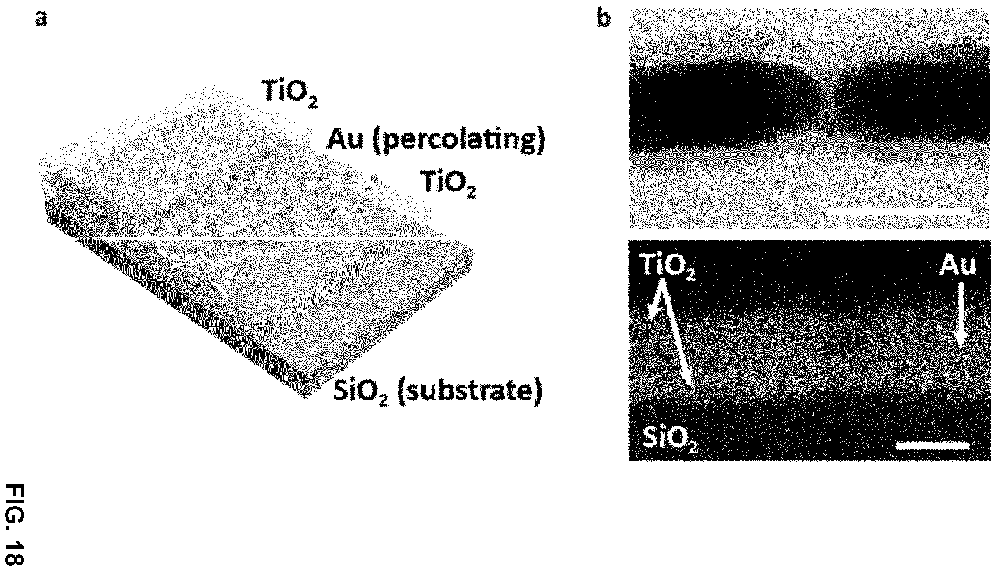

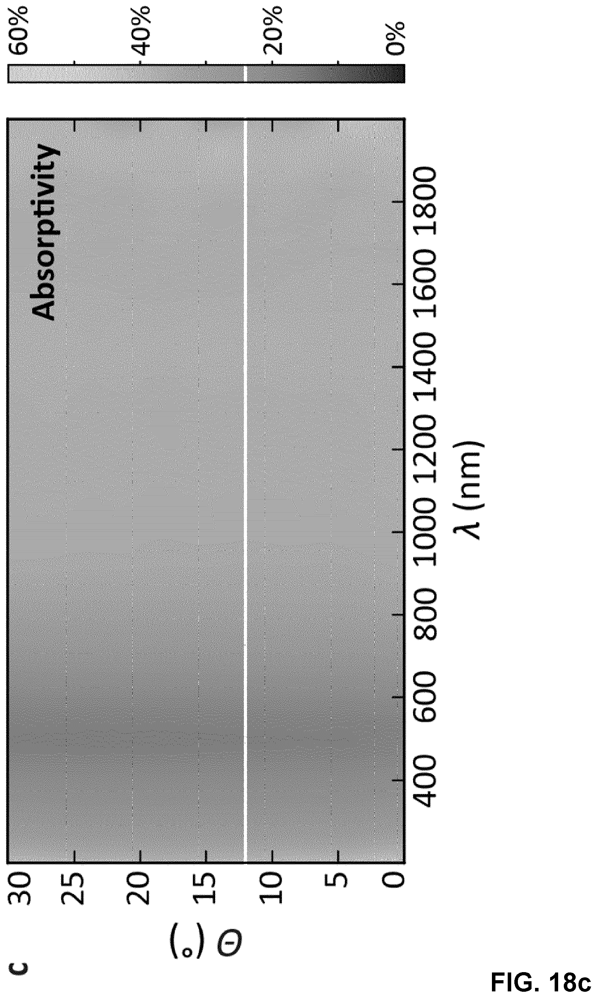

Fig. 18a- 18c     show effects of an angular dispersion relation of a heating device according to the invention; figure 18a is a schematic view of a heating device according to the invention comprising a gold layer at the percolation threshold being embedded between two titanium dioxide layers on a substrate in the form of silicon dioxide; figure 18b shows a scanning transmission electron microscopy image (left side) and an energy dispersive x-ray spectroscopy mapping (right side) of the heating device; figure 18c shows a graph depicting the angular dispersion relation of the absorptivity for radiation incidence angles $\Theta$ up to 30° to the normal of the heating device;

Fig. 19a-19b     show graphs depicting the broadband absorptivity in the near-infrared spectrum of a heating device according to the invention;

Fig. 20a-20b     figure 20a shows a bright field SEM image of the heating device comprising a photothermal structure at the percolation threshold. The photothermal material is Au (black) and is uniformly surrounded by $TiO_2$ layers (dark gray). The $SiO_2$ substrate is at the bottom, whereas the top is covered with carbon to ease imaging (both light gray); figure 20b shows a high resolution transmission electron microscopy. The actual thickness of the Au layer (for $d_{Au}$ = 4.75 nm) is estimated to be ~6-7 nm, for $TiO_2$ ~2-3 nm (for $d_{TiO2}$ = 3 nm). Scale bars: 10 nm;

Fig. 21     show graphs depicting the angular dependence of optical properties. Incident radiation measurement at an angle $\Theta$ to the normal of the heating device are performed. Measured transmissivity and reflectivity are displayed on the top and middle panels, respectively. From these, the absorptivity is deduced and presented on the bottom panel;

Fig. 22     shows a comparison of a heating device according to the invention with state-of-the-art photothermal antifogging coatings, as a function of visible transparency $\tau_{VIS}$ and the solar absorption $\alpha_{solar}$ per thickness d (in nm) of the materials;

Fig. 23     shows photothermal results at low levels of solar irradiance. Box plot ($n$ = 5) of steady-state temperature increase of the heating device according to the invention and the control samples under different levels of solar irradiance $I_0$, including 0.2 and 0.4 suns. Box plots contain the median line, the upper and lower quartile and whiskers (1.5 times the interquartile range);

Fig. 24a- 24b     show outdoor tests of the heating device according to the invention with a pair of prescription glasses;

Fig. 25a-25b     show indoor tests of the heating device according to the invention behind triple-glass windows;

Fig. 26     shows a heating device being arranged on various polymeric (including flexible) substrates. Panel A) depicts the absorption $\alpha$ of a bare polymeric (gray) and a coated substrate. Panel B) depicts SEM micrographs of the as fabricated heating devices (without $TiO_2$ top layer for ease of imaging). Scale bars B): 100 nm;

Fig. 27a-27b     show thermal durability and wear resistance tests. A) Evolution of $T_s$ under ~1 sun exposure and for 50 cycles. B) absorption $\alpha$ before (gray) and after (dark grey) the 50 temperature cycles;

Fig. 27c-27d     show thermal durability tests. C) Elevation of $T_s$ above $T_{amb}$ during the first 5h out of 63h sunlight exposure test. D) absorption $\alpha$ before (gray) and after (dark grey) the 63h sunlight exposure experiment;

Fig. 27e-27f     show wear resistance tests. Transmission $\tau$ of the heating device before and after a E) peel, F) wipe test;

Fig. 27g-27h     show wear resistance tests. Transmission $\tau$ of the heating device before and after a G) abrasion and H) sand trickling wear resistance test.

DESCRIPTION OF PREFERRED EMBODIMENTS

Various aspects of the heating device 1 according to the invention shall now be illustrated with reference to the figures.

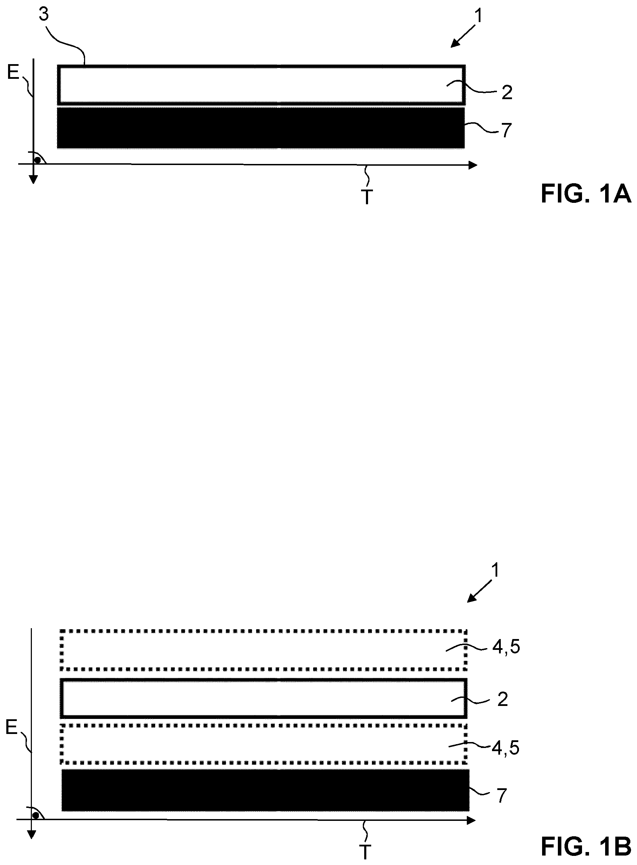

As follows from figures 1A to 1D, the heating device 1 extends along an extension direction E and comprises at least one photothermal element 2 being configured to exhibit a photothermal effect upon an impingement of electromagnetic radiation. The photothermal element 2 consists of a photothermal material that comprises a percolation structure, and wherein the percolation structure is at its percolation threshold or essentially at its percolation threshold.

In the depicted embodiments, the heating device 1 is arranged in each case on a carrier element 7. Furthermore, in all depicted embodiments, the heating device 1 is provided as a layered structure. That is, the photothermal element 2 as well as its further components that will be described with reference to figures 1B to 1D are layers that extend along a transverse direction T running perpendicularly to the extension direction E.

As indicated in figure 1A, the heating device 1 can comprise at least one electrical element 3 that is configured to induce electrical current into the photothermal element, whereby heat is generated by the photothermal element. In the depicted example, the electrical element 3 is an electrode that is arranged on the photothermal element 2.

As just mentioned, further conceivable components of the heating device 1 are depicted in figures 1B to 1D. That is, the heating device 1 can furthermore comprise at least one dielectric element 4. Here, two dielectric elements 4 are provided, wherein one of which is arranged before the photothermal element 2 and the other is arranged after the photothermal element 2 with respect to the extension direction E. To this end, the dielectric elements 4 and the photothermal element 2 are in full surface contact with one another.

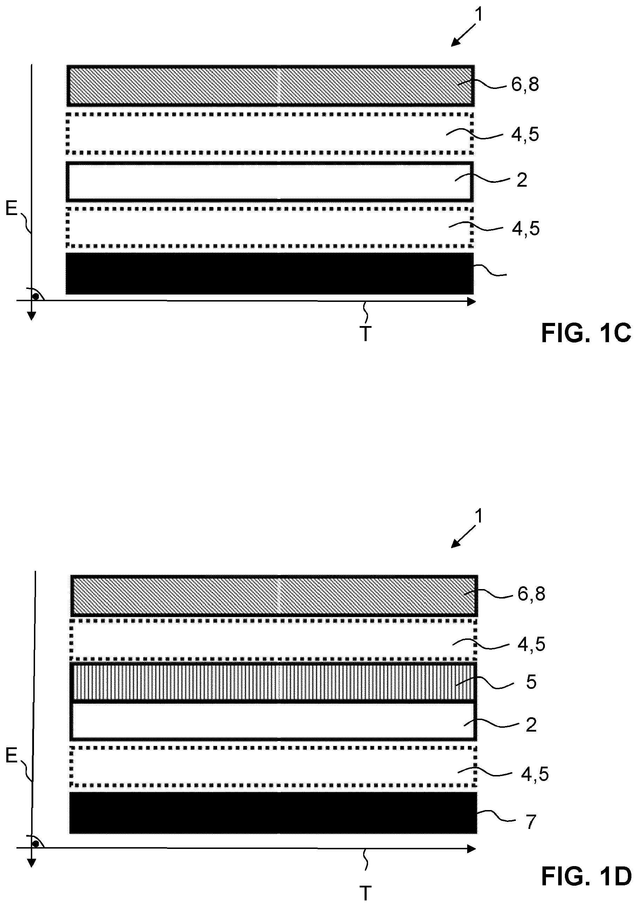

The heating device 1 additionally comprises at least one shifting element 5, wherein the shifting element 5 is configured to shift an absorption capability and/or a transmission capability of the heating device 1 with respect to the impinging electromagnetic radiation towards shorter or longer wavelengths of the impinging electromagnetic radiation. In figures 1B to 1D, the dielectric elements 4 and the shifting elements 5 are provided by the same element. That is, the dielectric elements 4 correspond to the shifting elements 5 and vice versa. However, and as follows from figure 1D, the shifting element 5 can also be provided as an additional component. Moreover, the dielectric element 4 must not in each case correspond to a shifting element 5 but could merely serve the purpose of electrically isolating the photothermal element 2, for instance.

The heating device 1 can additionally comprise at least one antireflection element 6 that is configured and arranged to reflect electromagnetic radiation towards the photothermal element 2. Such embodiments are depicted in figures 1C and 1D, wherein in each case a antireflection element 6 is arranged before the further components of the heating device 1. In these cases, the antireflection element 6 provides a top side 8 of the heating device 1.

Although not depicted in figures 1A to 1D, the heating device 1 can be attached or applied to a surface in order to prevent or remove a deposition from said surface. As such, it can be seen as a coating of said surface. Thus, the expression "coating" used herein below is to be understood as the heating device according to the invention.

Furthermore, the expression "metamaterial" is to be understood as the photothermal element comprising or consisting of the photothermal material that comprises a percolation structure, and wherein the percolation structure is at its percolation threshold or essentially at its percolation threshold.

_Design of the heating device_

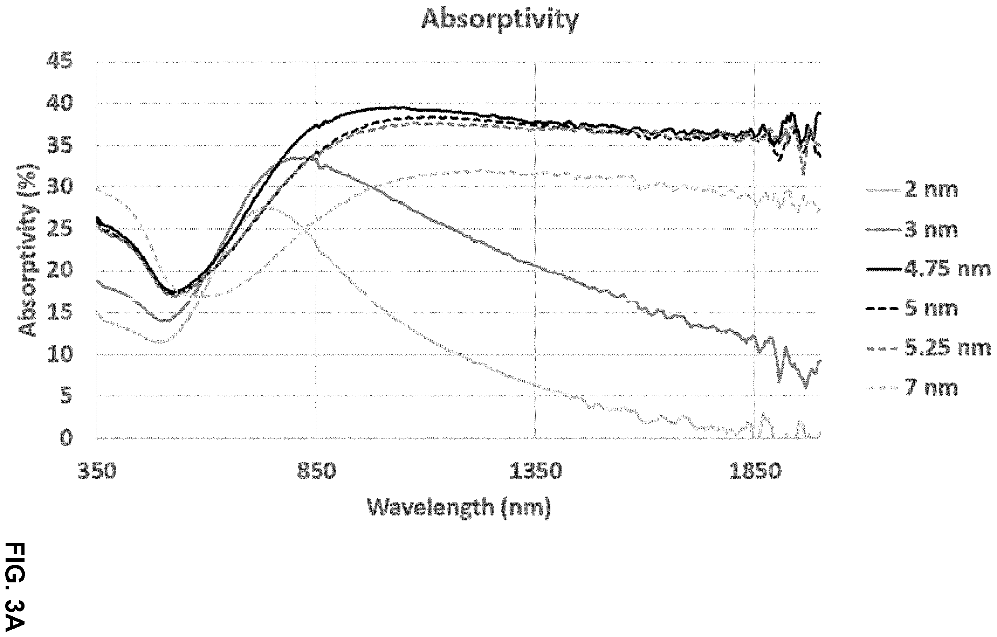

Figures 3a to 4c illustrate the design and optical properties of the heating device.

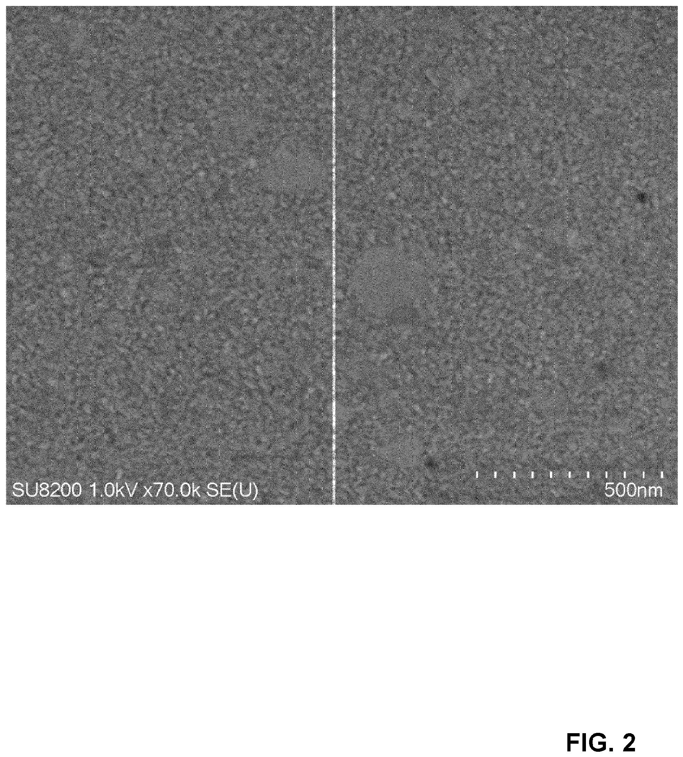

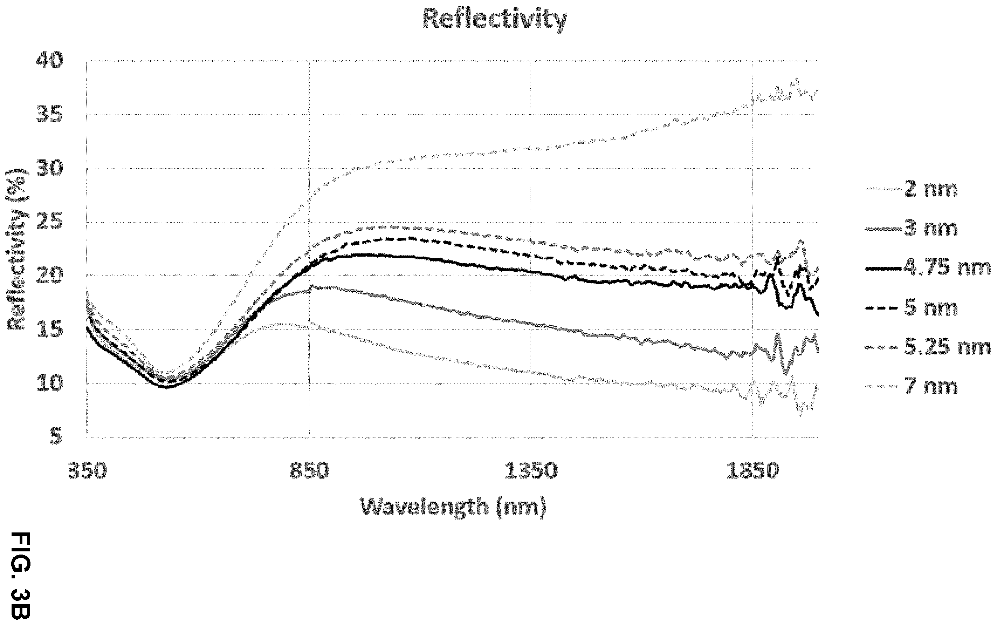

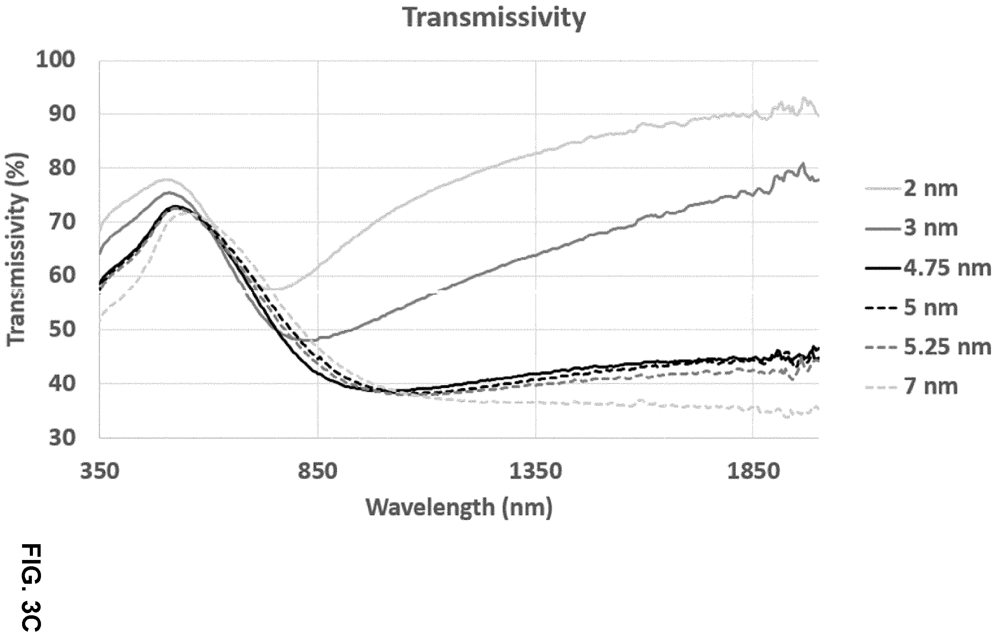

Unlike the gold layer depicted as scanning electron micrograph in figure 2, which has a thickness of 15 nm being flat and contiguous and made of poly-crystalline domains, these heating devices comprise a photothermal element in the form of gold layers that comprise a percolation structure and which are, depending on the thicknesses of the gold layers, associated with particular absorptivity, reflectivity and transmissivity characteristics. To this end, figure 3a depicts the absorptivity of different gold (Au) layer thicknesses, i.e. thickness parameters, embedded between dielectric layers in the form of 3 nm $TiO_2$ layer on the top and bottom. The spectrally resolved absorptivity in the visible and near infrared shows a maximum in this region for a thickness parameter of the layer of 4.75 nm. Figure 3b depicts the reflectivity of different gold (Au) layer thicknesses embedded between 3 nm $TiO_2$ layer on the top and bottom. The spectrally resolved reflectivity increases as the films grows to form a continuous and flat mirror. Figure 3c depicts the transmissivity of different gold (Au) layer thicknesses, i.e. thickness parameters, embedded between two $TiO_2$ layers on the top and bottom each with a thickness parameter of 3 nm. The spectrally resolved transmissivity shows good transparency in the visible. There interband transitions of gold, shifted to the red by the TiO2 matrix, absorb less than in the near infrared.

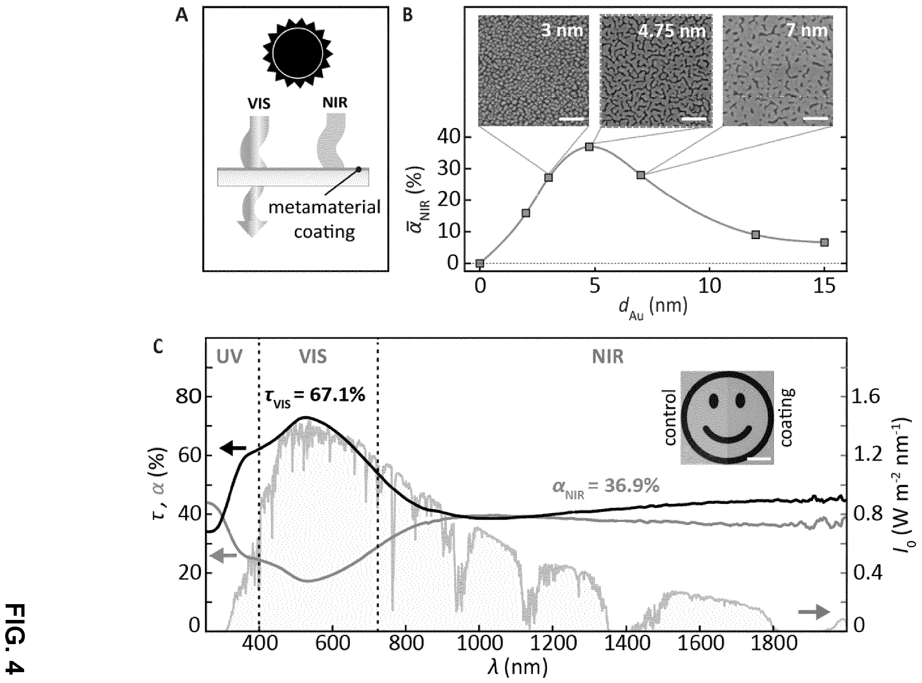

Moreover, figure 4a illustrates NIR being absorbed by the heating device and being dissipated into heat (photothermal effect), while the heating device is largely transparent in the visible range. The resulting temperature increase of the surface prevents fogging. Figure 4b illustrates the design of the heating device focuses on optimizing the gold (Au) thickness $d_{Au}$ for a maximal mean near-infrared absorptivity $\overline{\alpha}_{NIR}$. The maximum lies at the percolation threshold, i.e. 4.75 nm thickness parameter. The grey curve is a spline fit to the data points. Three SEM micrographs of thin metallic Au layers indicate how disconnected clusters merge into larger, connected patterns at the percolation threshold (grey rectangle). Figure 4c depicts the transmissivity $\tau$ (black line) and absorptivity $\alpha$ (grey line) spectrum of the heating device. The spectrum represents the AM1.5 Global Solar reference spectrum. 49.9% of the solar irradiance is in the near-infrared (NIR), 45.5% in the visible (VIS), and 4.6% in the ultraviolet (UV) range. The inset showcases the transparency of a regular glass slide (silicon dioxide, $SiO_2$, left) compared to the heating device (right). Scale bars B): 100 nm, C) 5 mm.

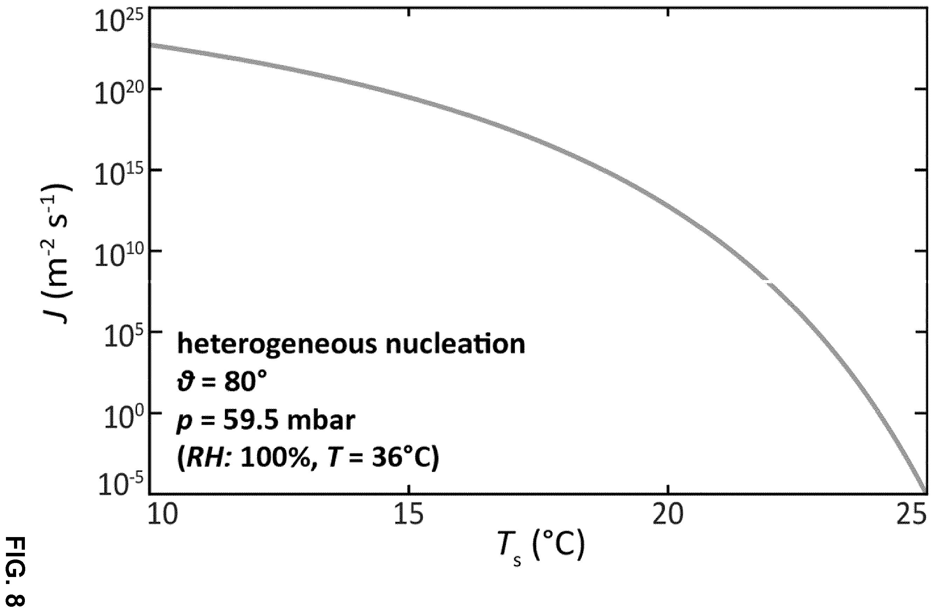

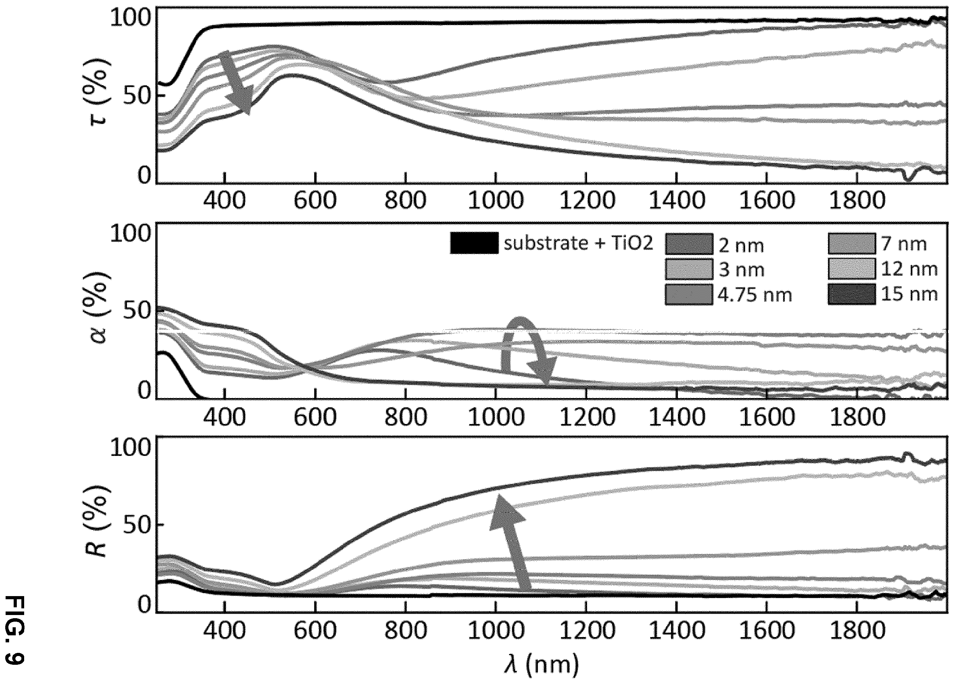

Hence, in order to efficiently harvest solar energy to combat fogging and simultaneously maintain transparency, the design of the coating, i.e. the design of the heating device according to the invention targeted high broadband absorption in the near-infrared (NIR, $\lambda$ = 720-2000 nm) solar radiation spectrum and high broadband transparency in the visible spectrum (VIS, $\lambda$ = 400-720 nm), as illustrated in Fig. 4A. In fact, the NIR solar spectrum accounts for ~50% of the incoming solar irradiance $I_0$ and, hence, offers a great potential to harvest solar energy invisible to the human eye. Once the solar energy is absorbed, it dissipates itself as heat and elevates the sample temperature $T_s$ above ambient temperature $T_{amb}$, mitigating the risk of fog and preserving its transparency in the VIS spectrum. Given the highly sensitive dependence of the condensate nucleation rate on temperature [41-44], this thermodynamic approach is powerful and, unlike many existing methods, does not rely on chemistry [45-47]. A small increase of $T_s$ is already sufficient to exponentially decrease of the nucleation rate of droplets, thereby reducing the probability of a nucleation event by orders of magnitude (see Fig. 8). A maximal temperature elevation is achieved when the photothermal coating, i.e. the heating device according to the invention, has a strong broadband absorption in the NIR spectrum. Previous work has evidenced that good NIR absorption can be achieved with metallic particles. They show a strong light absorption because of their large cross-section at the plasmonic resonance frequency in the VIS spectrum, and this narrowband absorption can be broadened over a wider spectrum into the NIR by mixing metallic nanoparticles of different sizes and shapes [10, 17, 23, 48]. Also, it has been shown that structured particles can be used for absorbing selectively the NIR spectrum. However, these particles are narrowband absorbing and require complicated, sensitive fabrication [49-51]. In contrast, the idea of a single thin metallic layer at the percolation threshold or essentially at the percolation threshold has been put forth. At this state, disconnected clusters of individual nano-islands merge into a larger, connected pattern. This leads to delocalized surface modes that result in a strong and broadband absorption of incident radiation in the NIR [52, 53], which is subsequently converted into heat. To realize this concept, thin layers of gold (Au) have been deposited using commercial technologies (thermal evaporation) and the thickness $d_{Au}$ of the layer has been tuned to be at the percolation threshold or essentially at the percolation threshold (see Fig. 9-11).

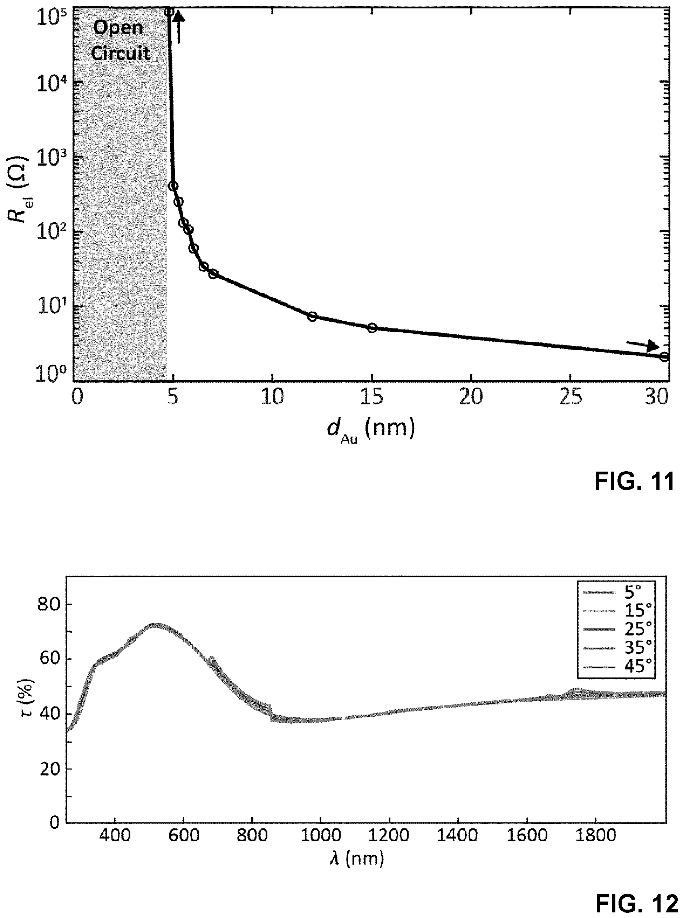

Fig. 4B shows how the mean NIR absorptivity $\bar{\alpha}_{NIR}$ reaches a maximum at a thickness parameter $d_{Au}$ = 4.75 nm. There, the strong and broad optical absorption matches with the electrical percolation threshold. At larger $d_{Au}$, the layer becomes more metallic and loses its broadband absorptive behavior. The top-view scanning electron microscope (SEM) micrographs in Fig. 4B reveal how smaller, disconnected clusters merge into a larger and sinuous connected pattern at the percolation threshold. This optimized thin Au layer has been encapsulated between two high refractive index dielectric layers (titanium dioxide, $TiO_2$, each ~3 nm thick) to protect the percolating layer from oxidation. Further, these layers shift the onset of light absorption of the 3-layer heating device (~10 nm thick) towards longer wavelengths due to the large refractive index of $TiO_2$ [54]. The spectral response of the as-fabricated heating devices have been measured and their optical properties have been determined. Fig. 4C confirms the high transmissivity in the VIS ($\tau_{VIS}$ = 67.1%) which aligns well with the peak of the solar irradiance $I_0$. The random nature of the percolating pattern further makes the transmissivity independent of the incidence angle of the incoming light (Fig. 12). Simultaneously, the heating device exhibits a strong broadband absorption in the NIR ($\alpha_{NIR}$= 36.9%). Clearly, at the percolation threshold, the plasmon resonance-usually causing a strong localized absorption at the resonance frequency-is replaced by a broadband absorption below the resonance frequency, i.e. in the NIR spectrum. Equally, the heating device remains transparent to shorter wavelengths in the VIS spectrum, as it remains optically thin. The strong transmissivity around $\lambda$ = 550 nm originates from inter-band transitions of gold [55, 56]. There, the structural absorption in the NIR induced by the percolation is stronger than the inter-band transitions of the thin film in the visible. As a result, the heating device harvests nearly 30% of the incident solar energy (280-2000 nm) over just ~10 nm, while remaining transparent.

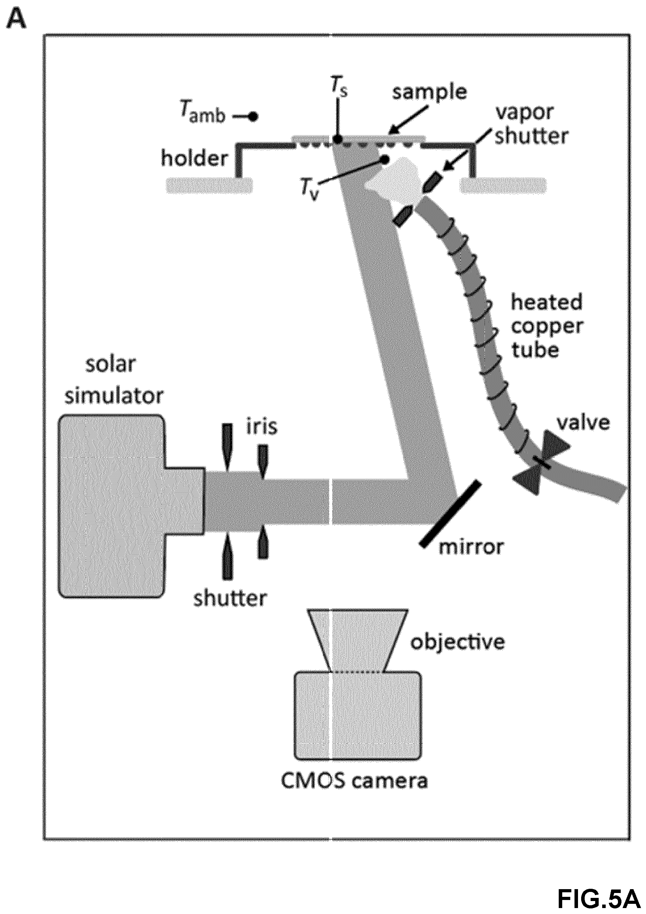

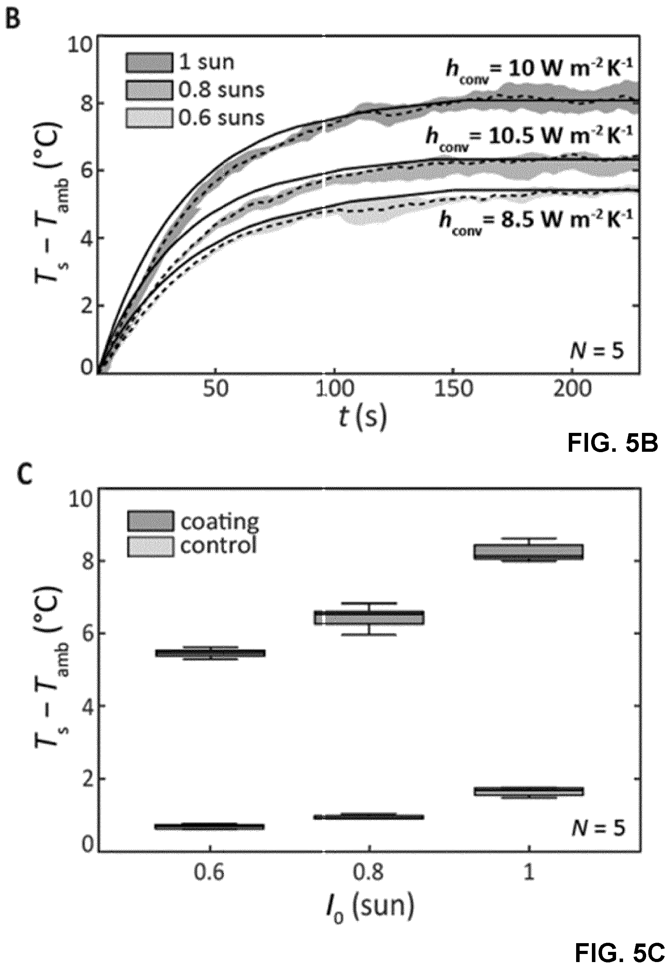

Next, the photothermal performance of the heating device has been evaluated. This is discussed with reference to figure 5, depicting the experimental set-up and the photothermal performance. In particular, figure 5a depicts a schematic of the experimental setup. Samples (control and heating device coating, i.e. the heating device being applied on a substrate, the substrate being here SiO2) are illuminated by a solar simulator with an irradiance from 600 to 1000 W m$^{-2}$ (corresponding from 0.6 to 1 sun). A color camera and its objective image the fog formation on the coated bottom surface of the sample. Warm vapor diffuses from a copper pipe at a controlled temperature to the surface of the sample.

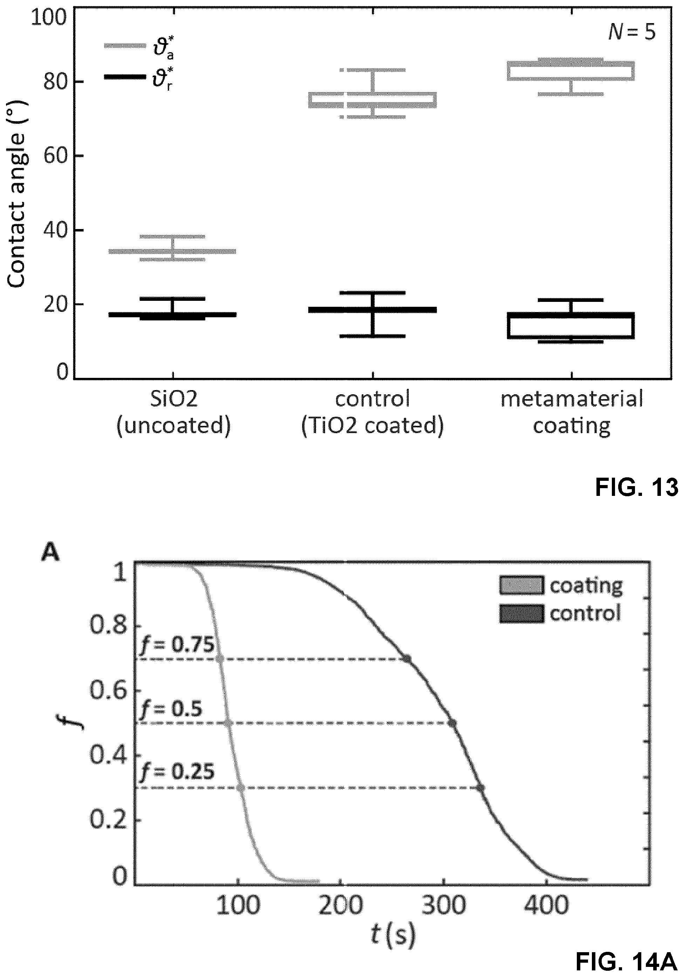

In particular, the surface temperature $T_s$ of a fused silica ($SiO_2$) substrate, coated with the heating device, upon a simulated solar illumination (see experimental setup shown in Fig. 5A) has been measured. As a control sample, a ~3 nm thin layer of $TiO_2$ on a $SiO_2$ substrate has been deposited to yield the same wetting behavior as the heating device (Fig. 13). The samples are placed on the sample holder, such that the coated side of the substrate faces downwards. The irradiance $I_0$ is controlled with the shutter of the solar simulator. $I_0$ of 1 sun (corresponding to 1000 W m$^{-2}$) results in the highest measured photothermal response. However, in outdoor conditions, $I_0$ is often less than 1 sun. Hence, the temperature response for a weaker irradiance of 600 and 800 W m$^{-2}$, corresponding to 0.6 and 0.8 suns, respectively, has also been recorded. Under 1 sun illumination, the heating device coated on a SiO2 substrate shows the strongest temperature increase above ambient temperature ($T_s$ - $T_{amb}$, see Fig. 5B. While $T_s$ increases by 8.3°C within ~3 minutes above ambient temperature ($T_{amb} \approx$ 23°C, RH $\approx$ 55%) under 1 sun illumination, the heating device on a SiO2 substrate also significantly heats up under weaker irradiance (5.4°C and 6.4°C under 0.6 and 0.8 suns respectively). Note that this increase is more than sufficient to decrease condensate nucleation rates by several orders of magnitude (see Figure 8). The experimental observations align closely with a transient heat transfer model that validates the temperature measurements. In the model, only the convective heat transfer coefficient $h_{conv}$ was varied within a reasonable [57] range (8.5 to 10.5 W m$^{-2}$ K$^{-1}$) to fit the experimental data (see Supplementary Note 4). Fig. 5C summarizes the steady-state temperature increase ($t$ = 230 s) of the heating device on a SiO2 substrate and the control sample, and proves the significant photothermal response of the former. Regardless of the illumination, the heating device on a SiO2 substrate largely outperforms the control by at least 5°C.

The performance of the heating device on a SiO2 substrate was then tested on the resistance to surface fogging (antifogging), see figures 5b and 5c. That is, figure 5b depicts the mean temperature increase (dashed line) and standard deviation (shaded area) of the surface under solar illumination from 0.6 to 1 sun are visible. The solid line represents the transient heat transfer model of the temperature and aligns well with the experimental results. Figure 5c depicts a Box-plot of steady-state ($t$ = 230 s) temperature increase of the heating device on a SiO2 substrate and the control samples under different solar irradiance $I_0$ (0.6 to 1 sun). For this, a heated copper tube was installed in the experimental setup, which is connected to a bubbler filled with water and a shutter at the tube outlet. As demonstrated in Fig. 5A, vapor impinges on the sample surface from the same side as the sample is illuminated. The vapor temperature $T_v$ is controlled through the copper tube (surrounded by a heating cable) and is measured in close vicinity of the sample. The knowledge of $T_v$ and $T_s \approx T_{amb}$ at the beginning of each experimental run allows the computation of the saturation vapor pressure $p_{sat}$ (Arden-Buck equation [58]) of the air in close proximity of the sample, plus the vapor pressure of the delivered humid air $p_v$.

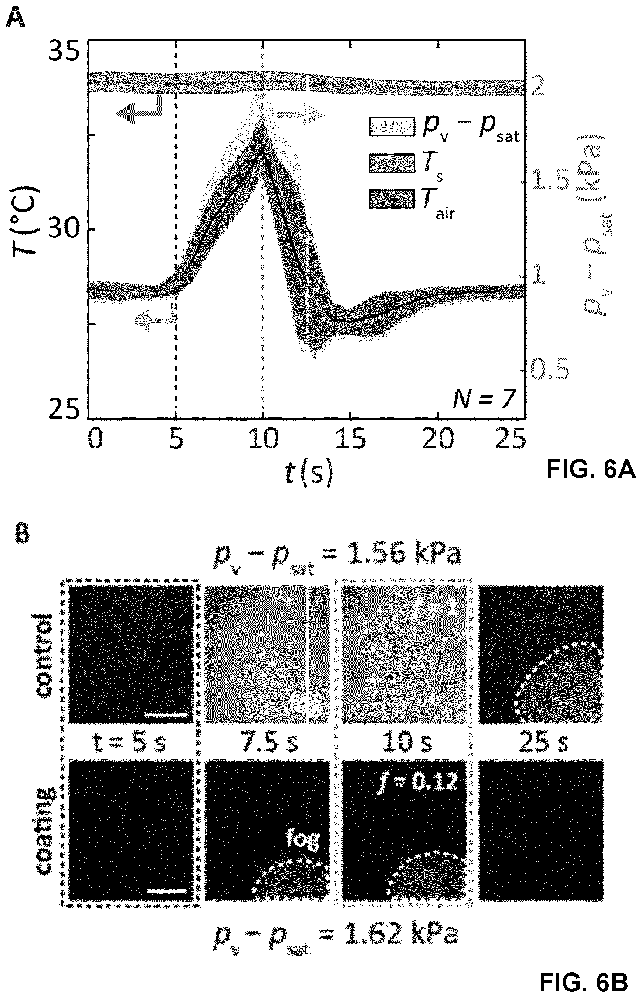

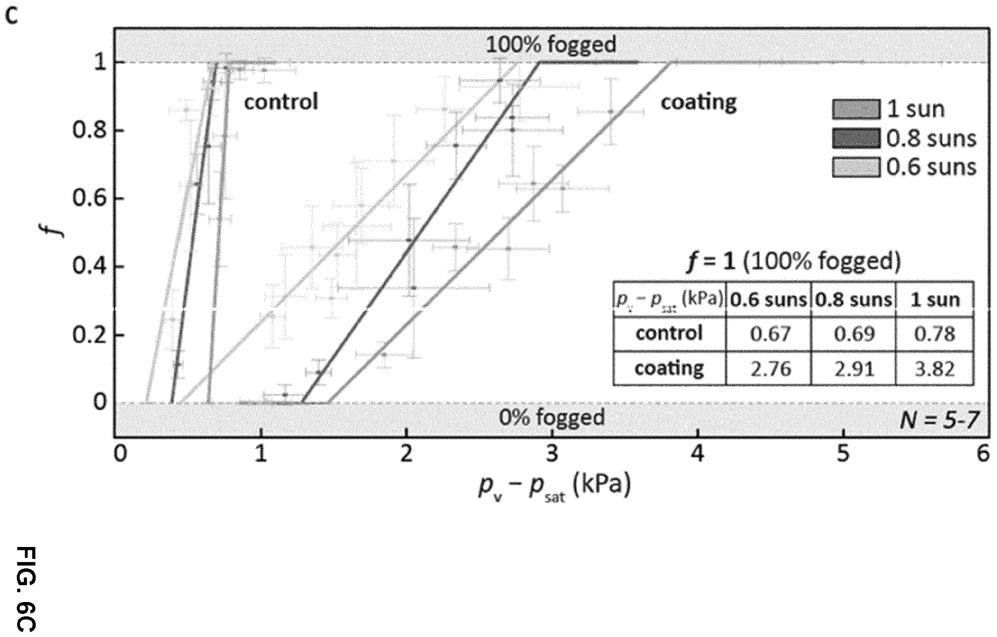

Figure 6 illustrates the antifogging performance. In fact, figure 6a depicts a plot of the sample temperature $T_s$ (coated with the heating device) and overpressure $p_v$ - $p_{sat}$ over the duration of an exemplary experiment. First, the sample is illuminated by the solar simulator (here with 1 sun). After 2 minutes of sunlight exposure, the vapor shutter was opened for 5 seconds to expose the sample to vapor. Subsequently, the shutter was closed for 20 s in order for the overpressure ($p_v$ - $p_{sat}$) to recover to its initial conditions. This sequence is repeated for 5-7 times for each experiment. Sequences are then averaged to provide mean values and standard deviations. As Fig. 6A shows, $T_{air}$ and thus $p_v$ - $p_{sat}$ reach a peak value and then equilibrate within ~15 s back to their initial values. Simultaneously, the condensation formation on the surface of the samples was recorded. Dark-field imaging of the fog allowed to identify regions of the sample where droplets form. Small droplets present on the surface backscatter some of the incident light and provide a good luminance on the camera. Recorded images are then binarized with respect to their luminance in order to quantify the area covered with fog, i.e. the

fog fraction $f = \dfrac{A_{fog}}{A_{sample}}$ of the surface. Here, $A_{fog}$ is the area covered with fog and $A_{sample}$ the total area of the sample.

Figure 6b depicts a recorded image sequence of the control and the heating device on a SiO2 substrate over time under 1 sun and practically identical overpressure. Shown is the considered area of the sample $A_{sample}$, which is used to determine the fog fraction $f$. Before the shutter is opened ($t$ = 5 s), both the control and the heating device on a SiO$_2$ substrate are completely free of fog ($f$ = 0). That is, at $t$ = 5 s, both samples are completely free of fog ($f$ = 0). Upon opening the vapor shutter, the samples start to fog and reach their peak fog fraction. To this end the fog fraction f gradually increases and reaches its peak at t = 10 s with $f$ = 1 for the control sample and an order of magnitude lower value ($f$ = 0.12) for the heating device on a SiO$_2$ substrate, at comparable pressure difference $p_v$ - $p_{sat}$ (1.56 and 1.62 kPa, respectively). After 20 s ($t$ = 25 s), the heating device on a SiO$_2$ substrate is already completely free of fog, whereas the control sample still requires further time to completely recover its initial condition before its next cycle. To quantify this impressive antifogging performance, further experiments under various levels of $p_v$ - $p_{sat}$ and solar illumination (0.6, 0.8 and 1 sun) were carried out. For each experimental run, measurements of overpressure $p_v$ - $p_{sat}$ and fog fraction $f$, mean values and corresponding standard deviations are provided.

Figure 6c depicts the fog fraction $f$ of the heating device coating on a SiO$_2$ substrate and control samples under various solar illumination and levels of overpressure $p_v$ - $p_{sat}$. The inset table indicates the > 4-fold antifogging improvement of the heating device coating on a SiO$_2$ substrate over the control at all levels of illumination. Scale bars B): 5 mm. The experimental results follow a linear trend, as shown in Fig. 6C. The much stronger fogging resistance of the heating device on a SiO$_2$ substrate compared to the control sample is obvious in the markedly smaller slope under partial fogging and the overpressure value where fog starts to form ($f$ > 0). The linear fit allows the determination of the corresponding overpressure at which the samples are completely fog free ($f$ = 0) and fully fogged ($f$ = 1). With these values for $p_v$ - $p_{sat}$, the fogging resistance improvement of the heating device on a SiO$_2$ substrate over the control sample was estimated. As indicated in the inset table of Fig. 6C, the control is fully covered by fog ($f$ = 1) at $p_v$ - $p_{sat}$ = 0.67, 0.69 and 0.78 respectively (0.6, 0.8 and 1 sun). In stark contrast, the heating device on a SiO$_2$ substrate only fully fogs ($f$ = 1) at $p_v$ - $p_{sat}$ = 2.76, 2.91 and 3.82 (at 0.6, 0.8 and 1 sun) respectively. This implies that the heating device on a SiO$_2$ substrate impressively endures a 4.12-4.9 higher overpressure compared to the control sample, which implies a more than 4-fold improvement of the antifogging performance.

Following the antifogging experiments, the defogging performance of the heating device on a SiO$_2$ substrate was assessed, i.e. the recovery of visibility once the surface is completely fogged. To this end, the control sample and the heating device on a SiO$_2$ substrate were cooled for 2 min to ~2 °C until condensation forms under ambient conditions ($T_{amb} \approx 23$ °C, RH ≈ 55%). The sample was then instantly placed on the experimental setup (see Fig. 5A) and illuminated with sunlight, while recording the evolution of fog on the surface.

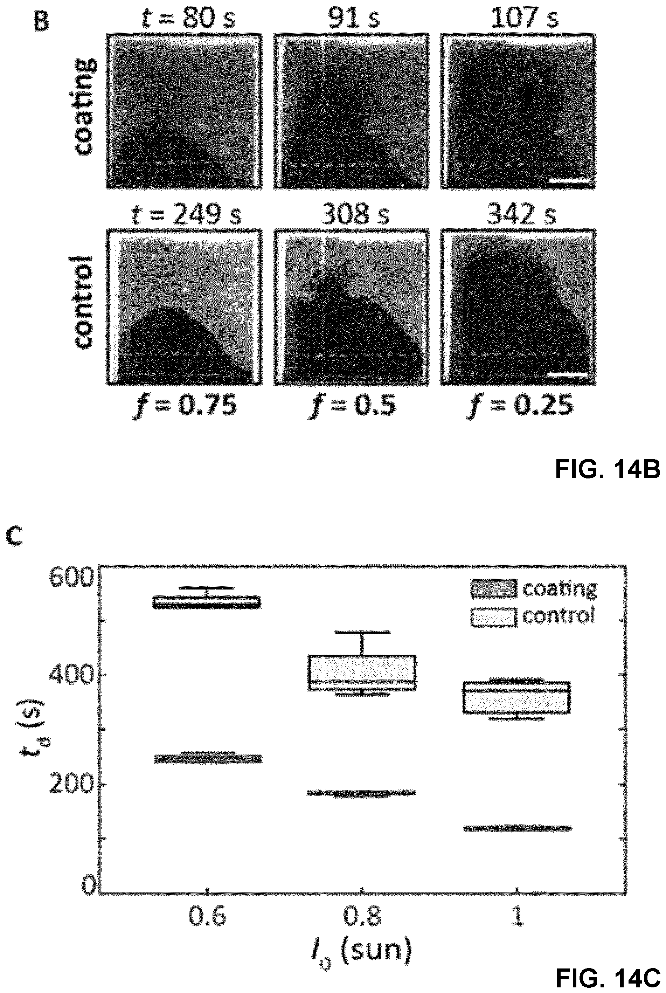

Fig. 7 illustrates the defogging performance and real-world feasibility. In fact, Fig. 7A demonstrates a qualitative image sequence for the control sample and the sample coated with the heating device for a duration of $t$ = 0-150 s under 1 sun illumination ($T_{amb} \approx 23$ °C, RH ≈ 55%). The heating device coating on a SiO$_2$ substrate completely defogs in < 150 s, and to a large extent ($f \approx 0.25$) in less than 100 s, while the control sample stays mostly fogged over that same duration. That is, while the control is still covered with fog at $t$ = 150 s, the heating device coating on a SiO$_2$ substrate has completely regained its transparency. The small size of the condensed droplets leads to large scattering and hence a very white image of the sample in the dark field imaging, clearly recognizable in the control image at t = 0 s. The defogging front proceeds much faster for the heating device-coated sample compared to the control sample (see Figure 14). Experiments under different levels of illumination, associated with recorded videos of the backscattered light ($T_{amb} \approx 23$ °C, RH ≈ 55%) provide a more thorough quantification of the dynamics of the defogging.

From this data, the evolution of the fog fraction $f$ over time was extracted, as shown in Fig. 7B. That is, figure 7B depicts the evolution of fog fraction $f$ over time on the control sample and the heating device coating on a $SiO_2$ substrate. The latter starts to defog much earlier and faster (steeper slope) compared to the control sample. The coating reduces $t_d$ by a factor of 2-3. The defogging time $t_d$ was defined and determined as the time required until $f < 0.05$, i.e. where the sample is covered with less than 5% of fog. The control sample remains completely fogged, ($f \approx 1$), for a much longer time and its defogging rate (Fig. 7B) is much slower. Specifically, for the given experimental conditions and under 1 sun illumination, the mean defogging time $\overline{t_d}$ of the samples being coated with the heating device is $\approx 112.4$ s, in stark comparison to $\overline{t_d} \approx 341$ s for the control samples, a 3-fold improvement. The same trend is manifested under weaker illumination. There, $\overline{t_d}$ is reduced by a factor of 2.12 ($\overline{t_d} \approx 179.4$ s vs. 380.8 s) and 2.08 ($\overline{t_d} \approx 234.9$ s vs. 488.3 s) at 0.8 and 0.6 sun illuminations, respectively.

Armed with the knowledge of this anti-/defogging performance improvement, the real-world feasibility of the heating device was tested under outdoor conditions. For this, one lens of a pair of prescription glasses is coated with the heating device and placed outside on a sunny winter day. After 5 min of sunlight exposure, the glasses were worn and it was exhaled, wearing a well-fitted face mask (FFP2), mimicking a real-world condition that is recently experienced daily. The warm breath acts like a supersaturated stream of vapor and impinges on both the uncoated lens (at ambient temperature) as well as on the lens being coated with the heating device (at an apparently increased temperature above ambient due to the photothermal effect).

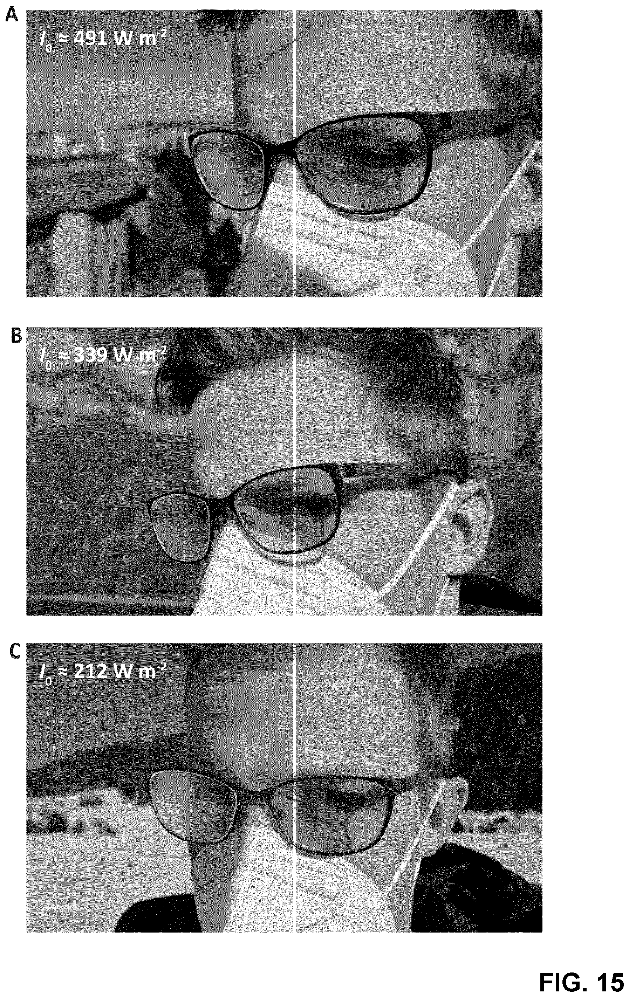

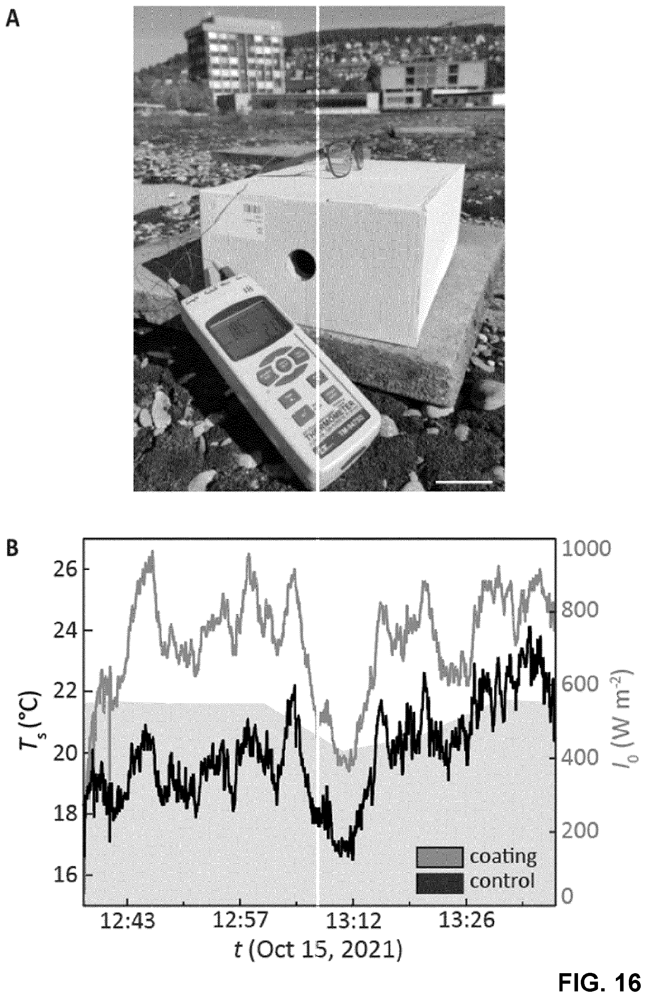

Fig. 7C demonstrates the results at two different locations. In particular, figure 7C depicts images of outdoor tests at different places and under various levels of solar irradiance (top $I_0 = 212$ W m$^{-2}$, bottom $I_0 = 339$ W m$^{-2}$). The left lens of the glasses is coated with the heating device and retains its visibility even under the humid human breath escaping upwards from the mask, whereas the uncoated lens fogs. Clearly, even under these non-ideal conditions, the strong anti-/defogging performance enhancement is obvious. Further outdoor experiments at different locations as well as outdoor temperature measurements of the coated and uncoated lens can be found in the Figures 15 and 16.

Finally, the applicability and effectiveness of the heating device in preventing fogging of flexible materials was tested. This is illustrated in figure 7D depicting bending tests of the heating device-coated overhead projector transparency.

To this end, a polyester sheet (an overhead projector transparency) is coated with the heating device and the optical properties of the coated sheet are measured. Next, as shown in Fig. 7D, the sheet is bent 300 times before measuring the optical properties again to test its robustness against serious repetitive deformation. As the coating is only ~10 nm thick, the comparatively very large radius of curvature from the bending deformation neither results in mechanical damage, nor deteriorates the optical properties of the heating device coating (the random arrangement of the metamaterial, i.e. the photothermal element comprising or consisting of the photothermal material that comprises a percolation structure, and wherein the percolation structure is at its percolation threshold or essentially at its percolation threshold, of the order of few hundred nanometers, is also much smaller than the radius of the bending curvature). Hence, due to its thinness, the heating device resists serious deformation and is readily applicable on flexible, foldable and portable substrates. Furthermore, the heating device can be arranged on any portable, flexible/foldable material and retroactively attached on existing surfaces, such as windows, shields, or glasses.

The feasibility of this approach was further evidenced by taping a polyester sheet on a fused silica wafer being coated with the heating device and testing the anti-/defogging performance when exhaling several times onto the wafer and the coating, in the mountains. Clearly, as shown in Fig. 7E (also Figure 17), the transparency with the coating defogs much faster and proves its feasibility under harsh outdoor conditions. That is, figure 7E depicts outdoor tests evidencing that the overhead transparency with the heating device coating can be mounted on any existing glass to prevent fog formation or speed up the defogging. Scale bars A): 5 mm, C) and D): 10 mm, E): 20 mm.

Hence, an ultrathin heating device has been presented with high transparency in the VIS spectrum and strong absorption in the NIR. The spectral selectivity with a broadening of the absorptivity in the NIR is achieved through a structural percolating effect of a metallic Au nanofilm, sandwiched between two dielectric $TiO_2$ nanolayers, rendering a heating device with a total thickness of ~10 nm. Due to its ultrathin nature and its standard fabrication process, the heating device can be easily upscaled, and has the potential to be applied over large areas, or be integrated into existing multilayer coatings, adding an antifogging functionality. The optical absorption induced by the percolation of the metallic Au film leads to a photothermal response of up to 8.3°C in temperature increase above ambient under an illumination of 1 sun. This thermal response is exploited to exponentially decrease the nucleation rate of water vapor nucleation, and leads to a nearly 4-fold improvement of fog resistance (antifogging). Moreover, visibility of a fully fogged coated sample is recovered by up to 3 times faster, compared to a control uncoated sample (defogging). Importantly, it has been shown that the heating device performs well even under more challenging conditions, such as with 0.6 or 0.8 sun illumination. The real-world performance of the heating device has been validated by applying it to prescription eyewear and proving its impressive antifogging effect under realistic outdoor conditions. Finally, the ultrathin design of the heating device allows its facile application on flexible, foldable and portable substrates, where it retains perfectly its optical and photothermal properties even under and after intense and repeated bending.

*Methods*

*Fabrication of samples and optical properties*

To fabricate the heating device and the control samples, 500 $\mu$m thick JGS2 fused silica wafers were used as substrates (UniversityWafer Inc.), diced into 22x22 mm squares. All specimens are cleaned by sonication in acetone and rinsed with isopropyl alcohol and deionized water for 2 min. Finally, they are exposed to oxygen plasma for 5 min (Oxford Instrument, Plasmalab 80 Plus). Next, the heating device and control coatings were generated by deposition:
*Heating device:* First, sputter deposition (Von Ardenne CS 320 C) was used to form a ~3 nm layer of titanium dioxide (TiO$_2$) with the following parameters: 600 W RF field, 6 $\mu$bar pressure, 71 s deposition time. Shortly thereafter, gold (Au) was thermally evaporated with a deposition rate of 0.05 nm/s until an estimated optimal layer thickness, i.e. thickness parameter of 4.75 nm (Evatec BAK501 LL) was reached. Finally, the percolating Au layer is covered with another layer of TiO$_2$, deposited under the same conditions as mentioned above. For the parametric study, to determine the percolation limit (see Supplementary Note 2), the last step of TiO$_2$ deposition was not performed to allow for four point probe measurements.
*Control:* For the control, a layer of TiO$_2$ (~3 nm) with the same parameters used for the heating device fabrication is deposited. Transmissivity and reflectivity were measured (0.25-2.0 $\mu$m) using a UV/VIS NIR spectrometer (Jasco, V770) with an ILN-925 integrating sphere at normal incidence.

The mean transmissivity in the visible was determined as $\overline{\tau}_{VIS} = \frac{\int_{\lambda_{start}}^{\lambda_{end}} \tau(\lambda)*I_0(\lambda)d\lambda}{\int_{\lambda_{start}}^{\lambda_{end}} I_0(\lambda)d\lambda}$, where $\tau(\lambda)$ and $I_0(\lambda)$ represent the measured spectral transmissivity and AM 1.5 Global solar irradiance, respectively (see Fig. 1C). For the VIS spectrum, $\lambda_{start}$ = 400 nm and $\lambda_{end}$ = 720 nm were chosen. Similarly, the mean absorptivity in the NIR as

$\overline{\alpha}_{NIR} = \frac{\int_{\lambda_{start}}^{\lambda_{end}} \alpha(\lambda)*I_0(\lambda)d\lambda}{\int_{\lambda_{start}}^{\lambda_{end}} I_0(\lambda)d\lambda}$, was calculated, where $\alpha(\lambda)$ is the measured spectral absorptivity with $\lambda_{start}$ = 720 nm and $\lambda_{end}$ = 2000 nm.

*Experimental setup*

In order to assess the anti- as well as defogging performance, a dedicated experimental setup was developed (see Fig. 2A). Samples are placed upside down on a U-shaped sample holder (polymethylmethacrylate ground plate, Styrofoam on top, opening width: 18x18 mm). A solar simulator (Newport, 66984-300XF-R1), equipped with an air mass filter (AM1.5 Global) simulates the sunlight. A shutter and an iris at the opening of the simulator allow to precisely time the start of the experiment and the irradiated area on the sample. The solar light is deflected by a mirror towards the investigated sample. A CMOS color camera (FLIR BFS-U3-51S5C-C) with an objective (MVL7000-18-108 mm) images the samples. The solar irradiance is adjusted from 600-1000 W m$^{-2}$ and measured with a thermal power sensor (Thorlabs S425C and PM100USB controller) at the same position and height where the sample lies. For the experiments involving fog, we connect the inlet of a bubbler to a nitrogen (N$_2$) supply (2.5 bar pressure, reduced with a Swagelok pressure valve) and fill it with water. The outlet of the bubbler is connected to an insulated copper tube (outer diameter: 1 cm), and its temperature is precisely controlled by a heating cable (Horst™ 020101, 0.6 m, 75 W and Horst™ 060271, HTMC1/V controller), with a feedback signal from a resistance temperature detector (RTD, PT100). The bubbler is placed in a water-filled pan, which is heated by a hot plate (VWR, Advanced Series 444-0592). We heat the water-filled pan to a higher temperature than the required vapor temperature in the copper tube in order to guarantee that the vapor is always saturated. A glass slide at the outlet of the copper tube acts as a vapor shutter. Five different temperatures are simultaneously recorded, namely of the ambient air, of the sample, of the air/vapor right below the sample (where condensation occurs) and of the vapor right at the outlet of the copper tube (all these temperatures are measured with a PT1000 sensor). Moreover, we record the temperature in the water pan with a PT100 sensor. All the sensors are connected to a LucidControl RI8 USB logger. Prior to the experiments, all temperature sensors are calibrated (Fluke 9142).
With this setup, two different types of experiments can be carried out:
*Antifogging:* We place the corresponding sample onto the sample holder and start the temperature log. After 10 s, the shutter of the solar simulator is opened. After 2 min of sunlight exposure, we open the N$_2$ valve, with the vapor shutter still being closed. We let the system equilibrate for another 2 min, before we start the experiment. We expose the sample to the vapor flux for 5 s before we close the shutter for 20 s and repeat this sequence for 5-7 times, while the surface is recorded by the CMOS camera.
*Defogging:* We place a Peltier module (Laird MS2-192-14-20-11-18) onto the optical table (heat sink) with thermal paste. Next, we supply a voltage of 2.8 V, which results in a cold-side temperature of ~2 °C of the Peltier module under ambient conditions ($T_{amb} \approx 23$ °C, RH $\approx 55\%$). Then, we remove ambient condensate from the Peltier and place the sample onto the dry surface. After 2 min, we lift the sample and place it onto the sample holder, which is already exposed to the solar illumination. With the CMOS camera, we record the temporal evolution of the fog on the surface.

*Binarization*

We binarize all the frames (captured by the CMOS camera) of the partially fogged control and heating device-coated samples, to quantify the temporal evolution of the fog fraction *f*. Using a dark-field optical configuration, the condensed droplets of the fogged area backscatter the incident light and appear bright, whereas the transparent unfogged area remains dark. Binarization thresholds are set such that an unfogged (reference) surface has $f \cong 0$ and a completely fogged and white looking area is at $f \cong 1$. We manually initialized the binarization level to a reasonable threshold and accounted for hole-like patterns.

*Linear fit of antifogging experiments*

To determine the overpressure at which the samples are completely free of fog (*f* = 0) and fully fogged (*f* = 1), we performed a linear regression of the experimental data. As the fog fraction *f* ranges from 0 to 1, for the linear fit, we exclude all data points with mean fog fraction *f* < 0.05 and *f* > 0.95.

*Outdoor test*

The heating device was coated on the left lens of prescription grade eyewear (Rodenstock (Schweiz AG), with the same parameters as described above. In the experiments, we first exposed the glasses to sunlight for ~5 min. Next, the operator wore a face mask (FFP2) and carefully adjusted its nosepiece, such that the left and right spaces are practically the same. Finally, the operator wore the glasses, took a deep breath and exhaled, while recording (Samsung Galaxy S20, Canon EOS 5D Mark 4) the fog formation on the glasses. The glasses were tested at several locations. Global Horizontal Irradiance (GHI) data was taken from MeteoSwiss, and humidity and temperature data taken from MeteoSwiss or timeanddate.de.

*Supplementary Note 1: Sample temperature effect on nucleation thermodynamics*

Starting from classical nucleation theory, we calculate the change of the Gibb's free energy for a spherical nucleus during homogenous nucleation as a function of its radius *r* as [42]:

$$\Delta G_{hom} = -\left[\frac{4}{3}\pi r^3 n_L k T_s ln\left(\frac{p}{p_{L(T_s)}}\right) - 4\pi r^2 \gamma_{LV}\right], \qquad (S1)$$

where $n_L$ (= 3.35x10$^{28}$ m$^{-3}$) is the number of water molecules per unit volume, *k* the Boltzmann constant, *p* the water vapor pressure of the environment, $p_L$ the saturation vapor pressure over a plane surface of water at temperature *T* (here the sample temperature $T_s$), and $\gamma_{LV}$ (= 72.75x10$^{-3}$ N m$^{-1}$) is the surface tension of liquid water in air. *p* and $p_L$ can be computed using the Arden-Buck equation [58]. For *p*, we assume saturated vapor at a temperature corresponding to the human body/breath impinging on the sample, i.e. relative humidity *RH* = 100% and *T* = 36°C, mimicking a real-world condition that we recently experience daily when wearing glasses and a face mask. At the same time, $p_L$ varies as a function of the sample temperature $T_s$. Finally, in order to account for the presence of an insoluble, flat surface which promotes heterogeneous nucleation, equation (S1) can be modified as [42]:

$$\Delta G_{het} = -\left[\frac{4}{3}\pi r^3 n_L k T_s ln\left(\frac{p}{p_{L(T_s)}}\right) - 4\pi r^2 \gamma_{LV}\right] * f(m), \qquad (S2)$$

where $f(m) = \frac{1}{4}\left(2 - 3m + m^3\right)$ is a function [44] of m = *cos*($\vartheta$), i.e. the cosine of the contact angle $\vartheta$ (= 80°) of water on the flat surface.

The critical radius *r\** required for a nucleus to overcome in order to grow into a larger droplet can be determined by setting $\partial \Delta G/\partial r$ = 0, which yields [42]:

$$r^* = \frac{2\gamma_{LV}}{n_L k T_s ln(p/p_{L(T_s)})}. \qquad (S3)$$

The corresponding critical Gibb's free energy at $r = r^*$ can be derived by plugging equation (S3) into (S2) and is [42]:

$$\Delta G^* = \frac{16\pi\gamma_{LV}^3}{3*[n_L kT_s ln(p/p_L(T_s))]^2} * f(m). \qquad (S4)$$

Finally the nucleation rate ($J$), i.e. the probability of a nucleation event to occur, per unit area of surface, is given by [42]:

$$J \approx J_0 * exp\left(\frac{-\Delta G^*}{kT_s}\right), \qquad (S5)$$

where the kinetic coefficient $J_0$ can be determined as [42]:

$$J_0 \approx \left[\frac{p}{(2\pi mkT)^{0.5}}\right] \pi r^2 n'(I). \qquad (S6)$$

Here, $n'(I)$ represents the density of adsorbed molecules on the nucleating surface. For condensation processes, the kinetic coefficient can be approximated[41,43] as $J_0 \approx 10^{29}$ m$^{-2}$ s$^{-1}$

Figure 8 depicts the nucleation rate $J$ as a function of the sample temperature $T_s$ and illustrates how $J$ significantly decreases with the slightest elevation of the sample temperature $T_s$. The inverse exponential dependence on $T_s$ in equation (S5) leads to a dramatic reduction of the nucleation rate. For instance, an increase of $T_s$ from 20°C to 22°C leads to a reduction of $J$ by 5 orders of magnitudes. In particular, a small increase of $T_s$ leads to exponential decrease of the nucleation rate. This demonstrates the significant impact of the heating device for anti-/defogging applications due to its photothermal properties. Ambient conditions are set to a relative humidity $RH$: 100%, $T$ = 36°C, representing a saturated human breath.

_Supplementary Note 2: Characterization of heating device_

We performed a parametrical study by varying the deposited gold layer (Au) thickness, in order to determine the thickness parameter where the layer has the best overall absorption. For this, we deposit various thicknesses of Au (for thickness parameters, see "Methods" above) onto a 3 nm layer of TiO$_2$. The Au layer is then covered with another 3 nm layer of TiO$_2$ (see "Methods"). Next, we measure the transmissivity ($\tau$) and reflectivity (R) of all samples (Jasco, V770 with a ILN-925 integrating sphere at normal incidence) shortly after deposition, and determine the absorptivity ($\alpha$ = 1 - $\tau$ - R over the wavelengths $\lambda$ = 200-2000 nm.

Figure 9 depicts the optical properties of different Au layer thicknesses, embedded in a 3 nm TiO$_2$ top and bottom layer. The absorptivity of the Au layer reaches its maximum at a thickness of 4.75 nm and decreases with further increasing thickness due to the enhanced reflectivity. The arrow indicates the trend with increasing Au film thickness. That is, figure 9 shows how increasing the thickness of Au reduces $\tau$ and increases R above the plasmon frequency (~580 nm). Interestingly, $\alpha$ increases up to 4.75 nm of Au, where the absorptivity reaches a flat, broadband behavior in the NIR. Increasing the Au film thickness further leads to a decrease in $\alpha$ due to the increased R (optically thick, metallic behavior), indicated by the arrow in Figure 9.

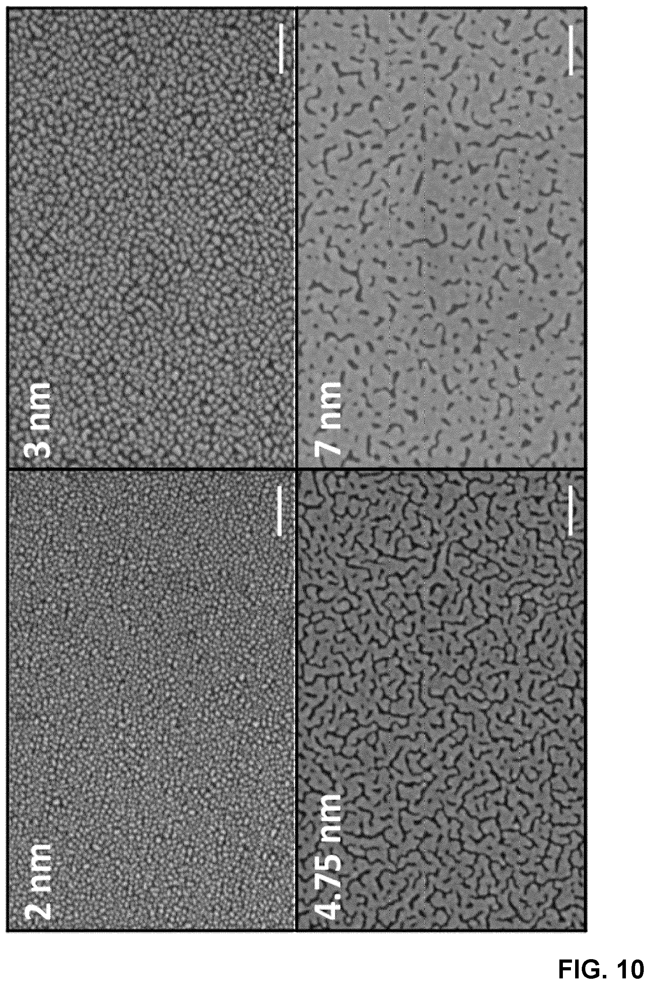

The percolation limit is further confirmed with scanning electron microscopy (SEM, Hitachi SU8230). Scanning electron microscope images of different Au thicknesses are shown in Figure 10. In these SEM images the thickness parameters are 2 nm, 3 nm, 4.75 nm and 7 nm. Below the percolation threshold (2 and 3 nm), Au nanoparticles form single, unconnected islands. The interconnection between the individual clusters is reached at 4.75 nm. That is, at the threshold (4.75 nm), the islands interconnect. Above the threshold (7 nm), Au starts to form a continuous layer. Scale bars (A), (B), (C), (D): 100 nm.

In addition, we also determined the electrical percolation limit by four-point probe measurements (Jandel Universal Probe Station) to determine the electrical resistance $R_{el}$ of the Au layer of different Au thickness parameters. The current is set to 4.53 x 10$^{-6}$ A and increased to 4.53 x 10$^{-5}$ A and 4.53 x 10$^{-4}$ A, while the voltage is measured at different spots on each sample. Figure 11 shows the resistance of the Au layer on a logarithmic scale, where each circled dot represents a data point. For a continuous layer (30 nm Au), the Au layer is very conductive (metallic), the electrical resistance increases towards the percolation threshold, until it becomes an open circuit (dielectric). We also measured $R_{el}$ for thickness parameter $d_{Au}$ = 2 nm, 3 nm, 4 nm, 4.25 nm and 4.5 nm, however $R_{el}$ increases to infinity, i.e. the films are not electrically conductive. Consequently, thin films with thickness $d_{Au}$ act as conductors down to the percolation limit. At thickness parameter $d_{Au}$ =4.75 nm, the electrical resistance $R_{el}$ increases by several orders of magnitudes, indicating the dielectric behavior and that the individual Au particles are not electrically connected.

We further quantify the angular dependence of the transmissivity of the as fabricated heating device coating (4.75 nm Au thickness parameter with 3 nm thickness parameter $TiO_2$ bottom and top layer) up to 45° incident angle. Figure 12 illustrates that there is no dependency of $\tau$ on the incident angle of the incoming light. The distortion between 600-900 nm occurs due to a grating change of the UV/VIS NIR spectrometer.

*Supplementary Note 3: Contact angle measurements*

We measure the advancing ( $\vartheta_a^*$ ) and receding ( $\vartheta_r^*$ ) contact angles for an uncoated substrate (fused silica, $SiO_2$), the control sample ($TiO_2$ coated fused silica) as well as the metamaterial, i.e. heating device coating. The results are summarized in Figure 13 for all samples, where we carry out a total of 5 measurements (N = 5) for each sample. It is important that $\vartheta_a^*$ and $\vartheta_r^*$ are similar for the control and heating device coating to exclude any effects of wettability on the anti-/defogging behavior during the experiments. Due to the high surface energy of $SiO_2$ compared to $TiO_2$, the contact angles for $SiO_2$ indicate its hydrophilic properties ( $\vartheta_a^* = 34.6°$, $\vartheta_r^* = 17.9°$ ). In contrast, the contact angles for the control surface ( $\vartheta_a^* = 82.6°$, $\vartheta_r^* = 15.3°$ ) and the heating device coating ( $\vartheta_a^* = 75.5°$, $\vartheta_r^* = 18.0°$ ) align closely.

*Supplementary Note 4: Transient heat transfer model*

We estimate the temperature evolution of the sample with the metamaterial, i.e. heating device coating on top under solar illumination with a transient heat transfer model:

$$\frac{d}{dt}\left(mcT_s(t)\right) = A\overline{\alpha}_{solar}I_0 - 8A\varepsilon\sigma(T_{amb})^3 * (T_s(t) - T_{amb}) - 2Ah_{conv}(T_s(t) - T_{amb})$$

$$(S7)$$

Here, m is the mass, $c$ (= 750 J kg K$^{-1}$) the specific heat capacity, $T_s$ the sample temperature, $A$ the surface area of the sample (22x22 mm), $\overline{\alpha}_{solar}$ the mean absorptivity in the solar ($\lambda$ = 200-2000 nm) spectrum and $\varepsilon$ ($\approx$1) the thermal emissivity of the sample. $I_0$ represents the solar irradiance (varied from 600-1000 W m$^{-2}$), where we used the AM 1.5 Global (ASTMG173) reference spectrum. $T_{amb}$ is the ambient temperature (set constant to 25 °C) and $h_{conv}$ the convective heat transfer coefficient. To estimate the Biot number, we set $h_{conv} \approx$ 10 W m$^{-2}$ K$^{-1}$ to a reasonable value [57], and validate this assumption later on with experiments (see below). With this, we determine the Biot number over the thickness of the substrate as $Bi = \frac{h_{conv} * \left(\frac{d}{2}\right)}{\lambda_{cond}} \approx 0.025 \ll 1$. Here, d = 0.5 mm represents the sample thickness and $\lambda_{cond} \approx$ 1 W m$^{-1}$ K$^{-1}$ the thermal conductivity of the substrate (fused silica). Even for larger convective heat transfer coefficients, such as $h_{conv} \approx$ 30 W m$^{-2}$ K$^{-1}$, $Bi \approx$ 0.075 « 1.

As $I_0$ is uniform over the sample area, (collimated light source, validated with a thermal power sensor (Thorlabs S425C and PM100USB controller)) and $Bi$ « 1, the sample can be assumed to be isothermal.

While the term on the left side in equation (S7) expresses the rate of change in internal energy of the sample, the right hand side of the equation contains a term for the absorbed solar heat, plus it accounts for reradiation and convective heat losses to ambient. As the temperature increase of the sample above ambient is less than 10 °C, i.e. $dT = (T_{s,eq} - T_{amb})$ « $T_{amb}$, we linearize the radiative heat transfer term using a Taylor series expansion and dropping all higher order terms, avoiding the quartic dependence on $T_s$. Solving equation (S7) leads to the transient sample temperature:

$$T_s(t) = T_{amb} + \frac{C_1}{C_2}\left(1 - e^{-C_2 t}\right), \qquad\qquad (S8)$$

where

$$C_1 = \frac{A\overline{\alpha}_{solar}I_0}{mc} \text{ and } C_2 = \frac{8A\varepsilon\sigma T_{amb}^3 + 2Ah_{conv}}{mc}.$$

In order to verify our initial educated guess of $h_{conv}$, we employ a lumped sum capacitance model to determine $h_{conv}$ experimentally. For this, the sample is first illuminated with sunlight until $T_s$ reaches steady state ($T_s = T_{s,eq}$). Next, we turn off the solar simulator and record the temperature decay of the sample for three experimental runs, from which we determine the mean value. As the solar heat term in equation (S7) vanishes for these experiments, the solution simplifies to:

$$T_s(t) = T_{amb} + \left(T_{s,eq} - T_{amb}\right) * e^{-C_2 t}. \qquad (S9)$$

Equation (S9) allows us to fit our experimental data for the temperature decay measurements by varying $h_{conv}$ (and consequently $C_2$). We find an optimal fit for $h_{conv} \approx 9.15$ W m$^{-2}$ K$^{-1}$, which validates our initial guess. Hence, we take this value as a premise to fit the model to our experimental data ($8.5 \leq h_{conv} \leq 10.5$ W m$^{-2}$ K$^{-1}$) of the temperature increase of the sample under solar illumination in Fig. 2.

*Supplementary Note 5: Defogging behavior*

The defogging behavior of the control sample and the coating are further illustrated in Figure 14.

Figure 14A shows an exemplary result of the temporal evolution of the fog fraction f, where the heating device coating on a SiO$_2$ substrate and the control sample are illuminated with 1 sun (for experimental procedure and binarization, see Methods). The onset of defogging starts much earlier for the metamaterial, i.e. heating device -coated sample due to the higher surface temperature, as recognizable in Figure 14A. That is, the experimental results show that the fog fraction f on the heating device coating on a SiO$_2$ substrate decreases much faster than on the control sample.

Figure 14B demonstrates the qualitative behavior (i.e. the recorded frames) by means of top-view image sequences of the fogged area of the two exemplary experimental runs shown in A) at a fog fraction of f = 0.75, 0.5 and 0.25, respectively. The dashed rectangle indicates the considered sample area to compute f. In order to defog 75% of the surface, the heating device-coated sample needs 107 seconds, whereas the control sample reaches this value after 342 seconds (over 3 times longer). That is, the defogging front moves similarly for the heating device coating on a SiO$_2$ substrate as well as the control sample, but at significantly different speeds. Both experiments were carried out under a solar illumination of 1000 W m$^{-2}$, $T_{amb} \approx 23$ °C, RH $\approx 55\%$.

Figure 14C summarizes the defogging time $t_d$ (i.e. time required to reach f = 0.05) under various solar illumination, demonstrating a 2 to 3-fold improvement of the defogging performance of our coating compared to the control sample. In fact, Figure 14C depicts the defogging time $t_d$, i.e. time required until < 5% of the sample is covered with fog. Scale bars B): 5 mm.

*Supplementary Note 6: Outdoor tests of heating device-coated vision glasses*

We tested the real-world feasibility of our heating device-coated vision glasses at various locations and under different conditions. As follows from figure 15, the left lens of the glasses contains the heating device coating, whereas the right lens is uncoated.

Figure 15A demonstrates an image of the first experiment on a terrace of a building on a sunny fall day ($T_{amb} \approx 12$ °C, $RH \approx 70\%$, $I_0 = 491$ W m$^{-2} \approx 0.5$ sun). Figure 15B visualizes how the heating device-coated lens outperforms the uncoated one on a sunny winter day ($T_{amb} \approx 4$ °C, $RH \approx 46\%$, $I_0 \approx 339$ W m$^{-2} \approx 0.5$ sun) and prevents fogging. Figure 15C demonstrates how the effect is also clearly present at a different location ($T_{amb} \approx 4$ °C, $RH \approx 80\%$, $I_0 \approx 212$ W m$^{-2} \approx 0.5$ sun).

We further assessed the photothermal performance of our vision glasses by outdoor experiments, see figure 16. For this, we recorded the temperature of both lenses for 1 hour with a T-type thermocouple (Omega HSRTC-TT-T-36-36) connected to a thermocouple logger (Lutron TM-947SD) on a sunny fall day. Moreover, we accessed the Global Horizontal Irradiance ($I_0$) during the experimental run (retrieved from MeteoSwiss, pyranometer from Kipp&Zonen, CM21).

Figure 16A shows a photograph of the experimental setup and Figure 16B shows the temperature evolution of the uncoated (control, dark grey) and heating device-coated lens (light grey). Shown is also the global solar irradiance $I_0$. The coating consistently elevates the temperature of the lens compared to the uncoated one. That is, Figure 16B demonstrates how the heating device-coated lens consistently has a higher temperature than the uncoated lens, whereas $I_0 \approx 525$ W m$^{-2}$ during the experiment (corresponding to ~0.53 sun). Scale bar A): 2 cm.

Hence, even under realistic outdoor conditions, $T_s$ of the heating device-coated lens is consistently higher than of the uncoated lens.

*Supplementary Note 7: Heating device coating on flexible and portable substrates*

We tested the optical properties of the ultrathin (~10 nm) heating device, when deposited on a compliant substrate (overhead transparency, A4, folex®). We segment the substrate into pieces of 7x7 cm squares and deposit our coating on it. Next, we segment the samples further into 3.5x3.5 cm squares and measure transmissivity $\tau$ and reflectivity R

(UV/VIS NIR spectrometer, Jasco, V770) with a ILN-925 integrating sphere at normal incidence, and compute the absorptivity as $\alpha = 1 - \tau - R$.

To this end, first, we measure all properties of the flat, unbent sample, and the results are shown in Figure 17A. Figure 17A depicts the transmissivity $\tau$ and absorptivity $\alpha$ of substrate (overhead transparency) with the coating before (solid lines) and after (dashed lines) 300 bending cycles. Also shown is the transmissivity for a curved sample. Clearly, as Fig. 17A illustrates, the optical properties of the foil with the heating device coating are not affected by the bending effect. Due to its ultrathin dimensions and porous nature, the much larger radius of curvature of the bending process does not cause mechanical damage to the coating. In addition, the optical properties of the coating are not affected, because the scale of the random arrangement of the photothermal material (a few hundred nanometers) is also much smaller than the bending radius of curvature. Hence, the heating device coating can be deposited on any portable, flexible/foldable material and be applied retrospectively on various transparent surfaces such as windows, displays, or eyewear.

Next, we determine $\tau$ of a sample that is bent at 40°. Figure 17B depicts an image of the curved sample (40°) presented in Figure 17A. Finally, we manually fold the sample 300 times sequentially, such that each time the two ends of the substrate touch each other (Figure 17C) and measure the optical properties again. That is, the photography depicted in Figure 17C shows the completely bent sample during the bending cycle. We folded the sample manually for 300 times and remeasured its optical properties (see Figure 17A)).

We were further able to show the utility of the heating device as a transportable defogging foil. We taped a piece of an overhead projector transparency, coated with the heating device, on a fused silica wafer. Next, we exposed the wafer with the coating to sunlight in the Swiss Alps at an irradiance of $I_0 \approx 100\text{-}200 \text{ W m}^{-2}$ for 2 minutes. We subsequently exhaled several times onto the wafer. The warm breath acts like a saturated stream of vapor at body temperature and impinges on the uncoated glass (at ambient temperature) as well as on the heating device-coated overhead projector foil (at an apparently increased temperature above ambient due to the photothermal effect). We then recorded the visibility of the background. As shown in Fig. 17D, after 10 s, while the wafer is still covered with fog, the coated foil regains its full visibility. Hence, the compliant substrate/foil can be mounted on any existing glass to prevent fog formation or speed up the defogging ($I_0 \approx 100\text{-}200 \text{ W m}^{-2}$). Scale bars B), C): 5 mm, D): 2 cm.

Figures 18A shows a cross-sectional rendering of the coating and illustrates a photothermal element made of gold comprised of a percolation structure essentially at the percolation threshold and embedded between two dielectric elements made of $TiO_2$ on a substrate ($SiO_2$). Figure18B illustrates a scanning transmission electron microscopy image (top) and energy dispersive x-ray spectroscopy mapping (bottom) of the heating device. The actual Au thickness is ~6-7 nm (at a thickness parameter of $d_{Au} = 4.75$ nm). The photothermal material made of gold (dark grey) is enclosed between two ~2-3 nm (at a thickness parameter of $d_{TiO2} = 3$ nm) $TiO_2$ layers on top of the $SiO_2$ substrate. Scale bar B): 10 nm.. The actual Au thickness is ~6-7 nm (at a nominal thickness $d_{Au} = 4.75$ nm). The percolating Au layer (dark grey) is enclosed between two ~2-3 nm (at a nominal $d_{TiO2} = 3$ nm) $TiO_2$ layers on top of the $SiO_2$ substrate. Scale bar B): 10 nm. Figure 18C illustrates the angular dispersion relation of the absorptivity for radiation incidence angles $\theta$ up to 30° to the normal of the heating device, showing that the absorptivity is preserved for oblique illumination.

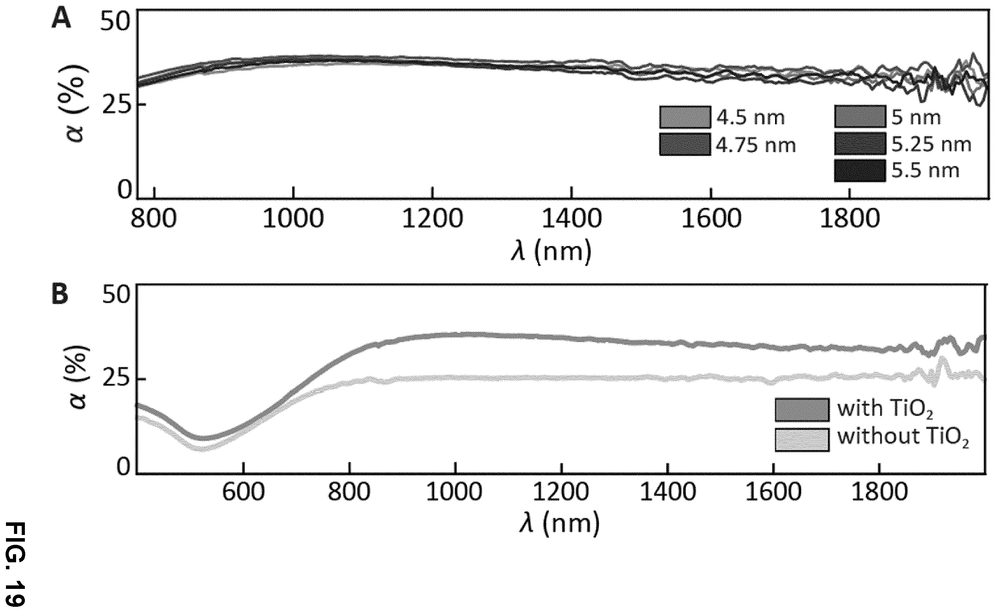

Figures 19A and 19B show graphs depicting the broadband absorptivity in the near-infrared spectrum of a heating device comprising a photothermal element in the form of gold. As follows from Figure 19A, the broadband absorptivity in the near-infrared spectrum does not change markedly in the vicinity of the percolation threshold (thickness parameter $d_{Au} = 4.75$ nm), rendering the heating device robust against slight fabrication errors. Figure 19B depicts absorption spectra of the heating device comprising a photothermal element in the form of gold with and without a top dielectric, shifting element on top made of ($TiO_2$). As follows from these spectra, the heating device comprising the photothermal element made of an Au layer embedded in a dielectric element below ($TiO_2$) and a dielectric shifting element above ($TiO_2$) exhibits a larger $\alpha$ and the shifting element shifts the minimum wavelength of the range of interest towards a lower wavelength, as described above

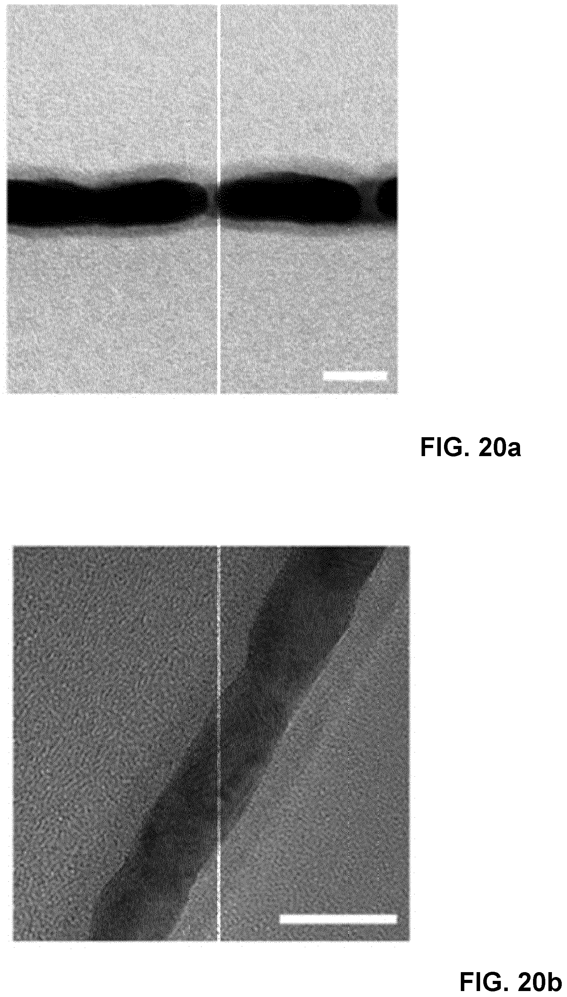

Figure 20A shows a bright field SEM image of the heating device comprising a photothermal structure at the percolation threshold embedded between two dielectric elements. The photothermal material is Au (black) and is uniformly surrounded by the dielectric elements ($TiO_2$ layers, dark gray). The $SiO_2$ substrate is at the bottom, whereas the top is covered with carbon to ease imaging (both light gray). Figure 20B shows a high resolution transmission electron microscopy. The actual thickness of the photothermal element in the form of the Au layer (for a thickness parameter of $d_{Au} = 4.75$ nm) is estimated to be ~6-7 nm, for $TiO_2$ ~2-3 nm (for a thickness parameter of $d_{TiO2} = 3$ nm). The overall roughness of the structure remains within a few nanometers and the photothermal element (Au layer) is entirely embedded between the dielectric elements ($TiO_2$ on both sides).

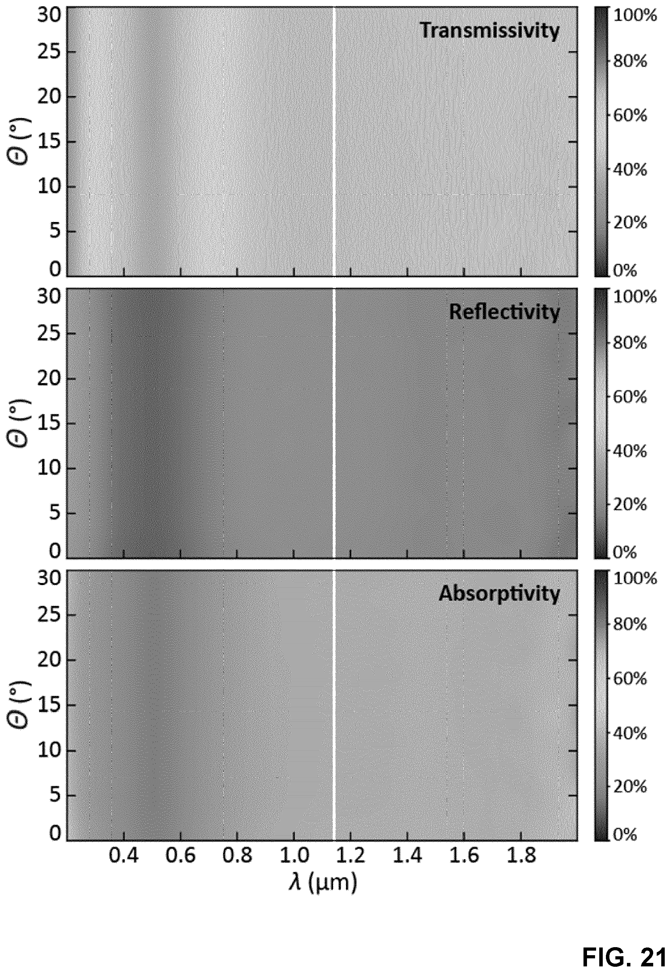

Figure 21 depicts the angular dependence of the optical properties of the above described heating device. Incident radiation measurements at an angle $\theta$ to the normal of the heating device are preformed. Measured transmissivity and reflectivity are displayed on the top and middle panels, respectively. From these, the absorptivity is deduced and presented on the bottom panel. The heating device, much thinner than the corresponding incident wavelengths, exhibits little angular dispersion in both its transmissivity and reflectivity. As a result, the absorptivity is nearly constant between 800-2000 nm and $\theta = 0\text{-}30°$.

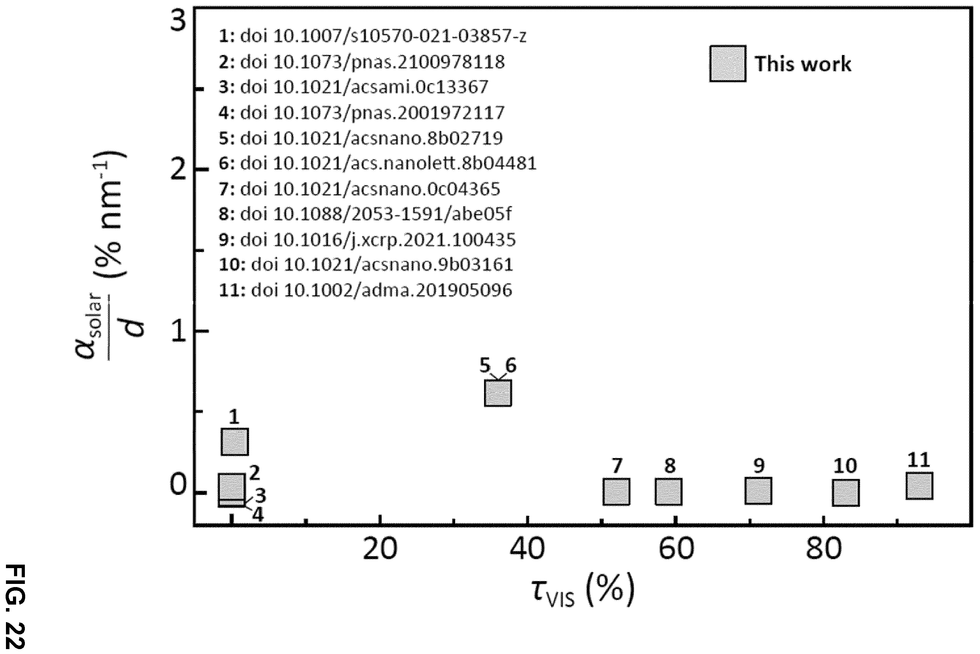

Figure 22 shows a comparison of the above described heating device according to the invention with state-of-the-art photothermal antifogging coatings, as a function of visible transparency $\tau_{VIS}$ and the solar absorption $\alpha_{solar}$ per thickness d (in nm) of the materials. For $\alpha_{solar}$, values are taken based on text values provided in the source or, if not directly available, through direct extraction from figures and subsequent numerical integration and convolution with the solar AM 1.5 Global (ASTMG173) reference spectrum. In cases where data for absorption or transparency is missing, the reflectivity is assumed to be 0, hence favoring the state of the art. For the thickness, values are taken from the text where possible. In cases where no overall thickness is reported, we either estimated it from a provided cross-sectional SEM image, or a combination of paper implications.

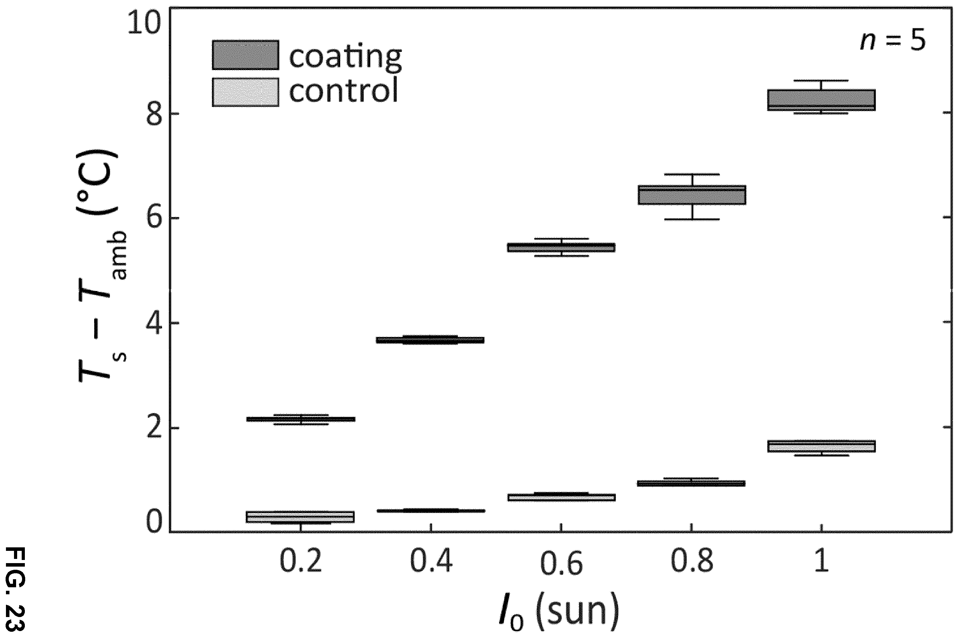

Figure 23 shows photothermal results at low levels of solar irradiance. Box plot ($n$ = 5) of steady-state temperature increase of the heating device according to the invention and the control samples under different levels of solar irradiance $I_0$, including 0.2 and 0.4 suns, showing the effectiveness of the heating device according to the invention even at low $I_0$. Box plots contain the median line, the upper and lower quartile and whiskers (1.5 times the interquartile range). We measured the temperature increase of the heating device and a control sample (details above) both at sample temperature $T_s$. Figure 23 demonstrates that even at these low solar irradiance levels, the heating device strongly outperforms the control. At 0.2 suns, the control shows a mean temperature increase of 0.36 °C, whereas the coating reaches a 2.2 °C temperature increase. At 0.4 suns, the control warms up by 0.41 °C, whereas the heating device reaches a steady-state temperature of 3.7 °C above ambient temperature $T_s$.

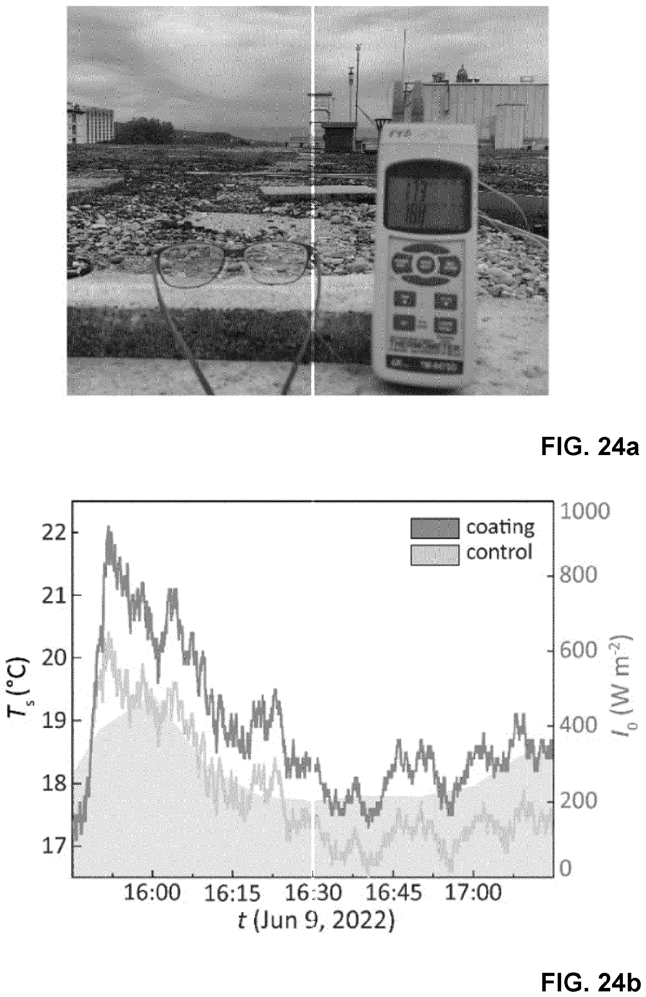

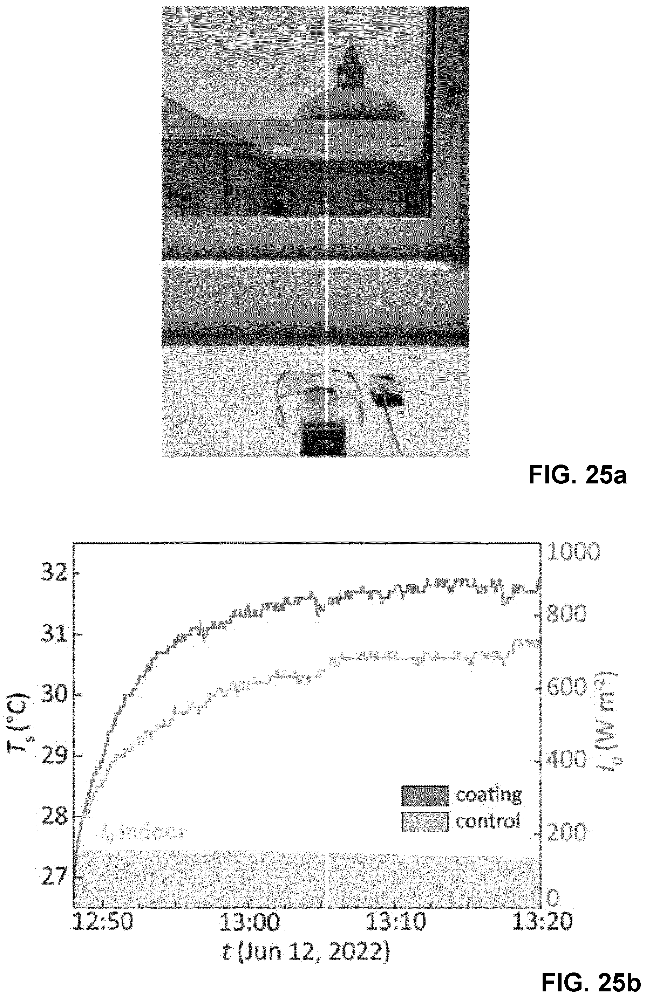

Figures 24A and 24B show outdoor tests of the heating device with a pair of prescription glasses. Photothermal performance tests were performed on a day with cloud cover, demonstrating that the heating device performs efficiently even under cloudy and windy conditions. We recorded both the temperature of the uncoated lens (control, gray) and the lens being coated with the heating device according to the invention. Shown is also the solar irradiance $I_0$. We recorded the temperature of both lenses with a T-type thermocouple (Omega HSRTC-TT-T-36-36) connected to a thermocouple logger (Lutron TM-947SD). Moreover, we accessed the Global Horizontal Irradiance ($I_0$) during the experimental run (retrieved from MeteoSwiss, pyranometer from Kipp&Zonen, CM21). Figures 25A and 25B show indoor tests of the heating device according to the invention being arranged on a pair of prescription glasses that are arranged behind triple-glass windows. We recorded both the temperature of the uncoated lens (control, gray) and the lens being coated with the heating device according to the invention. Shown is also the solar irradiance $I_0$. Even though the windowpane strongly reduces the transmitted solar energy, the heating device according to the invention still outdoes the control even at low levels of $I_0$. $I_0$ is recorded with a thermal power sensor (Thorlabs S425C and PM100USB controller)

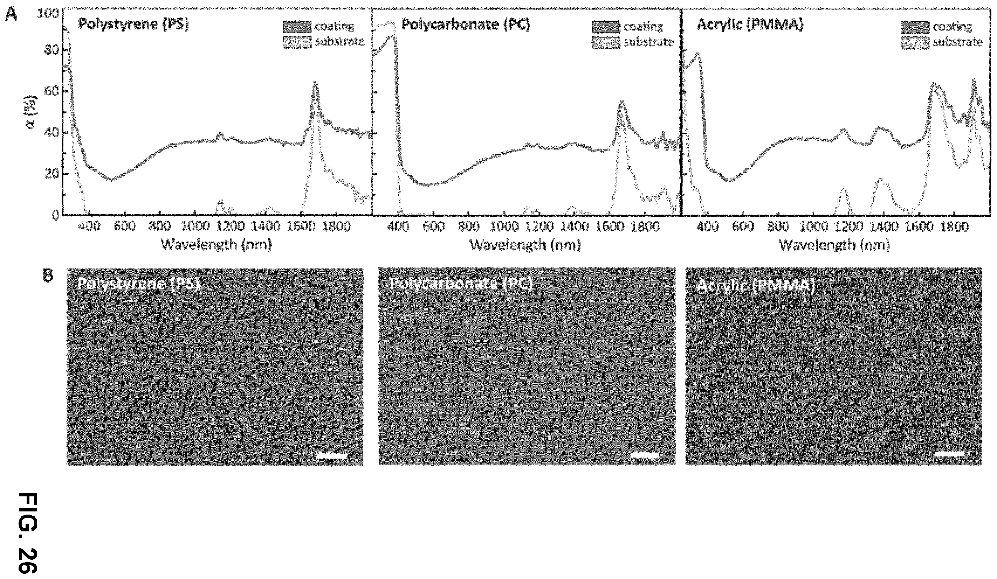

Figure 26 shows the performance of heating devices according to the invention being arranged on various polymericsubstrates. In particular, the heating device was deposited onto polysterene (PS), polycarbonate (PC), acrylic glass (PMMA) aside of the abovementioned deposition on $SiO_2$ and polyester. Before deposition, the substrates were exposed to oxygen plasma for 2 min (Oxford Instrument, Plasmalab 80 Plus). As these substrates are inherently smooth, we used atomic force microscopy to determine the roughness of all surfaces. The root mean square (RMS) roughness of PC is 4.56 nm, 10.83 nm of PMMA and 17.78 nm of PS. While these numbers represent the RMS roughness over a 20 x 20 $\mu$m spot size, RMS roughness values over local areas (0.9 x 0.9 $\mu$m) of the substrates can be higher (i.e. 17.20 nm for PC and 52.80 nm were measured for PMMA).. Panel A) depicts the absorption $\alpha$ of a bare polymeric (gray) and the substrate being coated with the heating device, confirming that the heating device comprises of a photothermal material which is comprised of a percolating structure at or essentially at the percolation threshold. Panel B) depicts SEM micrographs of the as fabricated heating devices (without $TiO_2$ top layer for ease of imaging), additionally confirming photothermal material is comprised of a percolating structure at or essentially at the percolation threshold.

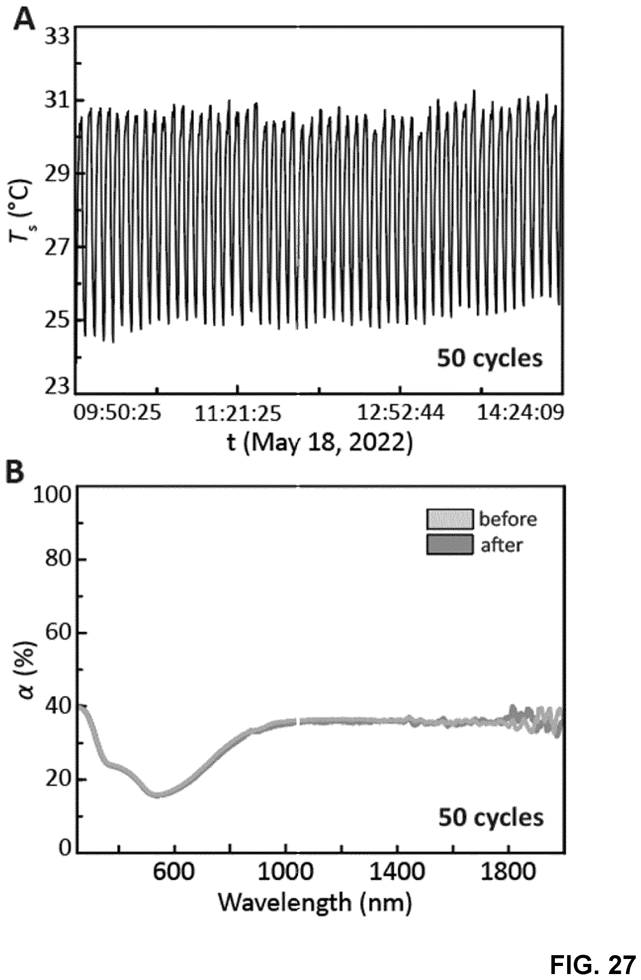

Figure 27A and 27B show thermal durability and wear resistance tests. In order to assess the effect of repeated and prolonged heating on the optical properties of the heating device and thus the photothermal performance, we repeatedly heat (~1 sun irradiance) and cool the heating device for 50 times. The heating devices used in all experiments were fabricated over 6 months ago, and have been stored under ambient air during the entire period before the experiments. Figure 27A shows the Evolution of $T_s$ under ~1 sun exposure and for 50 cycles, indicating no performance deterioration. Figure 27B shows the absorption $\alpha$ before (gray) and after (dark grey) the 50 temperature cycles, showing no degradation.

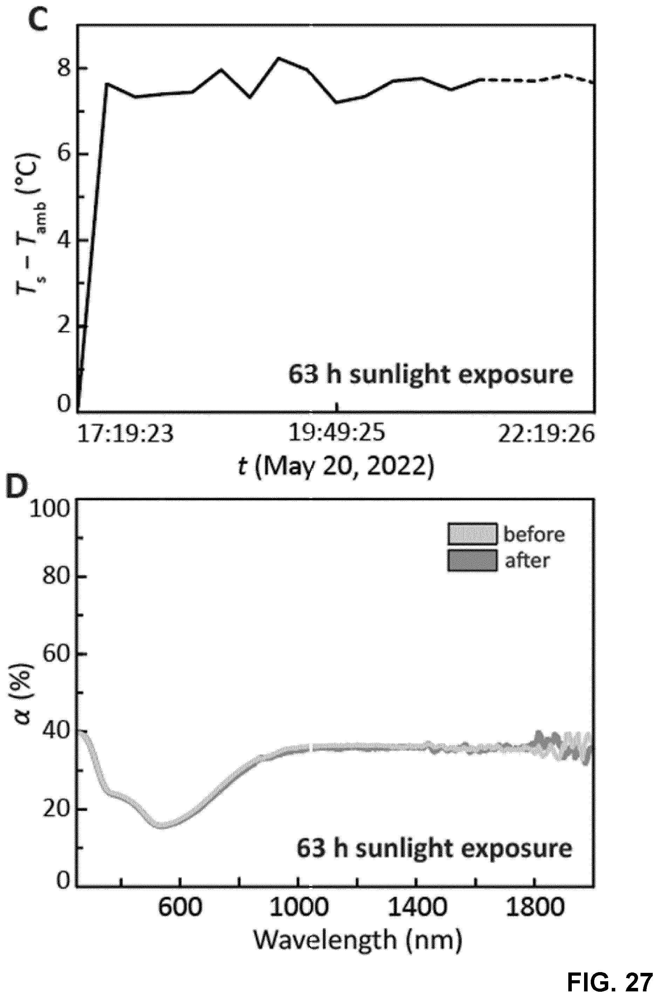

Figures 27C and 27D show thermal durability tests in which we expose the heating device to ~1 sun irradiance for 63h and measured its absorption before and after. C) Elevation of $T_s$ above $T_{amb}$ during the first 5h out of 63h sunlight exposure test. D) absorption $\alpha$ before (gray) and after (dark grey) the 63h sunlight exposure experiment.

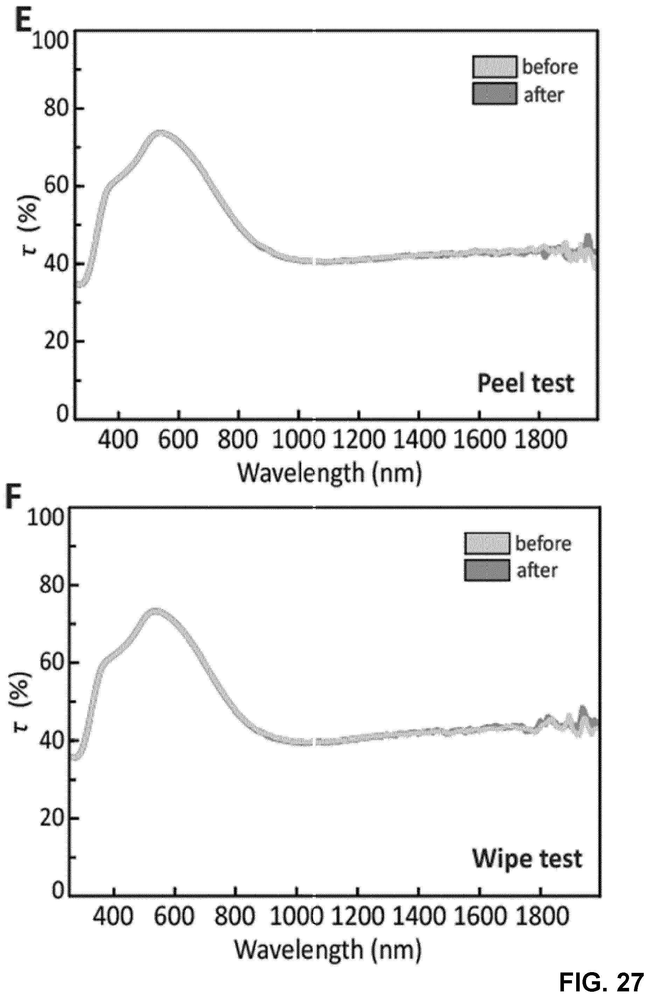

Figures 27E and 27F show wear resistence tests, wherein the transmission $\tau$ of the heating device before and after a E) peel, F) wipe test is measured. In the peel test (adapted from ASTM D3330 standard / method A), a pressure sensitive tape (3M™ VHB™) is firmly applied onto the heating device and peeled off at a 180° angle, i.e. parallel to the heating device. In a wipe test, the heating device is wiped (adapted from DIN 30643) 50 times with a microfiber cloth under a realistic pressure. As follows, the heating device according to the invention retains its optical properties after both wear tests.

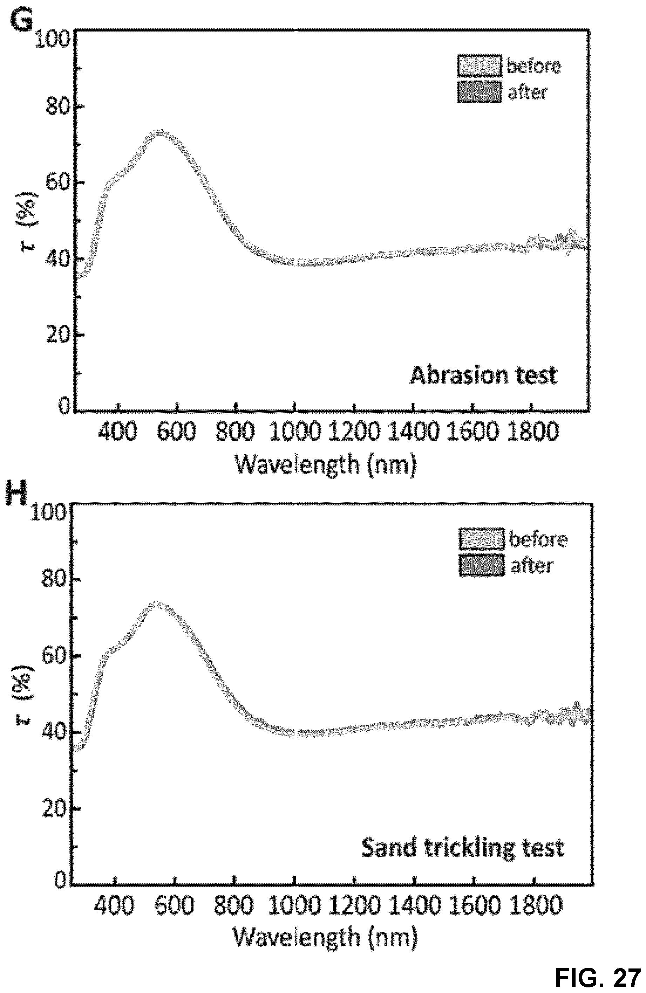

Figures 27G and 27H show wear resistence tests, wherein the transmission $\tau$ of the heating device before and after a G) abrasion and H) sand trickling wear resistance test is measured. For the abrasion test (adapted standard test method ASTM F735-94), the heating device is placed in a small dish and covered with quartz sand (0.1-0.8 mm grain size). The dish is placed on a mixer (heidolph Multi Reax) and shaken for 1 minute at 1000 rpm. A sand trickling test (adapted from ASTM F735-94) assesses the resistance of the heating device against shock. Quartz sand (grain size 0.1-0.8 mm) falls through a tube (5 cm inner diameter) through a mesh (~1.5 mm mesh width) onto the coating. The fall height is 35-40 cm. As follows, the heating device according to the invention retains its optical properties after both wear tests.

*References*

1. Yoon, J. et al. Wet-Style Superhydrophobic Antifogging Coatings for Optical Sensors. Advanced materials (Deerfield Beach, Fla.) 32, e2002710; 10.1002/adma.202002710 (2020).

2. Howarter, J. A. & Youngblood, J. P. Self-Cleaning and Next Generation Anti-Fog Surfaces and Coatings. Macromol. Rapid Commun. 29, 455-466; 10.1002/marc.200700733 (2008).

3. Durán, I. R. & Laroche, G. Current trends, challenges, and perspectives of anti-fogging technology: Surface and material design, fabrication strategies, and beyond. Progress in Materials Science 99, 106-186; 10.1016/j.pmatsci.2018.09.001 (2019).

4. Leach, R. N., Stevens, F., Langford, S. C. & Dickinson, J. T. Dropwise condensation: experiments and simulations of nucleation and growth of water drops in a cooling system. Langmuir: the ACS journal of surfaces and colloids 22, 8864-8872; 10.1021/la061901 (2006).

5. Sun, X., Hong, R., Hou, H., Fan, Z. & Shao, J. Thickness dependence of structure and optical properties of silver films deposited by magnetron sputtering. Thin Solid Films 515, 6962-6966; 10.1016/j.tsf.2007.02.017 (2007).

6. Lin, S. et al. Stretchable Anti-Fogging Tapes for Diverse Transparent Materials. Adv. Funct. Mater. 31, 2103551; 10.1002/adfm.202103551 (2021).

7. Cebeci, F. C., Wu, Z., Zhai, L., Cohen, R. E. & Rubner, M. F. Nanoporosity-driven superhydrophilicity: a means to create multifunctional antifogging coatings. Langmuir : the ACS journal of surfaces and colloids 22, 2856-2862; 10.1021/la053182p (2006).

8. Tzianou, M., Thomopoulos, G., Vourdas, N., Ellinas, K. & Gogolides, E. Tailoring Wetting Properties at Extremes States to Obtain Antifogging Functionality. Adv. Funct. Mater. 31, 2006687; 10.1002/adfm.202006687 (2021).

9. Nuraje, N., Asmatulu, R., Cohen, R. E. & Rubner, M. F. Durable antifog films from layer-by-layer molecularly blended hydrophilic polysaccharides. Langmuir : the ACS journal of surfaces and colloids 27, 782-791; 10.1021/la103754a (2011).

10. Walker, C. et al. Transparent Metasurfaces Counteracting Fogging by Harnessing Sunlight. Nano letters 19, 1595-1604; 10.1021/acs.nanolett.8b04481 (2019).

11. Howarter, J. A. & Youngblood, J. P. Self-Cleaning and Next Generation Anti-Fog Surfaces and Coatings. Macromol. Rapid Commun. 29, 455-466; 10.1002/marc.200700733 (2008).

12. Mouterde, T. et al. Antifogging abilities of model nanotextures. Nature materials 16, 658-663; 10.1038/nmat4868 (2017).

13. Chen, Y. et al. Transparent superhydrophobic/superhydrophilic coatings for self-cleaning and anti-fogging. Appl. Phys. Lett. 101, 33701; 10.1063/1.4737167 (2012).

14. Liu, M., Wang, S. & Jiang, L. Nature-inspired superwettability systems. Nat Rev Mater 2; 10.1038/natrevmats.2017.36 (2017).

15. Verho, T. et al. Mechanically durable superhydrophobic surfaces. Advanced materials (Deerfield Beach, Fla.) 23, 673-678; 10.1002/adma.201003129 (2011).

16. Faustini, M. et al. Hydrophobic, Antireflective, Self-Cleaning, and Antifogging Sol-Gel Coatings: An Example of Multifunctional Nanostructured Materials for Photovoltaic Cells. Chem. Mater. 22, 4406-4413; 10.1021/cm100937e (2010).

17. Mitridis, E., Lambley, H., Tröber, S., Schutzius, T. M. & Poulikakos, D. Transparent Photothermal Metasurfaces Amplifying Superhydrophobicity by Absorbing Sunlight. ACS nano 14, 11712-11721; 10.1021/acsnano.0c04365 (2020).

18. Cassie, A. B. D. & Baxter, S. Wettability of porous surfaces. Trans. Faraday Soc. 40, 546; 10.1039/TF9444000546 (1944).

19. Wenzel, R. N. RESISTANCE OF SOLID SURFACES TO WETTING BY WATER. Ind. Eng. Chem. 28, 988-994; 10.1021/ie50320a024 (1936).

20. Papadopoulos, P., Mammen, L., Deng, X., Vollmer, D. & Butt, H.-J. How superhydrophobicity breaks down. Proceedings of the National Academy of Sciences of the United States of America 110, 3254-3258; 10.1073/pnas.1218673110 (2013).

21. Xue, C.-H. et al. Fabrication of superhydrophobic photothermal conversion fabric via layer-by-layer assembly of carbon nanotubes. Cellulose 28, 5107-5121; 10.1007/s10570-021-03857-z (2021).

22. Liu, Y. et al. Robust Photothermal Coating Strategy for Efficient Ice Removal. ACS applied materials & interfaces 12, 46981-46990; 10.1021/acsami.0c13367 (2020).

23. Mitridis, E. et al. Metasurfaces Leveraging Solar Energy for Icephobicity. ACS nano 12, 7009-7017; 10.1021/acsnano.8b02719 (2018).

24. Li, W. et al. Transparent selective photothermal coatings for antifogging applications. Cell Reports Physical Science 2, 100435; 10.1016/j.xcrp.2021.100435 (2021).

25. Yin, X. et al. Integration of Self-Lubrication and Near-Infrared Photothermogenesis for Excellent Anti-Icing/Deicing Performance. Adv. Funct. Mater. 25, 4237-4245; 10.1002/adfm.201501101 (2015).

26. Neo, W. T., Cho, C. M., Shi, Z., Chua, S.-J. & Xu, J. Modulating high-energy visible light absorption to attain neutral-state black electrochromic polymers. J. Mater. Chem. C 4, 28-32; 10.1039/C5TC02883C (2016).

27. Oktem, G., Balan, A., Baran, D. & Toppare, L. Donor-acceptor type random copolymers for full visible light absorption. Chemical communications (Cambridge, England) 47, 3933-3935; 10.1039/c0cc04934d (2011).

28. Wu, D. & Chen, J. Broadening Bandwidths of Few-Layer Absorbers by Superimposing Two High-Loss Resonators. Nanoscale research letters 16, 26; 10.1186/s11671-020-03471-1 (2021).

29. Gao, H. et al. Plasmonic Broadband Perfect Absorber for Visible Light Solar Cells Application. Plasmonics 15, 573-580; 10.1007/s11468-019-01087-5 (2020).

30. Cao, T., Wei, C., Simpson, R. E., Zhang, L. & Cryan, M. J. Broadband polarization-independent perfect absorber using a phase-change metamaterial at visible frequencies. Scientific reports 4, 3955; 10.1038/srep03955 (2014).

31. Kiani, F. et al. Ultra-Broadband and Omnidirectional Perfect Absorber Based on Copper Nanowire/Carbon Nanotube Hierarchical Structure. ACS Photonics 7, 366-374; 10.1021/acsphotonics.9b01658 (2020).

32. Wu, S. et al. Superhydrophobic photothermal icephobic surfaces based on candle soot. Proceedings of the National Academy of Sciences of the United States of America; 10.1073/pnas.2001972117 (2020).

33. Zhang, H. et al. Solar anti-icing surface with enhanced condensate self-removing at extreme environmental conditions. Proceedings of the National Academy of Sciences of the United States of America 118;

10.1073/pnas.2100978118 (2021).

34. Han, M., Kim, B., Lim, H., Jang, H. & Kim, E. Transparent Photothermal Heaters from a Soluble NIR-Absorbing Diimmonium Salt. Advanced materials (Deerfield Beach, Fla.) 32, e1905096; 10.1002/adma.201905096 (2020).

35. Liu, N., Mesch, M., Weiss, T., Hentschel, M. & Giessen, H. Infrared perfect absorber and its application as plasmonic sensor. Nano letters 10, 2342-2348; 10.1021/nl9041033 (2010).

36. Fan, X., Ding, Y., Liu, Y., Liang, J. & Chen, Y. Plasmonic Ti3C2Tx MXene Enables Highly Efficient Photothermal Conversion for Healable and Transparent Wearable Device. ACS nano 13, 8124-8134; 10.1021/acsnano.9b03161 (2019).

37. Gaspar, D. et al. Influence of the layer thickness in plasmonic gold nanoparticles produced by thermal evaporation. Scientific reports 3, 1469; 10.1038/srep01469 (2013).

38. Ruffino, F., Torrisi, V., Marletta, G. & Grimaldi, M. G. Kinetic growth mechanisms of sputter-deposited Au films on mica: from nanoclusters to nanostructured microclusters. Appl. Phys. A 100, 7-13; 10.1007/s00339-010-5797-7 (2010).

39. Lassesson, A., Brown, S. A., van Lith, J. & Schulze, M. Electrical characterization of gold island films: A route to control of nanoparticle deposition. Appl. Phys. Lett. 93, 203111; 10.1063/1.3027463 (2008).

40. Jeffers, G., Dubson, M. A. & Duxbury, P. M. Island-to-percolation transition during growth of metal films. Journal of Applied Physics 75, 5016-5020; 10.1063/1.355742 (1994).

41. Fletcher, N. H. The Chemical Physics of Ice (Cambridge University Press, 2010).

42. Fletcher, N. H. The Physics of Rainclouds (Cambridge University Press, 1962).

43. Na, B. & Webb, R. L. A fundamental understanding of factors affecting frost nucleation. International Journal of Heat and Mass Transfer 46, 3797-3808; 10.1016/S0017-9310(03)00194-7 (2003).

44. Attinger, D. et al. Surface engineering for phase change heat transfer: A review. MRS Energy & Sustainability 1; 10.1557/mre.2014.9 (2014).

45. Qi, H. et al. Bioinspired Multifunctional Protein Coating for Antifogging, Self-Cleaning, and Antimicrobial Properties. ACS applied materials & interfaces 11, 24504-24511; 10.1021/acsami.9b03522 (2019).

46. Zhao, J., Meyer, A., Ma, L., Wang, X. & Ming, W. Terpolymer-based SIPN coating with excellent antifogging and frost-resisting properties. RSC Adv. 5, 102560-102566; 10.1039/C5RA21399A (2015).

47. Ezzat, M. & Huang, C.-J. Zwitterionic polymer brush coatings with excellent anti-fog and anti-frost properties. RSC Adv. 6, 61695-61702; 10.1039/C6RA12399F (2016).

48. Zhou, L. et al. Self-assembly of highly efficient, broadband plasmonic absorbers for solar steam generation. Science advances 2, e1501227; 10.1126/sciadv.1501227 (2016).

49. Wen, F. et al. Charge Transfer Plasmons: Optical Frequency Conductances and Tunable Infrared Resonances. ACS nano 9, 6428-6435; 10.1021/acsnano.5b02087 (2015).

50. Sobhani, A. et al. Narrowband photodetection in the near-infrared with a plasmon-induced hot electron device. Nature communications 4, 1643; 10.1038/ncomms2642 (2013).

51. Halas, N. Playing with Plasmons: Tuning the Optical Resonant Properties of Metallic Nanoshells. MRS Bull. 30, 362-367; 10.1557/mrs2005.99 (2005).

52. Saberi, A. A. Recent advances in percolation theory and its applications. Physics Reports 578, 1-32; 10.1016/j.physrep.2015.03.003 (2015).

53. Brouers, Clerc, Giraud, Laugier & Randriamantany. Dielectric and optical properties close to the percolation threshold. II. Physical review. B, Condensed matter 47, 666-673; 10.1103/PhysRevB.47.666 (1993).

54. Bohren, C. F. & Huffman, D. R. Absorption and scattering of light by small particles (Wiley, New York, Chichester, 1993 (1998[printing])).

55. Kolwas, K. & Derkachova, A. Impact of the Interband Transitions in Gold and Silver on the Dynamics of Propagating and Localized Surface Plasmons. Nanomaterials (Basel, Switzerland) 10; 10.3390/nano10071411 (2020).

56. P. B. Johnson and R. W. Christy. Optical Constants of the Noble Metals.

57. Moran, M. J. Fundamentals of engineering thermodynamics. 8th ed. (Wiley, Hoboken N.J., 2014).

58. Buck, A. L. New Equations for Computing Vapor Pressure and Enhancement Factor. J. Appl. Meteor. 20, 1527-1532; 10.1175/1520-0450(1981)020<1527:NEFCVP>2.0.CO;2 (1981).

LIST OF REFERENCE SIGNS

| | |
|---|---|
| 1 | heating device |
| 2 | photothermal element |
| 3 | electrical element |
| 4 | dielectric element |
| 5 | shifting element |
| 6 | antireflection element |
| 7 | carrier element |
| 8 | top side |
| | |
| E | extension direction |
| T | transverse direction |

**Claims**

1. A heating device (1) for preventing or removing a deposition, in particular for de-misting, anti-misting, de-icing or anti-icing, the heating device (1) extending along an extension direction (E) and comprising:

   - at least one photothermal element (2) being configured to exhibit a photothermal effect upon an impingement of electromagnetic radiation,

      wherein the photothermal element (2) comprises or consists of a photothermal material that comprises a percolation structure, and the photothermal material is electrically conducting,
      **characterized in that**
      the percolation structure is at its percolation threshold or essentially at its percolation threshold,
      wherein the electrical resistance of the photothermal structure being at the percolation threshold or essentially at the percolation threshold drops off as a power-law.

2. The heating device (1) according to claim 1, wherein the photothermal material is optically transparent, the photothermal material preferably being optically transparent for electromagnetic radiation in the visible region of the electromagnetic spectrum, and/or
   wherein the photothermal material is configured to absorb impinging electromagnetic radiation, the photothermal material preferably being configured to absorb impinging electromagnetic radiation in the near infrared region of the electromagnetic spectrum.

3. The heating device (1) according to any one of the preceding claims, wherein the photothermal element is electrically conducting or electrically insulating, and/or
   wherein the heating device (1) furthermore comprises at least one electrical element (3) that is configured to induce electrical current into the photothermal element (2), whereby heat is generated by the photothermal element (2), the electrical element (3) preferably being an electrode.

4. The heating device (1) according to any one of the preceding claims, wherein the photothermal element (2) has a thickness in the range of 1 nanometer to 50 nanometer, preferably in the range of 1 nanometer to 10 nanometer, with respect to the extension direction (E), and/or

   wherein the heating device (1) has a thickness in the range of 1 nanometer to 100 nanometer with respect to the extension direction (E), and/or
   wherein the photothermal element (2) and/or the heating device (1) has a thickness with respect to the extension direction (E) being much smaller than a wavelength in the visible and near-infrared of the impinging electromagnetic radiation.

5. The heating device (1) according to any one of the preceding claims, wherein the heating device is bendable, and/or wherein the heating device (1) comprises a reciprocal of a curvature when bending that is larger than 1 micrometer.

6. The heating device (1) according to any one of the preceding claims, wherein the photothermal element (2) is a layer, said layer preferably extending along a transverse direction (T) running perpendicularly to the extension direction (E).

7. The heating device (1) according to any one of the preceding claims, wherein the photothermal material comprises or consists of at least one metal such as gold, silver, aluminium, copper, platinum or tungsten and/or is a metal or a metal alloy, or
   wherein the photothermal element is a semiconductor.

8. The heating device (1) according to any one of the preceding claims, further comprising at least one dielectric element (4), wherein said dielectric element (4) is arranged before or after the photothermal element (2) with respect to the extension direction (E), and

   wherein the dielectric element (4) and the photothermal element (2) are preferably at least partially in surface contact with one another, and/or
   wherein the dielectric element (4) is preferably optically transparent and/or preferably comprises or consists of at least one metal oxide or metal nitride such as titanium dioxide, silicon dioxide, tantalum pentoxide, titan nitride.

9. The heating device (1) according to any one of the preceding claims, further comprising at least one shifting element (5), wherein the shifting element (5) is configured to shift an absorption capability and/or a transmission capability of the heating device (1) with respect to the impinging electromagnetic radiation towards shorter or longer wavelengths of the impinging electromagnetic radiation, and/or
   further comprising at least one antireflection element (6) that is configured and arranged to reflect electromagnetic radiation towards the photothermal element (2).

10. The heating device (1) according to claim 9, wherein the shifting element (5) and/or the antireflection element (6) is arranged before or after the photothermal element (2) with respect to the extension direction (E), and/or
    wherein the shifting element (5) and/or the antireflection element (6) is at least one of transparent, dielectric, the shifting element (5) preferably comprises or consists of a dielectric element (4) preferably as claimed in claim 8.

11. The heating device (1) according to any one of the preceding claims, further comprising at least one carrier element (7),

    wherein the photothermal element (2) is arranged on or is at least partially embedded in said carrier element (7), and
    wherein the carrier element (7) is preferably at least one of bendable, flexible, deformable, foldable, optically transparent, and/or comprises or consists of a solid, preferably an amorphous solid such as glass, and/or one or more plastics and/or one or more polymers, preferably transparent and/or elastomeric plastics or polymers.

12. A method of producing a heating device (1) for preventing or removing a deposition, in particular for de-misting, anti-misting, de-icing or anti-icing, the heating device (1) extending along an extension direction (E) and preferably corresponds to the heating device (1) as claimed in any one of the preceding claims, wherein the method comprises the steps of:

- Providing at least one photothermal element (2) being configured to exhibit a photothermal effect upon an impingement of electromagnetic radiation,

wherein the photothermal element (2) comprises or consists of a photothermal material that comprises a percolation structure,
**characterized in that**
the percolation structure is at its percolation threshold or essentially at its percolation threshold,
that the photothermal element (2) is generated by island-growth,
that at least one electrically conducting material is directly deposited,
that separated islands of the deposited material are formed in a first step,
that said separated islands progressively grow during the further course of deposition until the percolation structure at the percolation threshold or essentially at the percolation threshold is generated, and
that the electrical resistance of the photothermal structure being at the percolation threshold or essentially at the percolation threshold drops off as a power-law.

13. The method according to claim 12, wherein the photothermal element (2) is generated by thin-film deposition and/or vapour deposition and/or chemical growth.

14. The method according to claim 12 or 13, wherein the photothermal element (2) is generated by depositing at a deposition rate in the range of 0.05 nanometer per second to 1 nanometer per second and/or during a deposition time in the range of 1 second to 150 second.

15. The method according to any one of claims 12 to 14, wherein the photothermal element (2) is directly generated on a dielectric element (4), a shifting element (5), or a carrier element (7).

**Patentansprüche**

1. Heizvorrichtung zum Verhindern oder Entfernen einer Ablagerung, insbesondere zum Entnebeln, zur Verhinderung von Beschlagen, zum Enteisen oder zur Verhinderung von Vereisen, wobei sich die Heizvorrichtung (1) entlang einer Ausdehnungsrichtung (E) erstreckt und umfasst:

- mindestens ein photothermisches Element (2), das derart ausgebildet ist, dass es beim Einfallen von elektromagnetischer Strahlung einen photothermischen Effekt aufweist,

wobei das photothermische Element (2) ein photothermisches Material, das eine Perkolationsstruktur umfasst, umfasst oder daraus besteht, und
wobei das photothermische Material elektrisch leitend ist,
**dadurch gekennzeichnet, dass** die Perkolationsstruktur an ihrer Perkolationsschwelle oder im Wesentlichen an ihrer Perkolationsschwelle liegt,
wobei der elektrische Widerstand der photothermischen Struktur, die sich an der Perkolationsschwelle oder im Wesentlichen an der Perkolationsschwelle befindet, als Potenzgesetz abfällt.

2. Heizvorrichtung (1) gemäss Anspruch 1, wobei das photothermische Material optisch transparent ist, wobei das photothermische Material vorzugsweise für elektromagnetische Strahlung im sichtbaren Bereich des elektromagnetischen Spektrums optisch transparent ist, und/oder
wobei das photothermische Material derart ausgebildet ist, dass es einfallende elektromagnetische Strahlung absorbiert, wobei das photothermische Material vorzugsweise derart ausgebildet ist, dass es einfallende elektromagnetische Strahlung im nahen Infrarotbereich des elektromagnetischen Spektrums absorbiert.

3. Heizvorrichtung (1) gemäss einem der vorhergehenden Ansprüche, wobei das photothermische Element elektrisch leitend oder elektrisch isolierend ist, und/oder
wobei die Heizvorrichtung (1) weiter mindestens ein elektrisches Element (3) umfasst, das derart ausgebildet ist, dass es elektrischen Strom in das photothermische Element (2) induziert, wodurch durch das photothermische Element (2) Wärme erzeugt wird, wobei das elektrische Element (3) vorzugsweise eine Elektrode ist.

4. Heizvorrichtung (1) gemäss einem der vorhergehenden Ansprüche, wobei das photothermische Element (2) eine Dicke im Bereich von 1 Nanometer bis 50 Nanometer, vorzugsweise im Bereich von 1 Nanometer bis 10 Nanometer, in Bezug auf die Ausdehnungsrichtung (E) aufweist, und/oder

wobei die Heizvorrichtung (1) eine Dicke im Bereich von 1 Nanometer bis 100 Nanometer in Bezug auf die Ausdehnungsrichtung (E) aufweist, und/oder
wobei das photothermische Element (2) und/oder die Heizvorrichtung (1) eine Dicke in Bezug auf die Ausdehnungsrichtung (E) aufweist, die viel kleiner ist als eine Wellenlänge im sichtbaren und nahen Infrarotbereich der einfallenden elektromagnetischen Strahlung.

5. Heizvorrichtung (1) gemäss einem der vorhergehenden Ansprüche, wobei die Heizvorrichtung biegbar ist, und/oder wobei die Heizvorrichtung (1) beim Biegen einen Kehrwert einer Krümmung aufweist, der grösser als 1 Mikrometer ist.

6. Heizvorrichtung (1) gemäss einem der vorhergehenden Ansprüche, wobei das photothermische Element (2) eine Schicht ist, wobei sich die Schicht vorzugsweise entlang einer Querrichtung (T) erstreckt, die senkrecht zur Ausdehnungsrichtung (E) verläuft.

7. Heizvorrichtung (1) gemäss einem der vorhergehenden Ansprüche, wobei das photothermische Material mindestens ein Metall wie Gold, Silber, Aluminium, Kupfer, Platin oder Wolfram umfasst oder daraus besteht und/oder ein Metall oder eine Metalllegierung ist, oder
wobei das photothermische Element ein Halbleiter ist.

8. Heizvorrichtung (1) gemäss einem der vorhergehenden Ansprüche, weiter umfassend mindestens ein dielektrisches Element (4), wobei das dielektrische Element (4) in Bezug auf die Ausdehnungsrichtung (E) vor oder nach dem photothermischen Element (2) angeordnet ist, und

wobei das dielektrische Element (4) und das photothermische Element (2) vorzugsweise zumindest teilweise in Oberflächenkontakt miteinander stehen, und/oder
wobei das dielektrische Element (4) vorzugsweise optisch transparent ist und/oder vorzugsweise mindestens ein Metalloxid oder Metallnitrid wie Titandioxid, Siliziumdioxid, Tantalpentoxid, Titannitrid umfasst oder daraus besteht.

9. Heizvorrichtung (1) gemäss einem der vorhergehenden Ansprüche, weiter umfassend mindestens ein Verschiebeelement (5), wobei das Verschiebeelement (5) derart ausgebildet ist, dass es eine Absorptionsfähigkeit und/oder eine Transmissionsfähigkeit der Heizvorrichtung (1) in Bezug auf die einfallende elektromagnetische Strahlung in Richtung kürzerer oder längerer Wellenlängen der einfallenden elektromagnetischen Strahlung verschiebt, und/oder weiter umfassend mindestens ein Antireflexionselement (6), das derart ausgebildet und angeordnet ist, dass es elektromagnetische Strahlung in Richtung des photothermischen Elements (2) reflektiert.

10. Heizvorrichtung (1) gemäss Anspruch 9, wobei das Verschiebeelement (5) und/oder das Antireflexionselement (6) in Bezug auf die Ausdehnungsrichtung (E) vor oder nach dem photothermischen Element (2) angeordnet ist, und/oder wobei das Verschiebeelement (5) und/oder das Antireflexionselement (6) mindestens eines von transparent, oder dielektrisch ist, wobei das Verschiebeelement (5) vorzugsweise ein dielektrisches Element (4) umfasst oder aus diesem besteht, vorzugsweise gemäss Anspruch 8.

11. Heizvorrichtung (1) gemäss einem der vorhergehenden Ansprüche, weiter umfassend mindestens ein Trägerelement (7),

wobei das photothermische Element (2) auf dem Trägerelement (7) angeordnet oder zumindest teilweise in dieses eingebettet ist, und
wobei das Trägerelement (7) vorzugsweise mindestens eines von biegsam, flexibel, verformbar, faltbar, optisch transparent ist und/oder ein Feststoff, vorzugsweise einen amorphen Feststoff wie Glas, und/oder einen oder mehrere Kunststoffe und/oder ein oder mehrere Polymere, vorzugsweise transparente und/oder elastomere Kunststoffe oder Polymere, umfasst oder daraus besteht.

12. Verfahren zur Herstellung einer Heizvorrichtung (1) zum Verhindern oder Entfernen einer Ablagerung, insbesondere zum Entnebeln, zur Verhinderung von Beschlagen, zum Enteisen oder zur Verhinderung von Vereisen, wobei sich die Heizvorrichtung (1) entlang einer Ausdehnungsrichtung (E) erstreckt und vorzugsweise der Heizvorrichtung (1) gemäss einem der vorhergehenden Ansprüche entspricht, wobei das Verfahren die folgenden Schritte umfasst:

- Bereitstellen mindestens eines photothermischen Elements (2), das derart ausgebildet ist, dass es beim Einfallen von elektromagnetischer Strahlung einen photothermischen Effekt aufweist,

wobei das photothermische Element (2) ein photothermisches Material, das eine Perkolationsstruktur umfasst, umfasst oder daraus besteht,
**dadurch gekennzeichnet,**
**dass** die Perkolationsstruktur an ihrer Perkolationsschwelle oder im Wesentlichen an ihrer Perkolationsschwelle liegt,

**dass** das photothermische Element (2) durch Inselwachstum erzeugt wird,
**dass** mindestens ein elektrisch leitendes Material direkt abgelagert wird,
**dass** in einem ersten Schritt getrennte Inseln des abgelagerten Materials gebildet werden,
**dass** die getrennten Inseln im weiteren Verlauf der Ablagerung progressiv wachsen, bis die Perkolationsstruktur an der Perkolationsschwelle oder im Wesentlichen an der Perkolationsschwelle erzeugt ist, und
**dass** der elektrische Widerstand der photothermischen Struktur, die sich an der Perkolationsschwelle oder im Wesentlichen an der Perkolationsschwelle befindet, als Potenzgesetz abfällt.

13. Verfahren nach Anspruch 12, wobei das photothermische Element (2) durch Dünnschichtabscheidung und/oder Dampfabscheidung und/oder chemisches Wachstum erzeugt wird.

14. Verfahren nach Anspruch 12 oder 13, wobei das photothermische Element (2) durch Abscheiden mit einer Abscheidungsrate im Bereich von 0.05 Nanometern pro Sekunde bis 1 Nanometer pro Sekunde und/oder während einer Abscheidungszeit im Bereich von 1 Sekunde bis 150 Sekunden erzeugt wird.

15. Verfahren nach einem der Ansprüche 12 bis 14, wobei das photothermische Element (2) direkt auf einem dielektrischen Element (4), einem Verschiebeelement (5) oder einem Trägerelement (7) erzeugt wird.

**Revendications**

1. Dispositif de chauffage (1) pour prévenir ou éliminer un dépôt, notamment pour le désembuage, l'anti-embuage, le dégivrage ou l'anti-givrage, le dispositif de chauffage (1) s'étendant selon une direction d'extension (E) et comprenant :

- au moins un élément photothermique (2) étant configuré pour présenter un effet photothermique lors d'un impact de rayonnement électromagnétique, dans lequel l'élément photothermique (2) comprend ou est constitué d'un matériau photothermique qui comprend une structure de percolation, et le matériau photothermique est électriquement conducteur, **caractérisé en ce que**
la structure de percolation est à son seuil de percolation ou essentiellement à son seuil de percolation, dans lequel la résistance électrique de la structure photothermique étant à son seuil de percolation ou essentiellement à son seuil de percolation diminue selon une loi de puissance.

2. Le dispositif de chauffage (1) selon la revendication 1, dans lequel le matériau photothermique est optiquement transparent, le matériau photothermique étant de préférence optiquement transparent au rayonnement électromagnétique dans la région visible du spectre électromagnétique, et/ou
dans lequel le matériau photothermique est configuré pour absorber le rayonnement électromagnétique incident, le matériau photothermique étant de préférence configuré pour absorber le rayonnement électromagnétique incident dans la région proche infrarouge du spectre électromagnétique.

3. Le dispositif de chauffage (1) selon l'une quelconque des revendications précédentes, dans lequel l'élément photothermique est électriquement conducteur ou électriquement isolant, et/ou
dans lequel le dispositif de chauffage (1) comprend en outre au moins un élément électrique (3) qui est configuré pour induire un courant électrique dans l'élément photothermique (2), de sorte que de la chaleur est générée par l'élément photothermique (2), l'élément électrique (3) étant de préférence une électrode.

4. Le dispositif de chauffage (1) selon l'une quelconque des revendications précédentes, dans lequel l'élément photothermique (2) a une épaisseur dans la plage de 1 nanomètre à 50 nanomètres, de préférence dans la plage de 1 nanomètre à 10 nanomètres, par rapport à la direction d'extension (E), et/ou

dans lequel le dispositif de chauffage (1) a une épaisseur dans la plage de 1 nanomètre à 100 nanomètres par rapport à la direction d'extension (E), et/ou dans lequel l'élément photothermique (2) et/ou le dispositif de chauffage (1) a une épaisseur par rapport à la direction d'extension (E) étant bien inférieure à une longueur d'onde dans le visible et le proche infrarouge du rayonnement électromagnétique incident.

5. Le dispositif de chauffage (1) selon l'une quelconque des revendications précédentes, dans lequel le dispositif de chauffage est pliable, et/ou
dans lequel le dispositif de chauffage (1) comprend une réciproque d'une courbure lors de la flexion qui est supérieure à 1 micromètre.

6. Le dispositif de chauffage (1) selon l'une quelconque des revendications précédentes, dans lequel l'élément photothermique (2) est une couche, ladite couche s'étendant de préférence le long d'une direction transversale (T) s'étendant perpendiculairement à la direction d'extension (E).

7. Le dispositif de chauffage (1) selon l'une quelconque des revendications précédentes, dans lequel le matériau photothermique comprend ou est constitué d'au moins un métal tel que l'or, l'argent, l'aluminium, le cuivre, le platine ou le tungstène et/ou est un métal ou un alliage métallique, ou dans lequel l'élément photothermique est un semi-conducteur.

8. Le dispositif de chauffage (1) selon l'une quelconque des revendications précédentes, comprenant en outre au moins un élément diélectrique (4), ledit élément diélectrique (4) étant disposé avant ou après l'élément photothermique (2) par rapport à la direction d'extension (E), et

l'élément diélectrique (4) et l'élément photothermique (2) étant de préférence au moins partiellement en contact de surface l'un avec l'autre, et/ou
l'élément diélectrique (4) étant de préférence optiquement transparent et/ou comprenant ou étant constitué de préférence d'au moins un oxyde métallique ou un nitrure métallique tel que le dioxyde de titane, le dioxyde de silicium, le pentoxyde de tantale, le nitrure de titane.

9. Le dispositif de chauffage (1) selon l'une quelconque des revendications précédentes, comprenant en outre au moins un élément de décalage (5), l'élément de décalage (5) étant configuré pour décaler une capacité d'absorption et/ou une capacité de transmission du dispositif de chauffage (1) par rapport au rayonnement électromagnétique incident vers des longueurs d'onde plus courtes ou plus longues du rayonnement électromagnétique incident, et/ou comprenant en outre au moins un élément antireflet (6) qui est configuré et agencé pour réfléchir le rayonnement électromagnétique vers l'élément photothermique (2).

10. Le dispositif de chauffage (1) selon la revendication 9, dans lequel l'élément de décalage (5) et/ou l'élément antireflet (6) est disposé avant ou après l'élément photothermique (2) par rapport à la direction d'extension (E), et/ou
dans lequel l'élément de décalage (5) et/ou l'élément antireflet (6) est au moins l'un parmi transparent, diélectrique, l'élément de décalage (5) comprend ou est constitué de préférence d'un élément diélectrique (4), de préférence selon la revendication 8.

11. Le dispositif de chauffage (1) selon l'une quelconque des revendications précédentes, comprenant en outre au moins un élément porteur (7),

dans lequel l'élément photothermique (2) est disposé sur ou est au moins partiellement intégré dans ledit élément porteur (7), et
dans lequel l'élément porteur (7) est de préférence au moins l'un parmi souple, flexible, déformable, pliable, optiquement transparent, et/ou comprend ou est constitué d'un solide, de préférence d'un solide amorphe tel que du verre, et/ou d'un ou plusieurs plastiques et/ou d'un ou plusieurs polymères, de préférence transparents et/ou de plastiques ou polymères élastomères.

12. Procédé de fabrication d'un dispositif de chauffage (1) destiné à prévenir ou à éliminer un dépôt, notamment pour le désembuage, l'anti-embuage, le dégivrage ou l'anti-givrage, le dispositif de chauffage (1) s'étendant selon une direction d'extension (E) et correspondant de préférence au dispositif de chauffage (1) selon l'une quelconque des revendications précédentes, dans lequel le procédé comprend les étapes consistant à :

- fournir au moins un élément photothermique (2) configuré pour présenter un effet photothermique lors d'un impact de rayonnement électromagnétique, dans lequel l'élément photothermique (2) comprend ou est constitué d'un matériau photothermique qui comprend une structure de percolation, **caractérisé en ce que** la structure de percolation est à son seuil de percolation ou essentiellement à son seuil de percolation,

dans lequel l'élément photothermique (2) est généré par croissance en îlot,
dans lequel au moins un matériau électriquement conducteur est directement déposé, dans lequel des îlots séparés en matériau déposé sont formés dans une première étape, dans lequel lesdits îlots séparés croissent de manière progressive durant la suite du dépôt jusqu'à ce que la structure de percolation à son seuil de percolation ou essentiellement à son seuil de percolation est générée, et
dans lequel la résistance électrique de la structure photothermique étant à son seuil de percolation ou essentiellement à son seuil de percolation diminue selon une loi de puissance.

13. Le procédé selon la revendication 12, dans lequel l'élément photothermique (2) est généré par dépôt de couche mince et/ou dépôt en phase vapeur, et/ou par croissance chimique.

14. Le procédé selon la revendication 12 ou 13, dans lequel l'élément photothermique (2) est généré par dépôt à une vitesse de dépôt dans la plage de 0,05 nanomètre par seconde à 1 nanomètre par seconde et/ou pendant un temps de dépôt dans la plage de 1 seconde à 150 secondes.

15. Le procédé selon l'une quelconque des revendications 12 à 14, dans lequel l'élément photothermique (2) est généré directement sur un élément diélectrique (4), un élément de décalage (5) ou un élément porteur (7).

**FIG. 1A**

**FIG. 1B**

FIG. 1C

FIG. 1D

SU8200 1.0kV x70.0k SE(U)    500nm

FIG. 2

FIG. 3A

EP 4 494 423 B1

## Reflectivity

**FIG. 3B**

FIG. 3C

FIG. 4

A

**FIG.5A**

FIG. 5B

FIG. 5C

**A**

FIG. 6A

**B**

FIG. 6B

FIG. 6C

FIG. 7

FIG. 8

FIG. 9

FIG. 10

FIG. 11

FIG. 12

FIG. 13

FIG. 14A

FIG. 14B

FIG. 14C

A  $I_0 \approx 491$ W m$^{-2}$

B  $I_0 \approx 339$ W m$^{-2}$

C  $I_0 \approx 212$ W m$^{-2}$

FIG. 15

**A**

**B**

**FIG. 16**

FIG. 17

FIG. 18

FIG. 18c

FIG. 19

FIG. 20a

FIG. 20b

**FIG. 21**

FIG. 22

FIG. 23

**FIG. 24a**

**FIG. 24b**

FIG. 25a

FIG. 25b

FIG. 26

**FIG. 27**

FIG. 27

FIG. 27

FIG. 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 112004274 A

### Non-patent literature cited in the description

- **YOON, J. et al.** Wet-Style Superhydrophobic Antifogging Coatings for Optical Sensors. *Advanced materials (Deerfield Beach, Fla.)*, 2020, vol. 32, e2002710
- **HOWARTER, J. A.** ; **YOUNGBLOOD, J. P.** Self-Cleaning and Next Generation Anti-Fog Surfaces and Coatings. *Macromol. Rapid Commun.*, 2008, vol. 29, 455-466
- **DURÁN, I. R.** ; **LAROCHE, G.** Current trends, challenges, and perspectives of anti-fogging technology: Surface and material design, fabrication strategies, and beyond. *Progress in Materials Science*, 2019, vol. 99, 106-186
- **LEACH, R. N.** ; **STEVENS, F.** ; **LANGFORD, S. C.** ; **DICKINSON, J. T.** Dropwise condensation: experiments and simulations of nucleation and growth of water drops in a cooling system. *Langmuir: the ACS journal of surfaces and colloids*, 2006, vol. 22, 8864-8872
- **SUN, X.** ; **HONG, R.** ; **HOU, H.** ; **FAN, Z.** ; **SHAO, J.** Thickness dependence of structure and optical properties of silver films deposited by magnetron sputtering. *Thin Solid Films*, 2007, vol. 515, 6962-6966
- **LIN, S. et al.** Stretchable Anti-Fogging Tapes for Diverse Transparent Materials. *Adv. Funct. Mater.*, 2021, vol. 31, 2103551
- **CEBECI, F. C.** ; **WU, Z.** ; **ZHAI, L.** ; **COHEN, R. E.** ; **RUBNER, M. F.** Nanoporosity-driven superhydrophilicity: a means to create multifunctional antifogging coatings. *Langmuir : the ACS journal of surfaces and colloids*, 2006, vol. 22, 2856-2862
- **TZIANOU, M.** ; **THOMOPOULOS, G.** ; **VOURDAS, N.** ; **ELLINAS, K.** ; **GOGOLIDES, E.** Tailoring Wetting Properties at Extremes States to Obtain Antifogging Functionality. *Adv. Funct. Mater.*, 2021, vol. 31, 2006687
- **NURAJE, N.** ; **ASMATULU, R.** ; **COHEN, R. E.** ; **RUBNER, M. F.** Durable antifog films from layer-by-layer molecularly blended hydrophilic polysaccharides. *Langmuir : the ACS journal of surfaces and colloids*, 2011, vol. 27, 782-791

- **WALKER, C. et al.** Transparent Metasurfaces Counteracting Fogging by Harnessing Sunlight. *Nano letters*, 2019, vol. 19, 1595-1604
- **MOUTERDE, T. et al.** Antifogging abilities of model nanotextures. *Nature materials*, 2017, vol. 16, 658-663
- **CHEN, Y. et al.** Transparent superhydrophobic/superhydrophilic coatings for self-cleaning and antifogging. *Appl. Phys. Lett.*, 2012, vol. 101, 33701
- **LIU, M.** ; **WANG, S.** ; **JIANG, L.** Nature-inspired superwettability systems. *Nat Rev Mater*, 2017, vol. 2
- **VERHO, T. et al.** Mechanically durable superhydrophobic surfaces. *Advanced materials (Deerfield Beach, Fla.)*, 2011, vol. 23, 673-678
- **FAUSTINI, M. et al.** Hydrophobic, Antireflective, Self-Cleaning, and Antifogging Sol-Gel Coatings: An Example of Multifunctional Nanostructured Materials for Photovoltaic Cells. *Chem. Mater.*, 2010, vol. 22, 4406-4413
- **MITRIDIS, E.** ; **LAMBLEY, H.** ; **TRÖBER, S.** ; **SCHUTZIUS, T. M.** ; **POULIKAKOS, D.** Transparent Photothermal Metasurfaces Amplifying Superhydrophobicity by Absorbing Sunlight. *ACS nano*, 2020, vol. 14, 11712-11721
- **CASSIE, A. B. D.** ; **BAXTER, S.** Wettability of porous surfaces. *Trans. Faraday Soc.*, 1944, vol. 40, 546
- **WENZEL, R. N.** RESISTANCE OF SOLID SURFACES TO WETTING BY WATER. *Ind. Eng. Chem.*, 1936, vol. 28, 988-994
- **PAPADOPOULOS, P.** ; **MAMMEN, L.** ; **DENG, X.** ; **VOLLMER, D.** ; **BUTT, H.-J.** How superhydrophobicity breaks down. *Proceedings of the National Academy of Sciences of the United States of America*, 2013, vol. 110, 3254-3258
- **XUE, C.-H. et al.** Fabrication of superhydrophobic photothermal conversion fabric via layer-by-layer assembly of carbon nanotubes. *Cellulose*, 2021, vol. 28, 5107-5121
- **LIU, Y. et al.** Robust Photothermal Coating Strategy for Efficient Ice Removal. *ACS applied materials & interfaces*, 2020, vol. 12, 46981-46990

- **MITRIDIS, E. et al.** Metasurfaces Leveraging Solar Energy for Icephobicity. *ACS nano*, 2018, vol. 12, 7009-7017
- **LI, W. et al.** Transparent selective photothermal coatings for antifogging applications. *Cell Reports Physical Science*, 2021, vol. 2, 100435
- **YIN, X. et al.** Integration of Self-Lubrication and Near-Infrared Photothermogenesis for Excellent Anti-Icing/Deicing Performance. *Adv. Funct. Mater.*, 2015, vol. 25, 4237-4245
- **NEO, W. T.** ; **CHO, C. M.** ; **SHI, Z.** ; **CHUA, S.-J.** ; **XU, J.** Modulating high-energy visible light absorption to attain neutral-state black electrochromic polymers. *J. Mater. Chem. C*, 2016, vol. 4, 28-32
- **OKTEM, G.** ; **BALAN, A.** ; **BARAN, D.** ; **TOPPARE, L.** Donor-acceptor type random copolymers for full visible light absorption. *Chemical communications (Cambridge, England)*, 2011, vol. 47, 3933-3935
- **WU, D.** ; **CHEN, J.** Broadening Bandwidths of Few-Layer Absorbers by Superimposing Two High-Loss Resonators. *Nanoscale research letters*, 2021, vol. 16, 26
- **GAO, H. et al.** Plasmonic Broadband Perfect Absorber for Visible Light Solar Cells Application. *Plasmonics*, 2020, vol. 15, 573-580
- **CAO, T.** ; **WEI, C.** ; **SIMPSON, R. E.** ; **ZHANG, L.** ; **CRYAN, M. J.** Broadband polarization-independent perfect absorber using a phase-change metamaterial at visible frequencies. *Scientific reports*, 2014, vol. 4, 3955
- **KIANI, F. et al.** Ultra-Broadband and Omnidirectional Perfect Absorber Based on Copper Nanowire/Carbon Nanotube Hierarchical Structure. *ACS Photonics*, 2020, vol. 7, 366-374
- **WU, S. et al.** Superhydrophobic photothermal icephobic surfaces based on candle soot. *Proceedings of the National Academy of Sciences of the United States of America*, 2020
- **ZHANG, H. et al.** Solar anti-icing surface with enhanced condensate self-removing at extreme environmental conditions. *Proceedings of the National Academy of Sciences of the United States of America*, 2021, vol. 118
- **HAN, M.** ; **KIM, B.** ; **LIM, H.** ; **JANG, H.** ; **KIM, E.** Transparent Photothermal Heaters from a Soluble NIR-Absorbing Diimmonium Salt. *Advanced materials (Deerfield Beach, Fla.)*, 2020, vol. 32, e1905096
- **LIU, N.** ; **MESCH, M.** ; **WEISS, T.** ; **HENTSCHEL, M.** ; **GIESSEN, H.** Infrared perfect absorber and its application as plasmonic sensor. *Nano letters*, 2010, vol. 10, 2342-2348
- **FAN, X.** ; **DING, Y.** ; **LIU, Y.** ; **LIANG, J.** ; **CHEN, Y.** Plasmonic Ti3C2Tx MXene Enables Highly Efficient Photothermal Conversion for Healable and Transparent Wearable Device. *ACS nano*, 2019, vol. 13, 8124-8134
- **GASPAR, D. et al.** Influence of the layer thickness in plasmonic gold nanoparticles produced by thermal evaporation. *Scientific reports*, 2013, vol. 3, 1469
- **RUFFINO, F.** ; **TORRISI, V.** ; **MARLETTA, G.** ; **GRIMALDI, M. G.** Kinetic growth mechanisms of sputter-deposited Au films on mica: from nanoclusters to nanostructured microclusters. *Appl. Phys. A*, 2010, vol. 100, 7-13
- **LASSESSON, A.** ; **BROWN, S. A.** ; **VAN LITH, J.** ; **SCHULZE, M.** Electrical characterization of gold island films: A route to control of nanoparticle deposition. *Appl. Phys. Lett.*, 2008, vol. 93, 203111
- **JEFFERS, G.** ; **DUBSON, M. A.** ; **DUXBURY, P. M.** Island-to-percolation transition during growth of metal films. *Journal of Applied Physics*, 1994, vol. 75, 5016-5020
- **FLETCHER, N. H.** The Chemical Physics of Ice. Cambridge University Press, 2010
- **FLETCHER, N. H.** The Physics of Rainclouds. Cambridge University Press, 1962
- **NA, B.** ; **WEBB, R. L.** A fundamental understanding of factors affecting frost nucleation. *International Journal of Heat and Mass Transfer*, 2003, vol. 46, 3797-3808
- **ATTINGER, D. et al.** Surface engineering for phase change heat transfer: A review. *MRS Energy & Sustainability*, 2014, vol. 1
- **QI, H. et al.** Bioinspired Multifunctional Protein Coating for Antifogging, Self-Cleaning, and Antimicrobial Properties. *ACS applied materials & interfaces*, 2019, vol. 11, 24504-24511
- **ZHAO, J.** ; **MEYER, A.** ; **MA, L.** ; **WANG, X.** ; **MING, W.** Terpolymer-based SIPN coating with excellent anti-fogging and frost-resisting properties. *RSC Adv.*, 2015, vol. 5, 102560-102566
- **EZZAT, M.** ; **HUANG, C.-J.** Zwitterionic polymer brush coatings with excellent anti-fog and anti-frost properties. *RSC Adv.*, 2016, vol. 6, 61695-61702
- **ZHOU, L. et al.** Self-assembly of highly efficient, broadband plasmonic absorbers for solar steam generation. *Science advances*, 2016, vol. 2, e1501227
- **WEN, F. et al.** Charge Transfer Plasmons: Optical Frequency Conductances and Tunable Infrared Resonances. *ACS nano*, 2015, vol. 9, 6428-6435
- **SOBHANI, A. et al.** Narrowband photodetection in the near-infrared with a plasmon-induced hot electron device. *Nature communications*, 2013, vol. 4, 1643
- **HALAS, N.** Playing with Plasmons: Tuning the Optical Resonant Properties of Metallic Nanoshells. *MRS Bull.*, 2005, vol. 30, 362-367

- **SABERI, A. A.** Recent advances in percolation theory and its applications. *Physics Reports*, 2015, vol. 578, 1-32
- **BROUERS** ; **CLERC** ; **GIRAUD** ; **LAUGIER** ; **RANDRIAMANTANY**. Dielectric and optical properties close to the percolation threshold. II. *Physical review. B, Condensed matter*, 1993, vol. 47, 666-673
- **BOHREN, C. F.** ; **HUFFMAN, D. R.** Absorption and scattering of light by small particles. Wiley, 1993
- **KOLWAS, K.** ; **DERKACHOVA, A.** Impact of the Interband Transitions in Gold and Silver on the Dynamics of Propagating and Localized Surface Plasmons. *Nanomaterials (Basel, Switzerland)*, 2020, vol. 10
- **P. B. JOHNSON** ; **R. W. CHRISTY**. *Optical Constants of the Noble Metals*
- **MORAN, M. J.** Fundamentals of engineering thermodynamics. Wiley, 2014
- **BUCK, A. L.** New Equations for Computing Vapor Pressure and Enhancement Factor. *J. Appl. Meteor.*, 1981, vol. 20, 1527-1532